# EUROPEAN PATENT APPLICATION

(11) **EP 4 641 741 A1**
(43) Date of publication of application: **29.10.2025**
(21) Application number: 23925682.9
(22) Date of filing: 03.03.2023
(51) Int. Cl.: H01M 10/058, H01M 10/04

(54) **BATTERY CELL, BATTERY AND ELECTRICAL APPARATUS**

(71) Applicant: Contemporary Amperex Technology (Hong Kong) Limited, Hong Kong (HK)
(72) Inventor: LIN, Wenfa, Ningde, Fujian 352100 (CN); YU, Mingxi, Ningde, Fujian 352100 (CN); ZHANG, Shengwu, Ningde, Fujian 352100 (CN); TANG, Minghao, Ningde, Fujian 352100 (CN)
(74) Representative: Gong, Jinping
(86) International application number: PCT/CN2023/079689
(87) International publication number: WO 2024/182956

(57) **Abstract**

A battery cell, a battery and an electrical apparatus, belonging to the technical field of batteries. The battery cell comprises: terminals and a battery core assembly; the battery core assembly comprises active substance coated parts and a plurality of tab pieces extending from the active substance coated parts in a first direction; the ends of the plurality of tab pieces close to an active substance coated part close up to form a first closing-up part, and the ends of the plurality of tab pieces away from the active substance coated part close up and connect to each other to form a second closing-up part, the first closing-up part being connected to the second closing-up part and the active substance coated part, and the orthographic projection of the end of the second closing-up part connected to the first closing-up part on a terminal in the first direction being at least partially located in the outer contour range of the terminal. The battery cell helps to shorten lengths of conductive parts, improving the reliability of the battery cell.

## Description

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, batteries, as the power source of electric vehicles, play an irreplaceable and important role. Typically, a battery includes a plurality of battery cells. However, the reliability of current battery cells needs to be improved.

### SUMMARY

Embodiments of the present application provide a battery cell, a battery, and an electric device, which are conducive to improving the reliability of the battery cell.

In a first aspect, the embodiments of the present application provide a battery cell. The battery cell includes: a housing assembly and a battery cell assembly. The housing assembly includes a housing and a post terminal arranged on the housing. The battery cell assembly includes an active substance-coated part and a conductive part, the conductive part electrically connects the active substance-coated part to the post terminal, the conductive part includes a plurality of tab plates extending from the active substance-coated part in a first direction, ends of the plurality of tab plates proximal to the active substance-coated part gather to form a first gathering part, ends of the plurality of tab plates distal to the active substance-coated part gather and are connected to form a second gathering part, the first gathering part connects the second gathering part to the active substance-coated part, and an orthographic projection of an end part of the second gathering part connected to the first gathering part on the post terminal in the first direction is at least partially located within a range of an outer contour of the post terminal.

In the above technical solution, the ends of the plurality of tab plates distal to the active substance-coated part gather and are connected to form the second gathering part, and the orthographic projection of the end part of the second gathering part connected to the first gathering part on the post terminal in the first direction is at least partially arranged within the range of the outer contour of the post terminal. In one aspect, it is conducive to reducing the length of the second gathering part in a direction perpendicular to the first direction, such that the second gathering part can at least partially fall within the range of the outer contour of the post terminal after extending from the end part, thereby facilitating the electrical connection between the conductive part and the post terminal. In another aspect, such an arrangement is conducive to reducing the overall length of the conductive part, which can not only reduce the cost of the conductive part, but also mitigate the inverted insertion problem caused by the redundancy of the conductive part, thereby improving the reliability of the battery cell. In addition, with such an arrangement, the space occupied by the conductive part and the post terminal in the direction perpendicular to the first direction can be concentrated, such that the overall space occupied by the conductive part and the post terminal is small, so as to release the remaining space of the battery cell in the direction perpendicular to the first direction for arranging other structures, such as an insulating structure which may be arranged to further improve the reliability of the battery cell, or for containing more electrolyte to ensure the cycle life of the battery cell.

In some embodiments, the orthographic projection of the end part of the second gathering part connected to the first gathering part on the post terminal in the first direction is completely located within the range of the outer contour of the post terminal.

In the above technical solution, the orthographic projection of the end part of the second gathering part connected to the first gathering part on the post terminal in the first direction is completely arranged within the range of the outer contour of the post terminal, which is conducive to shortening the distance of the conductive part from the end part to the post terminal in the direction perpendicular to the first direction, so as to further reduce the length of the conductive part, further reduce the redundancy and cost of the conductive part, and help further improve the reliability of the battery cell.

In some embodiments, an orthographic projection of the second gathering part on the post terminal in the first direction is completely located within the range of the outer contour of the post terminal.

In the above technical solution, the orthographic projection of the second gathering part on the post terminal in the first direction is completely arranged within the range of the outer contour of the post terminal, which is conducive to shortening the distance of the conductive part from the second gathering part to the post terminal in the direction perpendicular to the first direction, so as to further reduce the length of the conductive part, further reduce the redundancy and cost of the conductive part, and help further improve the reliability of the battery cell.

In some embodiments, an orthographic projection of the first gathering part on the post terminal in the first direction is at least partially located within the range of the outer contour of the post terminal.

In the above technical solution, the orthographic projection of the first gathering part on the post terminal in the first direction is at least partially arranged within the range of the outer contour of the post terminal, which is conducive to shortening the distance from the first gathering part to the post terminal in the direction perpendicular to the first direction, so as to further reduce the length of the conductive part, further reduce the redundancy and cost of the conductive part, and help further improve the reliability of the battery cell.

In some embodiments, there are a plurality of conductive parts, and the orthographic projection of the end part of the second gathering part of each of the conductive parts connected to the first gathering part on the post terminal in the first direction is at least partially located within the range of the outer contour of the post terminal.

In the above technical solution, the orthographic projection of the end part of the second gathering part of each of the conductive parts connected to the first gathering part on the post terminal in the first direction is at least partially arranged within the range of the outer contour of the post terminal, such that the distance from the end part of each conductive part to the post terminal can be shortened more fully and effectively, thereby reducing the redundancy and cost of the conductive part more fully, which is conducive to further improving the reliability of the battery cell.

In some embodiments, the orthographic projection of the end part of the second gathering part connected to the first gathering part on the post terminal in the first direction is eccentrically arranged relative to the post terminal.

In the above technical solution, the orthographic projection of the end part of the second gathering part connected to the first gathering part on the post terminal in the first direction is eccentrically arranged relative to the post terminal, which can increase the area of a part of the post terminal for electrical connection to the conductive part, so as to increase the electrical connection area between the post terminal and the conductive part, thereby improving the current passage capacity of the electrical connection, which is conducive to improving the charging efficiency.

In some embodiments, the conductive part further includes an adapting piece, the adapting piece is configured to connect the second gathering part to the post terminal, and an orthographic projection of the adapting piece on the post terminal in the first direction is at least partially located within the range of the outer contour of the post terminal.

In the above technical solution, when an orthographic projection is made onto a projection plane perpendicular to the first direction, at least a part of the orthographic projection of the adapting piece in the projection plane is located within the range delineated by the orthographic projection contour of the post terminal in the projection plane, thereby reducing the length of the adapting piece, reducing the cost and redundancy of the adapting piece, and reducing the space occupied by the adapting piece in the housing. In addition, by using the adapting piece to achieve an indirect electrical connection between the second gathering part and the post terminal, the adapting piece can be welded to the post terminal at a part avoiding the second gathering part, such that the welding between the adapting piece and the post terminal is secure, welding cracking is less likely to occur, and the reliability and stability of the battery cell can be further improved. Meanwhile, by electrically connecting the post terminal and the tab plates via the adapting piece, the configuration of the tab plates can also be simplified.

In some embodiments, the post terminal is provided with an accommodating part, and at least a part of the conductive part is accommodated in the accommodating part.

In the above technical solution, in one aspect, as the accommodating part is provided on at least one post terminal, when the accommodating part is located on a side of the post terminal away from the active substance-coated part, a part of the conductive part located in the accommodating part can be welded to the post terminal through the accommodating part from the outside of the housing. When the accommodating part is located on a side of the post terminal facing the active substance-coated part, the local wall thickness at a part of the post terminal corresponding to the accommodating part is reduced, such that a part of the conductive part accommodated in the accommodating part can be welded to the post terminal at the thinned part from the outside of the ho using Therefore, even if the length of a part of the conductive part located in the housing is small, as the conductive part and the post terminal can be welded from the outside of the housing, the welding of the conductive part and the post terminal is convenient and the welding reliability of the conductive part and the post terminal can be improved. In another aspect, the arrangement of the accommodating part in the post terminal can reduce the weight of the post terminal to a certain extent, thereby improving the gravimetric energy density of the battery cell and the battery. In yet another aspect, with at least a part of the conductive part being accommodated in the accommodating part to occupy the space in the post terminal, the space occupied by the conductive part in the housing can be reduced, and in a case of given dimensions of the housing, some space can be saved in the housing to accommodate a larger active substance-coated part, thereby improving the volumetric energy density of the battery cell. In addition, the accommodation of at least a part of the conductive part in the accommodating part can reduce the space occupied by the battery cell, so as to accommodate a greater number of battery cells in a battery of a given volume and improve the volumetric energy density of the battery. Moreover, the accommodation of at least a part of the conductive part in the accommodating part can reduce the redundancy of the conductive part in the housing to a certain extent, reduce the probability of short circuit between the conductive part and the active substance-coated part, and reduce the probability of short circuit of the electrode assembly, thus further improving the working reliability and stability of the battery cell and the battery.

In some embodiments, at least a part of the second gathering part is accommodated in the accommodating part; and/or the conductive part further includes an adapting piece, the adapting piece is configured to connect the second gathering part to the post terminal, and at least a part of the adapting piece is accommodated in the accommodating part.

In the above technical solution, in one aspect, the accommodation of at least a part of the second gathering part in the accommodating part can facilitate the connection between the conductive part and the post terminal, fully utilize the space of the post terminal, and improve the volumetric energy density of the battery cell. In another aspect, the accommodation of at least a part of the adapting piece in the accommodating part can fully utilize the space in the post terminal, and reduce the space occupied by the conductive part in the housing, so as to improve the volumetric energy density of the battery cell. In addition, by using the adapting piece to achieve an indirect electrical connection between the second gathering part and the post terminal, the adapting piece can be welded to the post terminal at a part avoiding the second gathering part, such that the welding between the adapting piece and the post terminal is secure, welding cracking is less likely to occur, and the reliability and stability of the battery cell can be further improved. Meanwhile, by electrically connecting the post terminal and the tab plates via the adapting piece, the configuration of the tab plates can also be simplified.

In some embodiments, at least a part of the first gathering part is accommodated in the accommodating part.

In the above technical solution, at least a part of the first gathering part is accommodated in the accommodating part, such that the space in the post terminal can be more fully utilized, the space occupied by the tab plates in the housing can be further reduced, and the volumetric energy density of the battery cell can be improved.

In some embodiments, the accommodating part is provided with a first accommodating groove, a surface of the post terminal on a side facing the active substance-coated part is a post terminal inner end surface, an opening of the first accommodating groove is formed on the post terminal inner end surface, and at least a part of the conductive part is accommodated in the first accommodating groove.

In the above technical solution, in one aspect, the provision of the first accommodating groove on the post terminal can reduce the weight of the post terminal to a certain extent, so as to improve the gravimetric energy density of the battery cell and the battery. In another aspect, as the opening of the first accommodating groove is formed on the post terminal inner end surface and the post terminal inner end surface is the surface of the post terminal on a side proximal to the active substance-coated part, the first accommodating groove can be open in a direction toward the active substance-coated part, thereby facilitating the conductive part to extend into the first accommodating groove and improving the assembly efficiency. In addition, as the first accommodating groove faces toward the active substance-coated part, the first accommodating groove can also serve as a buffering and temporary storage structure for the electrolyte, such that more electrolyte can be accommodated in the housing. As the electrolyte will be consumed during the charging and discharging processes of the battery cell, a greater amount of electrolyte can prolong the service life of the battery cell. It is also due to the fact that the first accommodating groove faces toward the active substance-coated part, that the first accommodating groove can serve as an accommodating and buffering structure for gases produced in the electrode assembly, reducing the expansion of the battery cell and improving the reliability and stability of the battery cell. Moreover, as the first accommodating groove is located on the inner side of the post terminal, external foreign matters and impurities can hardly enter the first accommodating groove, thereby reducing the impact of external foreign matters and magazines on the electrode assembly, ensuring the working stability and reliability of the electrode assembly, and further improving the stability and reliability of the battery cell and the battery.

In some embodiments, the housing is provided with a mounting hole, and the post terminal is mounted in the mounting hole; in the first direction, a depth of the first accommodating groove is greater than or equal to a minimum distance from the post terminal inner end surface to the mounting hole.

In the above technical solution, as the depth of the first accommodating groove in the first direction is greater than or equal to the minimum distance from the post terminal inner end surface to the mounting hole, the volume of the post terminal can be fully utilized, such that the first accommodating groove has a large depth, which is conducive to accommodating more conductive parts, thereby reducing the space occupied by the conductive parts in the housing to a greater extent, further improving the energy density of the battery cell, and further reducing the redundancy of the conductive parts in the housing. Meanwhile, due to the large depth, the first accommodating groove can accommodate the gases produced by the electrode assembly to ensure the reliability and stability of the battery cell, and can also accommodate more electrolyte to ensure the service life of the battery cell.

In some embodiments, the post terminal includes a first end wall and a first side wall, the first end wall is located on a side of the first side wall distal to the active substance-coated part, the first end wall and the first side wall define, in an enclosing manner, the first accommodating groove, and an electrical connection position of the conductive part and the post terminal is located on the first end wall and/or the first side wall.

In the above technical solution, arranging the electrical connection position of the conductive part and the post terminal on at least one of the first end wall and the first side wall will provide the first accommodating groove with the functionality of accommodating at least a part of the conductive part as well as the functionality of achieving the electrical connection to the conductive part, thereby simplifying the structure of the post terminal, facilitating the processing of the post terminal, simplifying the structure of the conductive part, reducing the redundancy of the conductive part, and reducing the cost of the conductive part. Moreover, utilizing the groove wall of the first accommodating groove to achieve the electrical connection to the conductive part can allow a greater area of the electrical connection between the conductive part and the post terminal, which not only reduces the difficulty of electrical connection but also improves the reliability and stability of the electrical connection, thereby improving the performance of the battery cell.

In some embodiments, the first end wall is provided with a first recess, and an electrical connection position of the conductive part and the first end wall is at least partially located in the first recess.

In the above technical solution, in one aspect, arranging the first recess on the first end wall can achieve the pre-positioning of the conductive part via the first recess, which is conducive to accurately finding the position to achieve the electrical connection and improve the production efficiency. In another aspect, by providing the first recess on the first end wall, the wall thickness of the part of the first end wall can be locally reduced, which is not only conducive to welding of the electrical connection, but also conducive to reducing the weight of the post terminal and improving the gravimetric energy density of the battery cell.

In some embodiments, the post terminal is provided with a first groove, a surface of the post terminal on a side distal to the active substance-coated part is a post terminal outer end surface, and an opening of the first groove is formed on the post terminal outer end surface.

In the above technical solution, in one aspect, arranging the first groove on the post terminal can further reduce the weight of the post terminal, such that the gravimetric energy density of the battery cell and the battery can be improved. In another aspect, the first groove is located on the outer side of the post terminal, which allows the accommodation or mounting of structural components electrically connecting various battery cells of the battery in the first groove, so as to make full use of the space in the post terminal, thereby improving the space utilization and volumetric energy density of the battery. In addition, since the post terminal is provided with both the first accommodating groove and the first groove, the first groove is located on a side of the first accommodating groove distal to the active substance-coated part, and the first groove is open in a direction away from the first accommodating groove, it is conducive to electrically connecting the conductive part to the groove wall of the first accommodating groove through the first groove from the outside of the post terminal. For example, it is conducive to externally welding the post terminal to the conductive part through the first groove, which facilitates the processing and manufacture of the battery cell and can save processing and manufacturing costs.

In some embodiments, the housing assembly further includes a groove cover, and the groove cover is arranged on the post terminal and closes the opening of the first groove.

In the above technical solution, arranging the groove cover can facilitate the electrical connection between adjacent battery cells in the battery, and since the electrical connection position of the battery cells is separated from the electrical connection position of the conductive part with the post terminal by the first groove, there is less interference between the two, which can further improve the stability and reliability of the battery cell. Meanwhile, the groove cover can also prevent foreign matters from entering the first groove, thereby reducing the interference of foreign matters with the battery cell assembly and further improving the reliability and stability of the battery cell.

In some embodiments, at least a part of the second gathering part is accommodated in the first accommodating groove.

In the above technical solution, since the tab part includes the second gathering part formed by the convergence and connection of a plurality of tab plates, at least a part of the second gathering part is accommodated in the first accommodating groove, which facilitates the connection between the conductive part and the post terminal and can fully utilize the space of the post terminal, thereby improving the volumetric energy density of the battery cell.

In some embodiments, at least a part of the first gathering part is accommodated in the first accommodating groove.

In the above technical solution, at least a part of the first gathering part and at least a part of the second gathering part of the tab part are both accommodated in the first accommodating groove, such that the space in the post terminal can be more fully utilized, the space occupied by the tab part in the housing can be further reduced, and the volumetric energy density of the battery cell can be improved.

In some embodiments, the conductive part further includes an adapting piece, the adapting piece is configured to connect the second gathering part to the post terminal, and at least a part of the adapting piece is accommodated in the first accommodating groove.

In the above technical solution, in one aspect, by using the adapting piece to achieve an indirect electrical connection between the second gathering part and the post terminal, the adapting piece can be welded to the post terminal at a part avoiding the second gathering part, such that the welding between the adapting piece and the post terminal is firm, welding cracking is less likely to occur, and the reliability and stability of the battery cell can be further improved. Meanwhile, by electrically connecting the post terminal to the tab part through the adapting piece, the configuration of the tab part can also be simplified. In another aspect, as at least a part of the adapting piece is accommodated in the first accommodating groove, the adapting piece can occupy the space in the post terminal, such that the space occupied by the adapting piece in the housing can be reduced, so as to accommodate a larger active substance-coated part, thereby improving the volumetric energy density of the battery cell. Moreover, the probability of short circuit between the adapting piece and the active substance-coated part can be reduced, and the risk of short circuit of the electrode assembly can be reduced, thereby improving the stability and reliability of the battery cell.

In some embodiments, the accommodating part is provided with a second accommodating groove, a surface of the post terminal on a side distal to the active substance-coated part is a post terminal outer end surface, an opening of the second accommodating groove is formed on the post terminal outer end surface, the second accommodating groove is in communication with an interior of the housing through a first perforation, and the conductive part is provided in the first perforation in a penetrating manner and is at least partially accommodated in the second accommodating groove.

In the above technical solution, in one aspect, the arrangement of the second accommodating groove on the post terminal can reduce the weight of the post terminal to a certain extent, so as to improve the gravimetric energy density of the battery cell and the battery. In another aspect, since the opening of the second accommodating groove is formed on the post terminal outer end surface, and the post terminal outer end surface is the surface of the post terminal on a side distal to the active substance-coated part, the second accommodating groove can be open in a direction away from the active substance-coated part. In this way, when at least a part of the conductive part is accommodated in the second accommodating groove, the accommodation and arrangement of the conductive part or operations on the electrical connection between the conductive part and the post terminal can be easily achieved through the opening of the second accommodating groove, thereby reducing the difficulty in producing the battery cell and improving the production efficiency of the battery cell. In addition, since the second accommodating groove is in communication with the housing through the first perforation, the second accommodating groove can also serve as a buffering and temporary storage structure for the electrolyte, such that more electrolyte can be accommodated in the housing. As the electrolyte will be consumed during the charging and discharging of the battery cell, a greater amount of electrolyte can prolong the service life of the battery cell. It is also due to the fact that the second accommodating groove is in communication with the housing through the first perforation, that the second accommodating groove can also serve as an accommodating and buffering structure for gases produced in the electrode assembly, reducing the expansion of the battery cell and improving the reliability and stability of the battery cell.

In some embodiments, an electrical connection position of the conductive part and the post terminal is located on a wall of the first perforation formed on the post terminal.

In the above technical solution, when the electrical connection position of the conductive part and the post terminal is arranged on the wall of the first perforation, the electrical connection operation between the conductive part and the post terminal may be performed through the second accommodating groove. Meanwhile, the electrical connection position of the conductive part and the post terminal can achieve the sealing of the first perforation to save sealing costs and reduce electrolyte leakage.

In some embodiments, the post terminal includes a second end wall and a second side wall, the second end wall is located on a side of the second side wall proximal to the active substance-coated part, the second end wall and the second side wall define, in an enclosing manner, the second accommodating groove, the first perforation is formed on the second end wall, and an electrical connection position of the conductive part and the post terminal is located on the second end wall and/or the second side wall.

In the above technical solution, by arranging the electrical connection position of the conductive part and the post terminal on at least one of the second end wall and the second side wall, not only does the second accommodating groove have a function of accommodating at least a part of the conductive part, but also the groove wall of the second accommodating groove has a function of achieving an electrical connection to the conductive part, which can simplify the structure of the post terminal and facilitate processing of the post terminal. In addition, since the first perforation is formed on the second end wall, the conductive part can easily extend into the second accommodating groove through the first perforation, thereby simplifying the structure of the conductive part, reducing the redundancy of the conductive part, and lowering the cost of the conductive part. Furthermore, the opening direction of the opening of the second accommodating groove enables the electrical connection operation on the conductive part and the groove wall of the second accommodating groove to be easily performed through the opening of the second accommodating groove, thereby reducing the difficulty of electrical connection. Furthermore, by utilizing the groove wall of the second accommodating groove to achieve electrical connection to the conductive part, the electrical connection region of the conductive part and the post terminal may be relatively large, thereby improving the reliability and stability of the electrical connection, and further improving the performance of the battery cell.

In some embodiments, the second end wall is provided with a second recess, and an electrical connection position of the conductive part and the second end wall is at least partially located in the second recess.

In the above technical solution, providing the second end wall with the second recess can achieve the pre-positioning of the conductive part via the second recess, which is conducive to accurately finding the position to achieve the electrical connection and improve manufacturing efficiency.

In some embodiments, the housing is provided with a mounting hole, the post terminal is mounted in the mounting hole, and in the first direction, a depth of the second accommodating groove is greater than or equal to a minimum distance from the post terminal outer end surface to the mounting hole.

In the above technical solution, as the depth of the second accommodating groove in the first direction is greater than or equal to the minimum distance from the post terminal outer end surface to the mounting hole, the volume of the post terminal can be fully utilized, such that the second accommodating groove has a large depth, which is conducive to accommodating more conductive parts, thereby reducing the space occupied by the conductive parts in the housing to a greater extent, further improving the energy density of the battery cell, and further reducing the redundancy of the conductive parts in the housing. Meanwhile, due to the large depth, the second accommodating groove can accommodate the gases produced by the electrode assembly to improve the reliability and stability of the battery cell, and can also accommodate more electrolyte to prolong the service life of the battery cell.

In some embodiments, the housing assembly further includes a first cover plate, the first cover plate is fitted to the post terminal and closes the opening of the second accommodating groove, and the first cover plate is electrically connected to the post terminal.

In the above technical solution, arranging the first cover plate to close the opening of the second accommodating groove can prevent the electrolyte in the housing from leaking out of the opening of the second accommodating groove. Moreover, since the first cover plate closes the opening of the second accommodating groove and is electrically connected to the post terminal, an indirect electrical connection between the post terminal and a busbar component of the battery can be easily achieved by using the first cover plate, and the connection area of the electrical connection can also be increased, thereby helping reduce the resistance of the electrical connection.

In some embodiments, the first cover plate includes a first conductive member and a second conductive member made of different materials, the first conductive member is fitted to and electrically connected to the post terminal, and the second conductive member is fitted to and electrically connected to the first conductive member.

In the above technical solution, the composite configuration of the first cover plate and the same material of the first conductive member and the post terminal facilitate the electrical connection between the first conductive member and the post terminal. Furthermore, since the second conductive member is made of a different material from the first conductive member, the second conductive member may be used to electrically connect to the busbar component of the battery with a material different from that of the post terminal.

In some embodiments, the first conductive member is provided with a second groove, the second conductive member is embedded in the second groove, and an opening of the second groove is formed on a surface of the first conductive member distal to the second accommodating groove, such that the second conductive member is exposed from the opening of the second groove

In the above technical solution, in one aspect, by embedding the second conductive member in the first conductive member, the difficulty in assembling the first conductive member and the second conductive member can be reduced, thereby improving the stability and convenience of the fit between the first conductive member and the second conductive member, and the thickness of the first cover plate can be reduced, thereby reducing the space occupied by the first cover plate, so as to improve the space utilization of the battery cell. In another aspect, since the second conductive member can be exposed from the surface of the first conductive member on a side distal to the second accommodating groove through the opening of the second groove, it is conducive to realizing the electrical connection between the second conductive member and the busbar component of the battery outside the post terminal. In addition, since the opening of the second groove is formed on the surface of the first conductive member distal to the second accommodating groove, the first conductive member can separate between the second accommodating groove and the second conductive member, thereby preventing the electrolyte entering the second groove from contacting the second conductive member and reducing leakage of the electrolyte.

In some embodiments, the first cover plate is embedded in the opening of the second accommodating groove.

In the above technical solution, embedding the first cover plate in the second accommodating groove can reduce the difficulty in assembling the first cover plate and the post terminal, improve the stability of the assembly of the first cover plate and the post terminal and the reliability and convenience of the connection, and reduce the space occupied by the first cover plate outside the post terminal. Moreover, since the first cover plate is embedded in the opening of the second accommodating groove, there is sufficient space in the second accommodating groove to accommodate the conductive part.

In some embodiments, a wall surface at the opening of the second accommodating groove formed on the post terminal is an inclined guiding surface, and the inclined guiding surface is configured to guide the first cover plate to be fitted to the opening of the second accommodating groove.

In the above technical solution, by processing the wall surface at the opening of the second accommodating groove into an inclined surface with guidance functionality, the difficulty in assembling the first cover plate and the second accommodating groove can be reduced, thereby improving the assembly efficiency of the first cover plate and the second accommodating groove.

In some embodiments, the second accommodating groove includes a first groove segment and a second groove segment located on a side of the first groove segment proximal to the post terminal outer end surface. The cross-sectional area of the second groove segment is larger than the cross-sectional area of the first groove segment, so as to form a step surface between the first groove segment and the second groove segment. The first cover plate is embedded in the second groove segment and supported by the step surface.

In the above technical solution, providing the second accommodating groove as a stepped groove form can stably fit the first cover plate to the opening of the second accommodating groove, thereby improving the connection stability between the first cover plate and the post terminal. In addition, limiting the groove depth of the first groove segment allows the second accommodating groove to have sufficient space to accommodate the conductive part.

In some embodiments, the first cover plate is provided with a stress relief groove, and the stress relief groove is located in an outer peripheral region of the first cover plate.

In the above technical solution, by providing a stress relief groove on the first cover plate, the stress generated during the processing of the first cover plate or the electrical connection between the first cover plate and the post terminal can be relieved, so as to mitigate the problem of deformation or damage of the first cover plate caused by stress.

In some embodiments, the housing assembly further includes a second cover plate, and the second cover plate lids the first perforation and is located outside the conductive part in the second accommodating groove.

In the above technical solution, when the electrolyte enters the second accommodating groove from the first perforation, the problem of the electrolyte overflowing from the post terminal can be mitigated through the second cover plate, thereby improving the reliability of the battery cell.

In some embodiments, at least a part of the second gathering part is accommodated in the second accommodating groove.

In the above technical solution, as the tab part includes the second gathering part formed by the convergence and connection of a plurality of tab plates, at least a part of the second gathering part is accommodated in the second accommodating groove, thereby facilitating the assembly of the conductive part and the post terminal.

In some embodiments, the accommodating part is further provided with a third accommodating groove, a surface of the post terminal on a side facing the active substance-coated part is a post terminal inner end surface, the third accommodating groove is located on a side of the second accommodating groove proximal to the active substance-coated part, an opening of the third accommodating groove is formed on the post terminal inner end surface, the third accommodating groove is in communication with the second accommodating groove through the first perforation, and at least a part of the first gathering part is accommodated in the third accommodating groove.

In the above technical solution, at least a part of the first gathering part of the tab part is accommodated in the third accommodating groove, and at least a part of the second gathering part is accommodated in the second accommodating groove, such that the space in the post terminal can be further utilized.

In some embodiments, the conductive part further includes an adapting piece, the adapting piece is configured to connect the second gathering part to the post terminal, and at least a part of the adapting piece is accommodated in the second accommodating groove.

In the above technical solution, by accommodating at least a part of the adapting piece in the second accommodating groove, the adapting piece can occupy the space in the post terminal, such that the space occupied by the adapting piece in the housing can be reduced, so as to accommodate a larger active substance-coated part, thereby improving the energy density of the battery cell. Moreover, the probability of short circuit between the adapting piece and the active substance-coated part can be reduced. In another aspect, by using the adapting piece to achieve an indirect electrical connection between the second gathering part and the post terminal, the adapting piece can be welded to the post terminal at a part avoiding the second gathering part, such that the welding between the adapting piece and the post terminal is firm, welding cracking is less likely to occur, and the reliability and stability of the battery cell can be further improved. Meanwhile, by electrically connecting the tab part to the post terminal through the adapting piece, the configuration of the tab part can also be simplified.

In some embodiments, the accommodating part is provided with a fourth accommodating groove, a surface of the post terminal on a side distal to the active substance-coated part is a post terminal outer end surface, an opening of the fourth accommodating groove is formed on the post terminal outer end surface, the fourth accommodating groove is in communication with an interior of the housing through a second perforation, the conductive part is provided in the second perforation in a penetrating manner, and an electrical connection position of the conductive part and the post terminal is located on a wall of the second perforation formed on the post terminal.

In the above technical solution, by providing the fourth accommodating groove, the electrical connection between the conductive part and the wall of the second perforation can be easily achieved. Furthermore, in some cases, the sealing of the second perforation can be achieved by the electrical connection between the conductive part and the post terminal.

In some embodiments, the post terminal includes a first post terminal part and a second post terminal part made of different materials and electrically connected, the second post terminal part is located on a side of the first post terminal part distal to the active substance-coated part, the accommodating part is arranged on the first post terminal part or on the first post terminal part and the second post terminal part, and the conductive part is electrically connected to the first post terminal part.

In the above technical solution, by providing the post terminal in a composite form composed of different materials, the first post terminal part located on the inner side is fitted in an accommodating manner and electrically connected to the conductive part, and the second post terminal part located on the outer side is electrically connected to the busbar component of the battery and the like, which is conducive to realizing the assembly and electrical connection of the post terminal to related components, reducing the mutual interference between the electrical connection position of the post terminal and the conductive part and the electrical connection position of the post terminal and the busbar component of the battery, and improving the reliability and stability of the battery cell.

In some embodiments, the battery cell further includes: a support, located in the housing and on a side of the active substance-coated part proximal to the post terminal, the support being provided with a clearance hole configured to provide clearance for the conductive part, and the conductive part being suitable for extending to a side of the support distal to the active substance-coated part through the clearance hole.

In the above technical solution, by arranging the clearance hole on the support, the conductive part can be guided and constrained to be fitted to the post terminal by passing through the clearance hole, which can not only simplify the arrangement of the conductive part, save the material of the conductive part, and reduce the cost, but also reduce the risk of short -circuit connection between the conductive part and the active substance-coated part by the support supporting and guiding the conductive part to be fitted to the post terminal, so as to further improve the reliability of the battery cell.

In some embodiments, the battery cell further includes: a support, located in the housing and on a side of the active substance-coated part proximal to the post terminal, the support being provided with a clearance hole configured to provide clearance for the conductive part, the conductive part being suitable for extending to a side of the support distal to the active substance-coated part through the clearance hole, the support being provided with a guiding part, the guiding part defining, in an enclosing manner, at least a part of the clearance hole, and the guiding part at least partially extending to the accommodating part.

In the above technical solution, by arranging the clearance hole on the support, the conductive part can be guided and constrained to be fitted to the post terminal by passing through the clearance hole, which can not only simplify the arrangement of the conductive part, save the material of the conductive part, and reduce the cost, but also reduce the risk of short-circuit connection between the conductive part and the active substance-coated part by the support supporting and guiding the conductive part to be fitted to the post terminal, so as to further improve the reliability of the battery cell. Since the support is provided with the guiding part that at least partially extends into the accommodating part, and at least a part of the clearance hole is defined in an enclosing manner by the guiding part, at least a part of the conductive part can be easily accommodated in the accommodating part, thereby improving the assembly efficiency of the conductive part. Meanwhile, through the arrangement of the guiding part, the fits between the support and the post terminal, and between the support and the conductive part become tighter and more reliable, such that the structure of the battery cell becomes more compact, which is more conducive to improving the energy density of the battery cell.

In some embodiments, the support is provided with a third groove, and at least a part of the post terminal located in the housing is accommodated in the third groove.

In the above technical solution, by providing the third groove on the support, at least a part of the part of the post terminal located in the housing is accommodated. In one aspect, it is conducive to reducing the space occupied by the support in the housing, and in another aspect, it is also conducive to improving the stability and reliability of the post terminal, so as to ensure the reliability and stability of the electrical connection between the post terminal and the battery cell assembly, thereby improving the reliability and stability of the charging and discharging operations of the battery cell.

In some embodiments, the clearance hole includes a first hole segment and a second hole segment, the second hole segment is located on a side of the first hole segment proximal to the active substance-coated part, and a cross-sectional area of the second hole segment gradually increases in a direction away from the first hole segment, at least a part of the first gathering part is accommodated in the second hole segment, and the second gathering part is provided in the first hole segment in a penetrating manner.

In the above technical solution, arranging the clearance hole to include the second hole segment that gradually expands in the direction toward the active substance-coated part facilitates the second hole segment to accommodate more first gathering parts, so as to improve the compactness of the fit between the support and the battery cell assembly, such that the overall volume of the battery cell is smaller, and the battery can accommodate a greater number of battery cells, thereby improving the volumetric energy density of the battery.

In some embodiments, the support is of an integrated structure, or the support is of a split-type structure and includes a first support and a second support that are separable, and a clearance hole is defined between the first support and the second support.

In the above technical solution, when the support is of the integrated structure, the support is convenient to process and has good reliability, and the support can be conveniently assembled with the housing assembly, thereby improving the assembly efficiency and fitting stability. When the support is of the split-type structure, the clearance hole is defined through the cooperation of the first support and the second support. When the support and the battery cell assembly are assembled, it is not necessary to pass the conductive part from one end of the clearance hole to the other end. Instead, the first support and the second support can be assembled at the position of the conductive part to clamp the conductive part, such that the clearance hole surrounds the conductive part, thereby facilitating the assembly of the support and the battery cell assembly and improving the assembly efficiency.

In some embodiments, the battery cell further includes: an inner insulating member, located in the housing, wrapped outside the active substance-coated part, and connected to the support.

In the above technical solution, in one aspect, by wrapping the active substance-coated part with the inner insulating member, the insulation reliability between the active substance-coated part and the housing can be improved, the corrosion of the housing caused by the contact between the active substance-coated part and the housing can be reduced or prevented, and the leakage of the electrolyte caused by the corrosion of the housing can be reduced, thereby improving the reliability of the battery cell. In another aspect, connecting the inner insulating member to the support can reduce the difficulty of fixing the inner insulating member and improve the reliability of the inner insulating member wrapped outside the active substance-coated part.

In some embodiments, the housing is provided with a pressure relief part, and the pressure relief part and the post terminal are located on a surface on the same side of the housing; or the pressure relief part and the post terminal are separately provided on two surfaces on different sides of the housing.

In the above technical solution, when the post terminal and the pressure relief part are arranged on the same side, processing and assembly are facilitated, while when the post terminal and the pressure relief part are arranged on different sides, the space can be saved, the volume of the post terminal can be increased, and the adverse effects on the post terminal when the pressure relief part relieves pressure can be reduced.

In some embodiments, the housing is provided with a pressure relief part, the housing includes a housing body and a housing cover, one end of the housing body is open, the housing cover is arranged at the open end of the housing body, and the pressure relief part is arranged on the housing cover.

In the above technical solution, the pressure relief part is convenient for processing and has good pressure relief reliability.

In a second aspect, the embodiments of the present application further provide a battery. The battery includes the above battery cell.

In the above technical solution, the battery is provided with the above battery cell, which is conducive to shortening the distance of the conductive part from the end part to the post terminal in the direction perpendicular to the first direction, such that the distance between the second gathering part and the post terminal can be set shorter, thereby facilitating direct or indirect welding of the tab plate to the post terminal, ensuring the welding reliability of the conductive part and the post terminal, and further ensuring the reliability of the battery cell and the battery. Furthermore, it is conducive to reducing the overall length of the conductive part, which can not only reduce the cost of the conductive part, but also mitigate the inverted insertion problem caused by the redundancy of the conductive part, thereby further improving the reliability of the battery cell and the battery.

In a third aspect, the embodiments of the present application further provide an electric device. The electric device includes the above battery.

In the above technical solution, since the electric device is provided with the above battery and the reliability of the battery can be improved, the reliability of the electric device can be improved.

### BRIEF DESCRIPTION OF THE DRAWINGS

In order to more clearly illustrate the technical solutions in the embodiments of the present disclosure, the drawings required for use in the embodiments will be briefly described below. It should be understood that the following drawings only illustrate some embodiments of the present application and therefore shall not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of the structure of a battery according to some embodiments of the present application;
FIG. 3 is a schematic structural diagram of a battery cell according to some embodiments of the present application;
FIG. 4 is an orthographic projection view of a battery cell according to some embodiments of the present application;
FIG. 5 is a cross-sectional view along the line A-A in FIG. 4;
FIG. 6 is a schematic diagram of an orthographic projection of the part F in FIG. 4;
FIG. 7 is a partial cross-sectional schematic diagram of a battery cell according to some embodiments of the present application;
FIG. 8 is a partial cross-sectional schematic diagram of a battery cell assembly according to some embodiments of the present application;
FIG. 9 is a diagram of various tab gathering solutions of a battery cell assembly according to some embodiments of the present application;
FIG. 10 is a partial cross-sectional schematic diagram of a battery cell according to some embodiments of the present application;
FIG. 11 is a partial cross-sectional schematic diagram of a battery cell according to some embodiments of the present application;
FIG. 12 is a partial cross-sectional schematic diagram of a battery cell according to some embodiments of the present application;
FIG. 13 is a partial cross-sectional schematic diagram of a battery cell according to some embodiments of the present application;
FIG. 14 is a partial cross-sectional schematic diagram of a battery cell according to some embodiments of the present application;
FIG. 15 is a partial cross-sectional schematic diagram of a battery cell according to some embodiments of the present application;
FIG. 16 is a partial cross-sectional schematic diagram of a battery cell according to some embodiments of the present application;
FIG. 17 is a partial cross-sectional schematic diagram of a battery cell according to some embodiments of the present application;
FIG. 18 is a partial cross-sectional schematic diagram of a battery cell according to some embodiments of the present application;
FIG. 19 is a partial cross-sectional schematic diagram of a battery cell according to some embodiments of the present application;
FIG. 20 is a partial enlarged view of the part B in FIG. 3;
FIG. 21 is an orthographic projection view of various post terminals according to some embodiments of the present application;
FIG. 22 is a partial cross-sectional schematic diagram of a battery cell according to some embodiments of the present application;
FIG. 23 is a partial cross-sectional schematic diagram of a battery cell according to some embodiments of the present application;
FIG. 24 is an exploded view of the structure of a battery cell according to some embodiments of the present application;
FIG. 25 is a partial cross-sectional schematic diagram of a housing assembly according to some embodiments of the present application;
FIG. 26 is an exploded view of the structure of the housing assembly shown in FIG. 25;
FIG. 27 is an exploded view of the structure of the first cover plate shown in FIG. 26;
FIG. 28 is a partial cross-sectional schematic diagram of a battery cell according to some embodiments of the present application;
FIG. 29 is an exploded view of the structure of the battery cell shown in FIG. 28;
FIG. 30 is a partial cross-sectional schematic diagram of a battery cell according to some embodiments of the present application;
FIG. 31 is a partial cross-sectional schematic diagram of a battery cell according to some embodiments of the present application;
FIG. 32 is a partial cross-sectional schematic diagram of a battery cell according to some embodiments of the present application;
FIG. 33 is a partial cross-sectional schematic diagram of a battery cell according to some embodiments of the present application;
FIG. 34 is a schematic diagram of the fit between a battery cell assembly and a support according to some embodiments of the present application;
FIG. 35 is a cross-sectional view along the line C-C in FIG. 34;
FIG. 36 is a schematic structural diagram of an integrated support according to some embodiments of the present application;
FIG. 37 is a schematic structural diagram of a split-type support according to some embodiments of the present application;
FIG. 38 is a partial cross-sectional schematic diagram of a battery cell assembly and a support according to some embodiments of the present application;
FIG. 39 is an exploded view of the structure of a battery cell assembly, a support, and a housing assembly according to some embodiments of the present application;
FIG. 40 is an exploded view of the structure of a first post terminal, a housing, and a sealing gasket according to some embodiments of the present application;
FIG. 41 is an assembly diagram of the first post terminal, the housing, and the sealing gasket shown in FIG. 40;
FIG. 42 is a schematic structural diagram of a first post terminal according to some embodiments of the present application;
FIG. 43 is an assembly diagram of a first post terminal, a housing, and a sealing gasket according to some embodiments of the present application;
FIG. 44 is an exploded view of the structure of the first post terminal shown in FIG. 43;
FIG. 45 is an orthographic projection view of a battery cell according to some embodiments of the present application;
FIG. 46 is an orthographic projection view of a battery cell according to some embodiments of the present application;
FIG. 47 is a cross-sectional view along the line D-D in FIG. 46;
FIG. 48 is a cross-sectional schematic diagram of a housing assembly according to some embodiments of the present application;
FIG. 49 is a cross-sectional schematic diagram of a housing assembly according to some embodiments of the present application;
FIG. 50 is an orthographic projection view of a battery cell according to some embodiments of the present application;
FIG. 51 is a cross-sectional view along the line E-E in FIG. 50;
FIG. 52 is a partial cross-sectional schematic diagram of a battery cell according to some embodiments of the present application;
FIG. 53 is a schematic structural diagram of a housing cover according to some embodiments of the present application;
FIG. 54 is a schematic diagram of a battery cell according to some embodiments of the present application.

### Reference numerals:

battery cell 10;
housing assembly 1;
housing 11; first wall surface 110; housing body 111; housing cover 112; mounting hole 113;
post terminal 12;
accommodating part 121;
first accommodating groove 12110; first end wall 12111; first recess 12112; first side wall 12113;
second accommodating groove 12120; second end wall 12121; second recess 12122; second side wall 12123;
first groove segment 12124; second groove segment 12125; inclined guiding surface 12126; step surface 12127;
first perforation 12130; third accommodating groove 12140; fourth accommodating groove 12150;
second perforation 12160; third perforation 12170;
post terminal inner end surface 122; post terminal outer end surface 123;
first post terminal part 124; second post terminal part 125;
first groove 126; spacer part 127;
stopper part 1281; penetration part 1282; flange part 1283;
first part 1291; second part 1292;
first cover plate 13; first conductive member 131; second groove 1311; second conductive member 132; stress relief groove 133;
second cover plate 14; pressure relief part 16; clearance groove 18;
first sealing gasket 191; second sealing gasket 192;
battery cell assembly 2; electrode assembly 2a;
active substance-coated part 21; conductive part 22; current collector 211; active substance layer 212;
tab part 221; tab plate 2211; first gathering part 2212; second gathering part 2213;
connecting segment 22130; first connecting segment 22131; second connecting segment 22132; end part 2214;
adapting piece 222;
support 3; clearance hole 31; first hole segment 311; second hole segment 312;
guiding part 32; first support 33; second support 34; housing entry guiding surface 35;
body part 36; extending part 37; third groove 38; positioning groove 39;
inner insulating member 4; main body part 41; connecting part 42; sealing member 6; groove cover 7;
case 20; first case 201; second case 202;
electric device 1000; battery 100; controller 200; motor 300;
first direction Z; second direction X; third direction Y.

### DETAILED DESCRIPTION

To make the objectives, technical solutions, and advantages of the embodiments of the present application clearer, the technical solutions in the embodiments of the present application will be clearly and completely described below with reference to the drawings in the embodiments of the present application. It is obvious that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the descriptions of the above drawings are intended to cover a non-exclusive inclusion. The terms "first", "second", and the like in the specification and claims of the present application and the above drawings are defined to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understo od that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality" used in the present application refers to two or more (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and soft-pack battery cells, which are not limited in the embodiments of the present application.

The battery mentioned in the embodiments of the present application refers to a single physical module including one or more battery cells to provide higher voltage and capacity. For example, the battery mentioned in the present application may be a battery module, a battery pack, or the like. A battery module generally includes a plurality of battery cells. A battery pack generally includes a case used for encapsulating one or more battery cells or one or more battery modules. The case can prevent liquid or other foreign matters from affecting the charging or discharging of the battery cells.

Illustratively, a battery cell may generally include a housing, a battery cell assembly and an electrolyte. The housing is configured to accommodate the battery cell assembly and the electrolyte, and at least one positive electrode post terminal and at least one negative electrode post terminal are provided on the housing. The battery cell assembly includes one or more electrode assemblies, and the electrode assembly is formed by stacking or winding a positive electrode plate, a negative electrode plate, and a separation film.

The positive electrode plate may generally include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of po sitive electrode tab plates are stacked together and electrically connected to the positive electrode post terminal. Illustratively, the plurality of positive electrode tab plates stacked together may be directly welded to the positive electrode post terminal to form an electrical connection. Alternatively, the battery cell assembly may further include a positive electrode adapting piece, the plurality of positive electrode tab plates stacked together are welded to one end of the positive electrode adapting piece, and the other end of the positive electrode adapting piece is welded to the positive electrode post terminal to form an electrical connection between the positive electrode tab plates and the positive electrode post terminal.

The negative electrode plate may generally include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. Illustratively, the plurality of negative electrode tab plates stacked together may be directly welded to the negative electrode post terminal to form an electrical connection. Alternatively, the battery cell assembly may further include a negative electrode adapting piece, the plurality of negative electrode tab plates stacked together are welded to one end of the negative electrode adapting piece, and the other end of the negative electrode adapting piece is welded to the negative electrode post terminal to form an electrical connection between the negative electrode tab plates and the negative electrode post terminal. The material of the separation film is not limited, such as polypropylene or polyethylene.

Meanwhile, a battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, or lithium manganate, etc., the material of the negative electrode current collector may be copper, and the material of the negative electrode active substance layer may be carbon, silicon, or the like. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

In the related art, during the manufacturing of a battery cell, an active substance layer is coated on a current collector and then the current collector is cut to obtain an electrode plate consisting of a current collector coated with an active substance layer (referred to as an active substance-coated part) and a current collector not coated with an active substance layer (referred to as a tab plate). Then, the positive and negative electrode plates and a separation film are stacked or wound in sequence to obtain an electrode assembly. In the electrode assembly, a plurality of tab plates are stacked to form a tab part. The housing of the battery cell is provided with a post terminal, and a surface of the post terminal on a side facing the active substance-coated part is a post terminal inner end surface. When the battery cell is manufactured, the tab part is typically welded to the post terminal inner end surface directly, or welded to the post terminal inner end surface indirectly through the adapting piece, so as to ensure normal charging and discharging operations.

In the related art, the battery cell includes a housing and an electrode assembly, the housing includes a housing body and a top cover, the housing is provided with an accommodating chamber, the accommodating chamber is provided with an opening, the electrode assembly is mounted into the accommodating space through the opening, the top cover lids the opening and is welded to the housing body, and a post terminal is arranged on the top cover. The electrode assembly is provided with a conductive part, the conductive part includes a first gathering part formed by gathering a plurality of tab plates and a second gathering part formed by gathering and connecting, and the second gathering part can be electrically connected to the post terminal directly or indirectly. During the assembly of the battery cell of such a structure, the second gathering part is typically first welded to the post terminal on the top cover directly or indirectly, then the electrode assembly is mounted into the housing body, and then the top cover is welded to the housing body. Since the conductive part needs to be first welded to the post terminal on the top cover directly or indirectly before entering the housing, the position and size of the post terminal on the top cover are designed differently. Therefore, in order to match the arrangement of the post terminal of the top cover and ensure the convenience of welding, the length of the entire conductive part is typically set to be large. However, the inventors have found that when the conductive part is long, the second gathering part is prone to inverted insertion due to redundancy, which affects the reliability of the battery cell.

In view of this, the inventors have adjusted the gathering position of a plurality of tab plates in the conductive part and the relative position of the post terminal, such that the orthographic projection of the end part of the second gathering part connected to the first gathering part on the post terminal in the first direction is at least partially located within the range of the outer contour of the post terminal. Such an arrangement, in one aspect, is conducive to reducing the length of the second gathering part in a direction perpendicular to the first direction, such that the second gathering part can at least partially fall within the range of the outer contour of the post terminal after extending from the end part, so as to facilitate welding of the conductive part and the post terminal, and in another aspect, is conducive to reducing the overall length of the conductive part, which is not only conducive to reducing the cost of the conductive part, but also conducive to mitigating the inverted insertion problem caused by the redundancy of the conductive part, thereby improving the reliability of the battery cell.

The embodiments of the present application provide an electric device using the battery cell disclosed herein as a power source. The electric device may be, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

For ease of explanation, in the following embodiments, the structures of the electric device 1000, the battery 100, and the battery cell 10 of the present application will be described in detail by taking the electric device as a vehicle as an example.

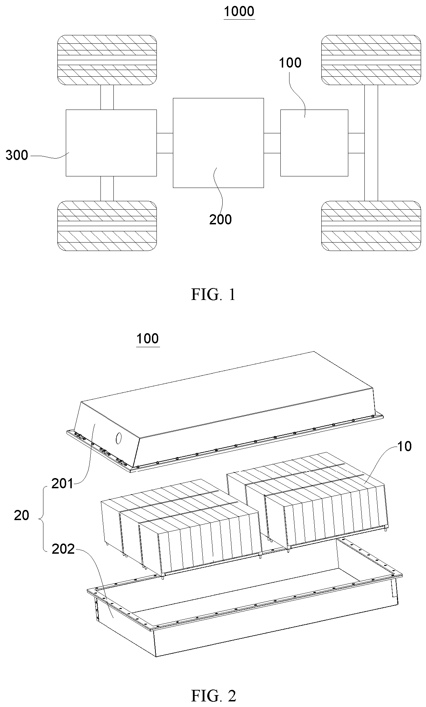

Referring to FIG. 1, FIG. 1 is a schematic structural diagram of an electric device 1000 according to some embodiments of the present application as a vehicle. The vehicle may be a fuel vehicle, a gas vehicle, or a new energy vehicle. The new energy vehicle may be a pure electric vehicle, a hybrid vehicle, an extended-range vehicle, or the like. The vehicle is provided with a battery 100, and the battery 100 may be provided at the bottom, the head, or the tail of the vehicle. The battery 100 may be used for powering the vehicle. For example, the battery 100 may serve as an operation power source for the vehicle. The vehicle may further include a controller 200 and a motor 300. The controller 200 is configured to control the battery 100 to power the motor 300, e.g., for operation power needed by the vehicle for start-up, navigation, and driving. In some embodiments of the present application, the battery 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of the structure of the battery cell 10 used in the battery 100 according to some embodiments of the present application. The battery 100 includes a case 20 and a plurality of battery cells 10, and the battery cells 10 are accommodated in the case 20. The case 20 is configured to provide an assembly space for the battery cell 10, and the case 20 may be in various structures. In some embodiments, the case 20 may include a first case 201 and a second case 202. The first case 201 and the second case 202 are mutually lidded onto each other. The first case 201 and the second case 202 jointly define an assembly space for accommodating the battery cell 10. The second case 202 may be of a hollow structure with one end open, the first case 201 may be of a plate structure, and the first case 201 lids the open side of the second case 202, such that the first case 201 and the second case 202 jointly define an assembly space; or both the first case 201 and the second case 202 may be of hollow structures with one side open (for example, as shown in FIG. 2), and the open side of the first case 201 lids the open side of the second case 202. Certainly, the case 20 formed by the first case 201 and the second case 202 may be in various shapes, such as a cylinder or a rectangular parallelepiped.

In the battery 100, a plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in the case 20; or it may be that in the battery 100, the plurality of battery cells 10 are first connected in series, in parallel, or in series-parallel to form battery modules, and then the plurality of battery modules are connected in series, in parallel, or in series-parallel to form a whole and accommodated in the case 20. The battery 100 may further include other structures. For example, the battery 100 may further include a busbar component for achieving electrical connection between the plurality of battery cells 10.

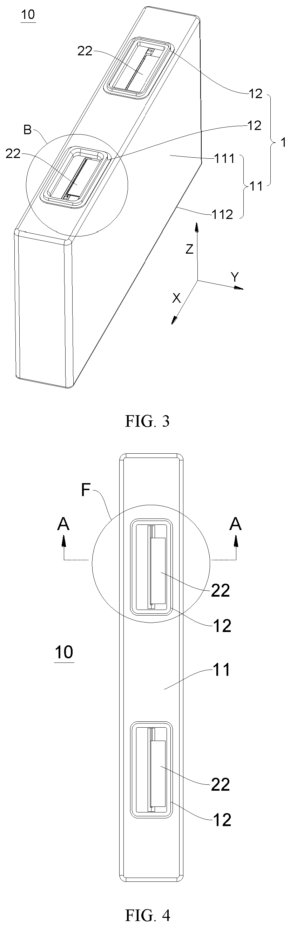

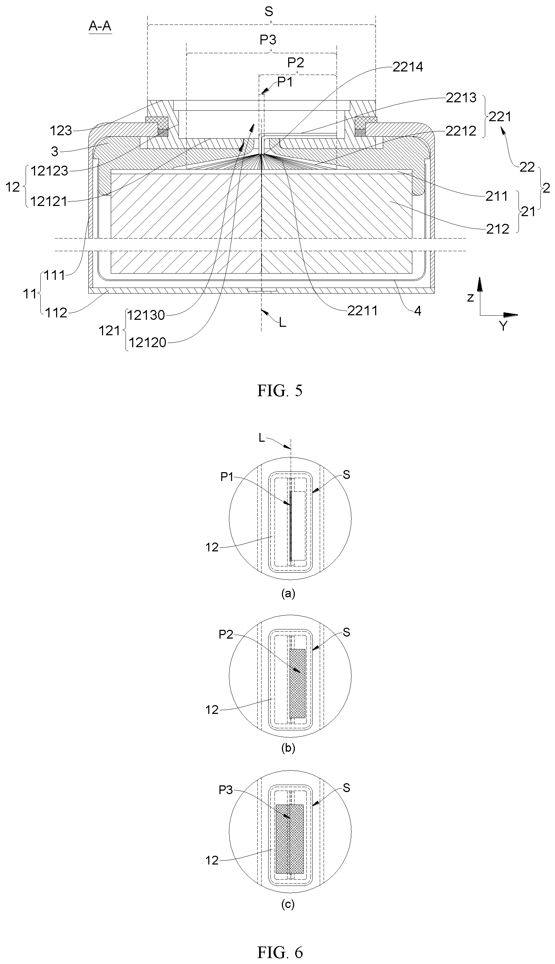

Referring to FIG. 3, FIG. 3 is a schematic view of the battery cell 10 according to some embodiments of the present application. The battery cell 10 is in the shape of a rectangular parallelepiped. However, they are not limited to this. In other embodiments of the present application, the battery cell 10 may also be cylindrical, flat, or in other shapes. Referring to FIGs. 4 and 5, FIG. 4 is an orthographic projection view of the battery cell 10 according to some embodiments of the present application; FIG. 5 is a cross-sectional view along the line A-A in FIG. 4. In the embodiments of the present application, the battery cell 10 includes a housing assembly 1 and a battery cell assembly 2, and the housing assembly 1 includes a housing 11 and a post terminal 12 arranged on the housing 11.

The shape of the housing 11 is adjusted according to the type of the battery cell 10, and the type of the battery cell 10 in the embodiments of the present application is not limited. For example, when the battery cell 10 is a square battery, the housing 11 is square, and when the battery cell 10 is a cylindrical battery, the housing 11 is cylindrical. The embodiments of the present application are all described by taking the housing 11 as a square as an example. The housing 11 is provided with a post terminal 12, and the post terminal 12 is configured to be electrically connected to the battery cell assembly 2 to ensure normal charging and discharging operations of the battery cell 10. Generally, the number of post terminals 12 is at least two, specifically including at least one positive electrode post terminal and at least one negative electrode post terminal. For example, when the number of post terminals 12 is two, one is a positive electrode post terminal and the other is a negative electrode post terminal, and the two are electrically connected to positive and negative output positions of the battery cell assembly 2, separately. For another example, when the number of post terminals 12 is four, two may be positive electrode post terminals and two may be negative electrode post terminals. In this case, the two positive electrode post terminals are both electrically connected to a positive output position of the battery cell assembly 2, and the two negative electrode post terminals are both electrically connected to a negative output position of the battery cell assembly 2. Certainly, in other embodiments of the present application, the housing assembly 1 may be provided with only one post terminal 12. The post terminal 12 includes two parts, which are connected in an insulating manner and serve separately as a positive electrode post terminal and a negative electrode post terminal.

Referring to FIGs. 4-5 again, in the embodiments of the present application, the battery cell assembly 2 includes an active substance-coated part 21 and a conductive part 22, and the conductive part 22 electrically connects the active substance-coated part 21 to the post terminal 12. The active substance-coated part 21 is accommodated in the housing 11, the active substance-coated part 21 is a part of the battery cell assembly 2 coated with an active substance, which can assist in the deintercalation of metal ions during the charging and discharging processes of the battery cell 10, the conductive part 22 is a metal structure that electrically connects the active substance-coated part 21 to the post terminal 12, which is not coated with an active substance, and the post terminal 12 is electrically connected to the active substance-coated part 21 through the conductive part 22 to enable the charging and discharging operations of the battery cell 10 to be carried out.

It should be noted that in the embodiments of the present application, the active substance-coated part 21 includes a current collector 211 and an active substance layer 212 arranged on the current collector 211, and the conductive part 22 includes a tab part 221 electrically connected to the current collector 211. The active substance-coated part 21 is divided into a positive electrode active substance-coated part and a negative electrode active substance-coated part. The positive electrode active substance-coated part includes a part in which the positive electrode current collector is coated with a positive electrode active substance layer, and the negative electrode active substance-coated part includes a part in which the negative electrode current collector is coated with a negative electrode active substance layer. The conductive part 22 is divided into a positive electrode conductive part and a negative electrode conductive part. The positive electrode conductive part includes a positive electrode tab which electrically connects the positive electrode current collector to the positive electrode post terminal, and the negative electrode conductive part includes a negative electrode tab which electrically connects the negative electrode current collector to the negative electrode post terminal.

Referring to FIGs. 3-5 again, the tab part 221 includes a plurality of tab plates 2211. The tab plates 2211 are structures that are electrically connected to the current collector 211 but not coated with active substances, and may be formed by direct die cutting of the current collector 211. The ends of the plurality of tab plates 2211 proximal to the active substance-coated part 21 gather together (that is, converge in a direction close to each other) to form a first gathering part 2212, and the ends of the plurality of tab plates 2211 distal to the active substance-coated part 21 gather and are connected to form a second gathering part 2213. The first gathering part 2212 connects the second gathering part 2213 to the active substance-coated part 21. In some optional examples, the active substance-coated part 21 and the tab plates 2211 may be an integrated member, such as an integrally formed aluminum foil for the positive electrode plate, and an integrally formed copper foil for the negative electrode plate.

In the above technical solution, the plurality of tab plates 2211 only converge (that is, get together in a direction towards each other) and gather but are not connected when forming the first gathering part 2212, while the plurality of tab plates 2211 not only converge and gather but are also connected into an integrated structure when forming the second gathering part 2213. For example, the plurality of tab plates 2211 may be connected into an integrated plate structure by welding (such as ultrasonic welding) to form the second gathering part 2213. For example, the plurality of tab plates 2211 may also converge and be connected to form the second gathering part 2213 by conductive adhesive bonding, etc., which will not be described in detail herein.

It should be noted that in the embodiments of the present application, the tab plates 2211 are divided into positive electrode tab plates 2211 and negative electrode tab plates 2211. The positive electrode tab plates 2211 that need to gather together are stacked together and ultrasonically pre-welded to form a second gathering part 2213 of the positive electrode, which can reduce the gap between layers and enable the plurality of fluffy positive electrode tab plates 2211 to form a plate structure of a certain rigidity. Similarly, the negative electrode tab plates 2211 that need to gather together are stacked together and ultrasonically pre-welded to form a second gathering part 2213 of the negative electrode, which can reduce the gap between layers and enable the plurality of fluffy negative electrode tab plates 2211 to form a plate structure of a certain rigidity.

In the above technical solution, "ends of the plurality of tab plates 2211 proximal to the active substance-coated part 21 gather to form a first gathering part 2212, and ends of the plurality of tab plates 2211 distal to the active substance-coated part 21 gather and are connected to form a second gathering part 2213" is intended to illustrate that: in the extension direction of the tab plates 2211, the first gathering part 2212 and the second gathering part 2213 are sequentially arranged in a direction away from the active substance-coated part 21, and the specific positions of the first gathering part 2212 and the second gathering part 2213 are not limited, that is, it is not required how close the first gathering part 2212 is to the active substance-coated part 21, or how far the second gathering part 2213 is from the active substance-coated part 21.

In the embodiments of the present application, the direction in which the tab plates 2211 extend from the active substance-coated part 21 is the first direction Z. The first square shape Z mainly refers to an extension direction of the tab plates 2211 relative to the current collector 211 before the tab plates gather. At this time, the tab plates 2211 and the corresponding current collector 211 are located in the same plane. That is, the first direction Z is not an extension direction of the tab plates 2211 after the tab plates gather. Instead, the first direction Z mainly characterizes a direction in which the tab plates 2211 are arranged relative to the active substance-coated part 21 before the tab plates gather, and specifically, the direction is the axial direction of the post terminal 12. For example, referring to FIGs. 3-5, when the post terminal 12 is arranged on the top of the housing 11, the tab plates 2211 extend to a position above the active substance-coated part 21. Whether the tab plates 2211 extend vertically upward or obliquely upward, the vertically upward direction is the first direction Z. In this case, the first direction Z is also the height direction of the battery cell 10. The length direction of the battery cell 10 may be the second direction X, and the thickness direction of the battery cell 10 may be the third direction Y. The first direction Z, the second direction X, and the third direction Y are perpendicular to each other. It is not limited to this. For example, the post terminal 12 may also be arranged at the bottom of the housing 11, and the tab plates 2211 extend downward from the active substance-coated part 21. In this case, the vertically downward direction may be the first direction, which will not be described in detail herein.

Referring to FIGs. 4-6, FIG. 6 is a schematic diagram of an orthographic projection of the part F in FIG. 4. In the embodiments of the present application, the orthographic projection P1 of the end part 2214 of the second gathering part 2213 connected to the first gathering part 2212 on the post terminal 12 in the first direction Z is at least partially located within the range S of the outer contour of the post terminal 12. In FIG. 6(a), the range S of the outer contour of the post terminal 12 is represented by a solid line, and the shaded part in FIG. 6(a) represents the orthographic projection P1 of the end part 2214 on the post terminal 12 in the first direction Z. The "end part 2214" in the end part 2214 of the second gathering part 2213 connected to the first gathering part 2212 may be understood as a position of the second gathering part 2213 joined to the first gathering part 2212, i.e., a starting position where the tab plates 2211 gather and are connected, which is a part of the second gathering part 2213.

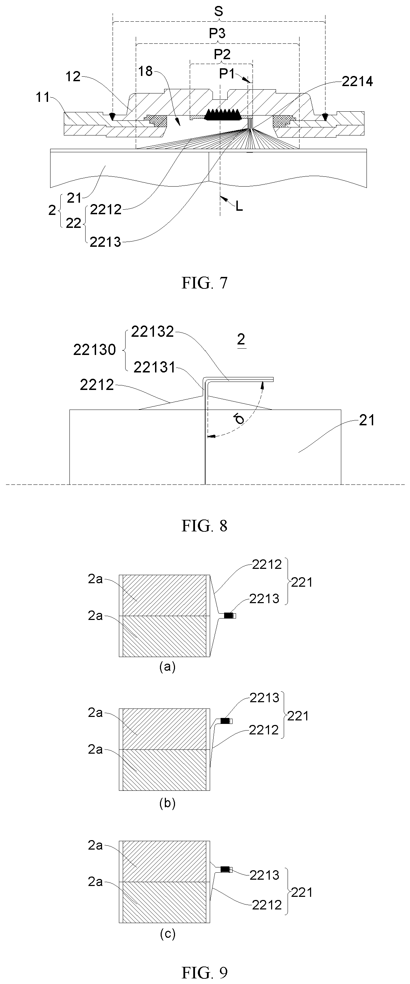

That is, when an orthographic projection is made onto a projection plane perpendicular to the first direction Z, at least a part of the orthographic projection P1 of the end part 2214 in the projection plane is located within the range delineated by the orthographic projection contour of the post terminal 12 in the projection plane. The orthographic projection of the post terminal 12 in the projection plane may be a completely filled solid figure or a partially filled hollowed-out figure. For example, in the example shown in FIG. 5, when a first perforation 12130 penetrates the post terminal 12, the orthographic projection of the post terminal 12 in the projection plane is formed as a partially filled figure hollowed out at the first perforation 12130. In this case, even if at least a part of the orthographic projection P1 of the end part 2214 on the post terminal 12 in the first direction Z is located at the above hollowed-out part, it is located within the range S of the outer contour of the post terminal 12. Referring to FIG. 7 again, FIG. 7 is a partial cross-sectional schematic diagram of a battery cell according to some embodiments of the present application. The post terminal 12 may also be configured solid without a penetrating perforation. In this case, the orthographic projection of the post terminal 12 in the above projection plane may be a completely filled solid figure, which will not be described in detail herein.

In the above technical solution, the ends of the plurality of tab plates 2211 distal to the active substance-coated part 21 gather and are connected to form the second gathering part 2213, and the orthographic projection of the end part of the second gathering part 2213 connected to the first gathering part 2212 on the post terminal in the first direction Z is at least partially arranged within the range S of the outer contour of the post terminal 12. In one aspect, it is conducive to shortening the distance of the conductive part 22 from the end part 2214 to the post terminal 12 in the direction perpendicular to the first direction Z, such that the distance between the second gathering part 2213 and the post terminal 12 can be set shorter, which is conducive to reducing the length of the second gathering part 2213 in the direction perpendicular to the first direction Z, such that the second gathering part 2213 can at least partially fall within the range of the outer contour of the post terminal 12 after extending from the end part 2214, thereby facilitating welding of the conductive part 22 and the post terminal 12. In another aspect, such an arrangement is conducive to reducing the overall length of the conductive part 22, which can not only reduce the cost of the conductive part 22, but also mitigate the inverted insertion problem caused by the redundancy of the conductive part 22, thereby improving the reliability of the battery cell 10. In addition, with such an arrangement, the space occupied by the conductive part 22 and the post terminal 12 in the direction perpendicular to the first direction Z can be concentrated, such that the overall space occupied by the conductive part and the post terminal is small, so as to release the remaining space of the battery cell 10 in the direction perpendicular to the first direction Z for arranging other structures, such as an insulating structure which may be arranged to further improve the reliability of the battery cell 10, or for containing more electrolyte to ensure the cycle life of the battery cell 10.

Referring to FIGs. 5 and 6 again, in some embodiments of the present application, the orthographic projection P1 of the end part 2214 of the second gathering part 2213 connected to the first gathering part 2212 on the post terminal 12 in the first direction Z is completely located within the range S of the outer contour of the post terminal 12. It can be understood that since the tab plates 2211 are generally in the shape of a sheet after gathering, the orthographic projection P1 of the end part 2214 of the second gathering part 2213 connected to the first gathering part 2212 on the above projection plane may be a line figure or a long strip figure, and the line figure or the long strip figure is completely arranged within the range delineated by the orthographic projection contour of the post terminal 12 in the projection plane. With such an arrangement, the distance of the conductive part 22 from the end part 2214 to the post terminal 12 can be shortened more fully in the direction perpendicular to the first direction Z, thereby reducing the length of the conductive part 22 more effectively, further reducing the redundancy and cost of the conductive part 22, and effectively mitigating the inverted insertion problem, so as to further improve the reliability of the battery cell 10 and further reduce the space occupied by the conductive part 22 in the housing 11 in the direction perpendicular to the first direction Z.

Referring to FIGs. 5 and 6 again, in some embodiments of the present application, the orthographic projection P2 of the second gathering part 2213 on the post terminal 12 in the first direction Z is completely located within the range S of the outer contour of the post terminal 12. In FIG. 6(b), the range S of the outer contour of the post terminal 12 is represented by a solid line, and the shaded part in FIG. 6(b) represents the orthographic projection P2 of the second gathering part 2213 on the post terminal 12 in the first direction Z. In the above technical solution, when an orthographic projection is made onto a projection plane perpendicular to the first direction Z, the orthographic projection of the second gathering part 2213 in the projection plane is completely located within the range delineated by the orthographic projection contour of the post terminal 12 in the projection plane. With such an arrangement, the distance of the conductive part 22 from the second gathering part 2213 to the post terminal 12 can be shortened more fully in the direction perpendicular to the first direction Z, thereby reducing the length of the conductive part 22 more effectively, further reducing the redundancy and cost of the conductive part 22, further improving the reliability of the battery cell 10, and further reducing the space occupied by the conductive part 22 in the housing 11 in the direction perpendicular to the first direction Z.

FIG. 8 is a partial cross-sectional schematic diagram of the battery cell assembly 2 according to some embodiments of the present application. Referring to FIGs. 5 and 8, in some embodiments, the second gathering part 2213 may include a plurality of connecting segments 22130, the plurality of connecting segments 22130 are connected in sequence, and any two adjacent connecting segments 22130 are arranged at an included angle. For example, the second gathering part 2213 includes a first connecting segment 22131 and a second connecting segment 22132 connected in sequence, the first connecting segment 22131 is connected between the second connecting segment 22132 and the first gathering part 2212, and the first connecting segment 22131 is arranged at an included angle to the second connecting segment 22132. For example, the included angle δ may be 90°, or greater than 90°, or less than 90°. When the orthographic projection P2 of the second gathering part 2213 on the post terminal 12 in the first direction Z is completely located within the range S of the outer contour of the post terminal 12, the orthographic projection P2 of each connecting segment 22130 on the post terminal 12 in the first direction Z is completely located within the range S of the outer contour of the post terminal 12.

As such, for the second gathering part 2213, the second gathering part 2213 can adapt to post terminals 12 of different structures by setting the number and angle of the connecting segments 22130, which is conducive to achieving the direct connection between the second gathering part 2213 and the post terminal 12, thereby simplifying the structure, reducing the cost, and improving the production efficiency. However, it is not limited to this. When the second gathering part 2213 includes a plurality of connecting segments 22130, the second gathering part 2213 may also be indirectly connected to the post terminal 12 via other conductive members, which will not be described in detail herein.

Referring to FIGs. 5 and 6 again, in some embodiments, the orthographic projection P3 of the first gathering part 2212 on the post terminal 12 in the first direction Z is at least partially located within the range S of the outer contour of the post terminal 12. In FIG. 6(c), the range S of the outer contour of the post terminal 12 is represented by a solid line, and the shaded part in FIG. 6(c) represents the orthographic projection P3 of the first gathering part 2212 on the post terminal 12 in the first direction Z. In the above technical solution, when an orthographic projection is made onto a projection plane perpendicular to the first direction Z, at least a part of the orthographic projection of the first gathering part 2212 in the projection plane is located within the range delineated by the orthographic projection contour of the post terminal 12 in the projection plane, thereby shortening the distance from the first gathering part 2212 to the post terminal 12 in the direction perpendicular to the first direction Z, further reducing the length of the conductive part 22, further reducing the redundancy and cost of the conductive part 22, further improving the reliability of the battery cell 10, and further reducing the space occupied by the conductive part 22 in the housing 11 in the direction perpendicular to the first direction Z.

Illustratively, referring to FIGs. 5 and 6, the orthographic projection P3 of the first gathering part 2212 on the post terminal 12 in the first direction Z may be completely located within the range S of the outer contour of the post terminal 12, thereby further reducing the length of the conductive part 22 in the direction perpendicular to the first direction Z, further reducing the redundancy and cost of the conductive part 22, and further reducing the space occupied by the conductive part 22 in the housing 11 in the direction perpendicular to the first direction Z.

FIG. 9 is a diagram of various tab gathering solutions of the battery cell assembly 2 according to some embodiments of the present application. Referring to FIG. 9, in some embodiments, when the battery cell assembly 2 includes two electrode assemblies 2a, the tab plates 2211 of the two electrode assemblies 2a may be gathered together, and the gathering position is located at the center position between the two electrode assemblies 2a to form a symmetrical gathering form (for example, as shown in FIGs. 8 and 9(a)). Alternatively, in other embodiments, when the tab plates 2211 of the two electrode assemblies 2a are gathered together, the gathering position may also be closer to one of the electrode assemblies 2a to form an asymmetrical gathering form (for example, as shown in FIGs. 9(b) and 9(c)). In addition, the electrode assembly 2a may be in a full-tab form (for example, as shown in FIG. 9(a)) or a half-tab form (for example, as shown in FIGs. 8, 9(b), and 9(c)). Certainly, the tab plates 2211 of the same polarity of the two electrode assemblies 2a may not be gathered together. For example, the tab plates 2211 of each electrode assembly 2a are gathered individually according to the positive and negative electrodes, that is, the positive electrode tabs of one electrode assembly 2a are gathered individually, and the positive electrode tabs of another electrode assembly 2a are also gathered individually, which will not be described in detail herein.

As such, according to the specific position of the post terminal 12, the gathering form of the tab plates 2211 can be designed accordingly, so as to meet the requirements of the relative positional relationship between the tab plates 2211 and the post terminal 12. For example, when the post terminal 12 is centrally arranged relative to the housing 11, the tab plates 2211 may be arranged in a nearly symmetrical gathering form. For another example, when the post terminal 12 is eccentrically arranged relative to the housing 11, the tab plates 2211 may be arranged in a nearly asymmetrical gathering form. For yet another example, when the electrode assembly 2a is formed in a full-tab form, the orthographic projection of the first gathering part 2212 on the post terminal 12 in the first direction Z may be partially located within the range S of the outer contour of the post terminal 12. For still another example, when the electrode assembly 2a is formed in a half-tab form, the orthographic projection of the first gathering part 2212 on the post terminal 12 in the first direction Z may be partially or completely located within the range S of the outer contour of the post terminal 12.

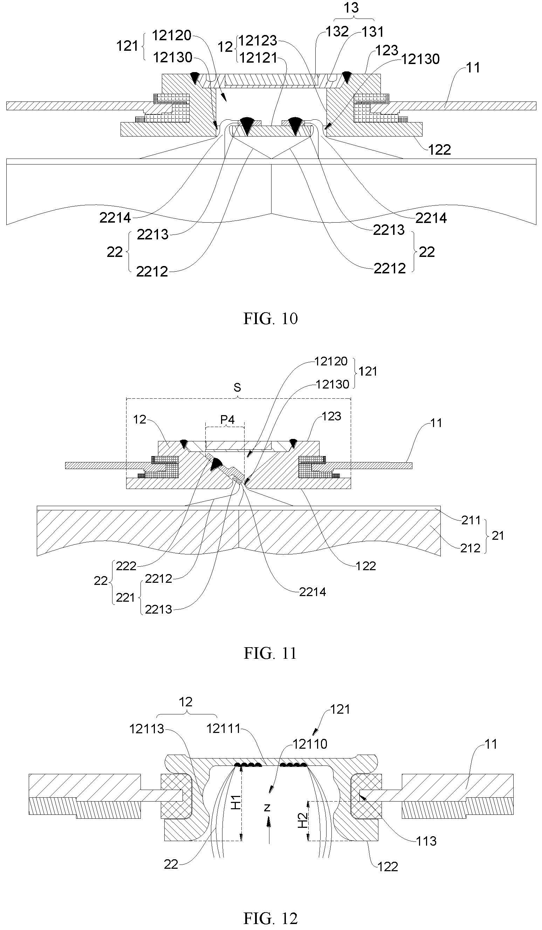

Specifically, one post terminal 12 may be connected to only one conductive part 22 (for example, as shown in FIGs. 5 and 7), or one post terminal 12 may be connected to a plurality of conductive parts 222 simultaneously (for example, as shown in FIG. 10, FIG. 10 is an orthographic projection view of the battery cell 10 according to some embodiments of the present application). In some optional embodiments of the present application, referring to FIG. 10, when one post terminal 12 is connected to a plurality of conductive parts 222 simultaneously, the orthographic projection P1 of the end part 2214 of the second gathering part 2213 of each conductive part 22 connected to the first gathering part 2212 on the post terminal 12 in the first direction Z is at least partially located within the range S of the outer contour of the post terminal 12. In the above technical solution, at least a part of the orthographic projection P1 of the end part 2214 of each conductive part 22 in the first direction Z is arranged within the range delineated by the orthographic projection contour of the post terminal 12 connected to the conductive part 22 in the first direction Z, thereby shortening the distance from the end part 2214 of each conductive part 22 to the post terminal 12 more fully and effectively, further reducing the length of the conductive part 22, further improving the reliability of the battery cell 10, and further reducing the space occupied by the conductive part 22 in the housing 11 in the direction perpendicular to the first direction Z.

Referring to FIGs. 5 and 6 again, in some embodiments of the present application, the orthographic projection of the end part 2214 of the second gathering part 2213 connected to the first gathering part 2212 on the post terminal 12 in the first direction Z can be centrally arranged relative to the post terminal 12. That is, when an orthographic projection is made onto a projection plane perpendicular to the first direction Z, the orthographic projection of the end part 2214 in the projection plane has an overlapping region with the central line L of the orthographic projection of the post terminal 12 in the projection plane. For example, the line figure formed by the projection of the above end part 2214 can be arranged to coincide with the central line of the length (that is, the central line extending in the length direction) of the projection of the post terminal 12.

Alternatively, in other embodiments of the present application, referring to FIG. 7 again, the orthographic projection P1 of the end part 2214 of the second gathering part 2213 connected to the first gathering part 2212 on the post terminal 12 in the first direction Z is eccentrically arranged relative to the post terminal 12. As such, the orthographic projection of the end part 2214 on the post terminal 12 in the first direction Z is eccentrically arranged relative to the post terminal 12, such that when an orthographic projection is made onto a projection plane perpendicular to the first direction Z, the orthographic projection P1 of the end part 2214 in the projection plane is offset from the central line L of the orthographic projection of the post terminal 12 in the projection plane, thereby increasing the area of a part of the post terminal 12 used for electrical connection to the conductive part 22, increasing the electrical connection area between the post terminal 12 and the conductive part 22, and thus improving the current passage capacity of the electrical connection, which is conducive to improving the charging efficiency. In addition, when one post terminal 12 is connected to a plurality of conductive parts 22 simultaneously, eccentrically arranging the orthographic projection of the end part 2214 on the post terminal 12 in the first direction Z relative to the post terminal 12 is conducive to fully utilizing the space of the post terminal 12 and reducing the connection difficulty between each conductive part 22 and the post terminal 12.

For example, when the tab plates 2211 are generally in the shape of a sheet after gathering, and the orthographic projection of the end part 2214 of the second gathering part 2213 connected to the first gathering part 2212 on the above projection plane is a line figure, the projection of the post terminal 12 on the projection plane may be a long strip figure with the length greater than the width, such as a rectangle, an ellipse, or a track shape. The line figure formed by the projection of the above end part 2214 can be arranged to be parallel to the central line of the length (that is, the central line extending in the length direction) of the projection of the post terminal 12, which can simply and effectively achieve the eccentric arrangement of the orthographic projection of the end part 2214 on the post terminal 12 in the first direction Z relative to the post terminal 12, and can fully utilize the space of the post terminal 12, which is conducive to the electrical connection to the conductive part 22.

In the embodiments of the present application, the second gathering part 2213 may be electrically connected to the post terminal 12 directly or indirectly. For example, referring to FIG. 10, when the second gathering part 2213 is electrically connected to the post terminal 12 directly, such as when the second gathering part 2213 is welded (such as laser-welded) to the post terminal 12, the structure of the battery cell assembly 2 can be simplified, thereby reducing the number of components, simplifying the assembly process, and improving the assembly efficiency. The method and position of direct electrical connection between the second gathering part 2213 and the post terminal 12 are not limited.

FIG. 11 is a partial cross-sectional schematic diagram of the battery cell 10 according to some embodiments of the present application. Referring to FIG. 11, in some embodiments, when the second gathering part 2213 is electrically connected to the post terminal 12 indirectly, the conductive part 22 may further include an adapting piece 222. The adapting piece 222 is configured to connect the second gathering part 2213 to the post terminal 12, that is, the adapting piece 222 is electrically connected to the second gathering part 2213, and the adapting piece 222 is electrically connected to the post terminal 12, such that the active substance-coated part 21 can be electrically connected to the post terminal 12 through the first gathering part 2212, the second gathering part 2213, and the adapting piece 222 in sequence. The electrical connection position of the conductive part 22 and the post terminal 12 is located on the adapting piece 222. For example, the electrical connection can be achieved by welding (for example, laser welding) the adapting piece 222 to the post terminal 12. In addition, the adapting piece 222 and the tab plate 2211 are two separate components and are connected by welding (such as ultrasonic welding) or the like. As such, by using the adapting piece 222 to achieve an indirect electrical connection between the second gathering part 2213 and the post terminal 12, the adapting piece 222 can be welded to the post terminal 12 at a part avoiding the second gathering part 2213, such that the welding between the adapting piece 222 and the post terminal 12 is more secure, the risk of welding cracking is low, and the reliability and stability of the battery cell 10 can be further improved. Meanwhile, by electrically connecting the post terminal 12 and the tab plates 2211 via the adapting piece 222, the configuration of the tab plates 2211 can also be simplified.

Referring to FIG. 11 again, in some embodiments, when the conductive part 22 includes the adapting piece 222, at least a part of the orthographic projection P4 of the adapting piece 222 on the post terminal 12 in the first direction Z may be located within the range S of the outer contour of the post terminal 12.

In the above technical solution, when an orthographic projection is made onto a projection plane perpendicular to the first direction Z, at least a part of the orthographic projection P4 of the adapting piece 222 in the projection plane is located within the range delineated by the orthographic projection contour of the post terminal 12 in the projection plane, thereby reducing the length of the adapting piece 222, reducing the cost and redundancy of the adapting piece 222, and thus reducing the redundancy and cost of the conductive part 22 more fully, which is conducive to further improving the reliability of the battery cell 10 and reducing the space occupied by the adapting piece 222 in the housing 11.

FIG. 12 is a partial cross-sectional schematic diagram of a battery cell according to some embodiments of the present application. In some embodiments of the present application, referring to FIG. 12, an accommodating part 121 is formed on at least one post terminal 12 on the housing 11. That is, the accommodating part 121 may be formed on all the post terminals 12 on the housing 11, or the accommodating part 121 may be formed on a part of the post terminals 12 on the housing 11. The post terminal 12 having the accommodating part 121 formed thereon may serve as a positive electrode post terminal or as a negative electrode post terminal, which is not limited herein. The accommodating part 121 is a hollow structure with an accommodating space, and may be a groove-shaped structure, a hole-shaped structure, or a composite structure of the groove-shaped structure and the hole-shaped structure.

Referring to FIG. 12, at least a part of the conductive part 22 is accommodated in the corresponding accommodating part 121. Here, "at least a part" means that the conductive part 22 may be completely accommodated in the accommodating part 121, or only a part of the conductive part 22 may be accommodated in the accommodating part 121. Since the post terminal 12 is provided with the accommodating part 121, the hollow structure of the accommodating part 121 can reduce the weight of the post terminal 12 to a certain extent, so as to improve the gravimetric energy density of the battery cell 10 and the battery 100.

Furthermore, the conductive part 22 is partially or completely accommodated in the accommodating part 121, such that a part of the conductive part 22 located in the accommodating part 121 can occupy the space in the post terminal 12, which can thereby reduce the space occupied by the conductive part 22 in the housing 11, and in the case of given dimensions of the housing 11, some space can be saved in the housing 11 to accommodate a larger active substance-coated part 21, thereby improving the volumetric energy density of the battery cell 10. For example, when the conductive part 22 is led out from a side of the active substance-coated part 21 proximal to the post terminal 12, the space occupied by the conductive part 22 between the active substance-coated part 21 and the post terminal 12 can be saved, such that the dimension of the active substance-coated part 21 in the direction in which the conductive part 22 is led out can be increased, and the spacing between the active substance-coated part 21 and the post terminal 12 can be reduced, thereby improving the energy density of the battery cell 10.

In addition, by accommodating at least a part of the conductive part 22 in the accommodating part 121, the space occupied by the battery cell 10 itself can be reduced, such that the battery 100 of a given volume can accommodate a larger number of battery cells 10, thereby further improving the volumetric energy density of the battery 100. In addition, by accommodating at least a part of the conductive part 22 in the accommodating part 121 to occupy the space in the post terminal 12, the redundancy of the conductive part 22 in the housing 11 can be reduced to at least a certain extent, the probability of short circuit between the conductive part 22 and the active substance-coated part 21 can be reduced, the probability of short circuit of the battery cell 10 can be reduced, and the working reliability and stability of the battery cell 10 and the battery 100 can be improved.

In addition, accommodating at least a part of the conductive part 22 in the accommodating part 121 is also conducive to stabilizing and limiting the conductive part 22 to improve the stability of the conductive part 22, thereby facilitating welding of the conductive part 22 to the post terminal 12 to improve the assembly efficiency. In addition, when the post terminal 12 having the accommodating part 121 formed thereon is located at the bottom of the housing 11 in the direction of gravity, the accommodating part 121 can be used to accommodate the electrolyte, thereby improving the cycle life of the battery cell 10.

Moreover, as the accommodating part 121 is provided on at least one post terminal 12, when the accommodating part 121 is located on a side of the post terminal 12 away from the active substance-coated part 21, a part of the conductive part 22 located in the accommodating part 121 can be welded to the post terminal 12 through the accommodating part 121 from the outside of the housing 11. When the accommodating part 121 is located on a side of the post terminal 12 facing the active substance-coated part 21, the local wall thickness at a part of the post terminal 12 corresponding to the accommodating part 121 is reduced, such that a part of the conductive part 22 accommodated in the accommodating part 121 can be welded to the post terminal 12 at the thinned part from the outside of the housing 11. Therefore, even if the length of a part of the conductive part 22 located in the housing 11 is small, as the conductive part 22 and the post terminal 12 can be welded from the outside of the housing 11, the welding of the conductive part 22 and the post terminal 12 is convenient and the welding reliability of the conductive part 22 and the post terminal 12 can be improved.

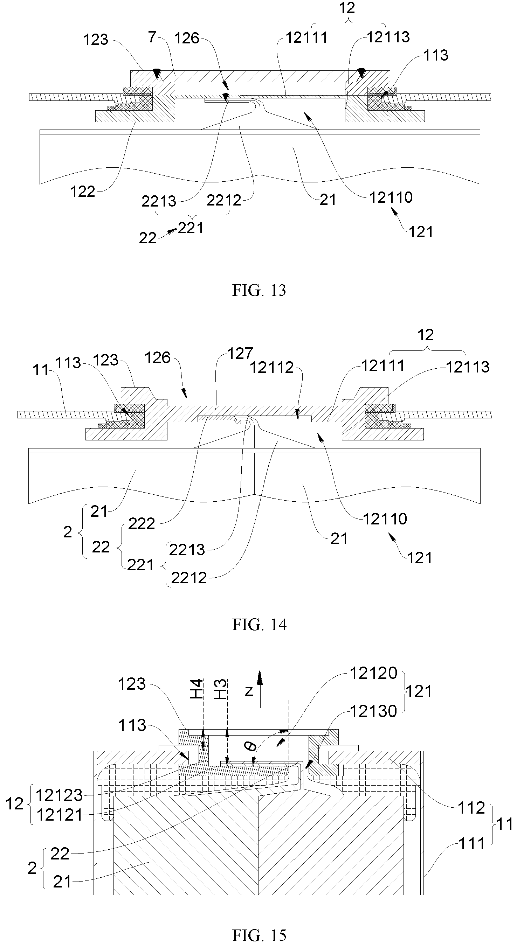

FIG. 13 is a partial cross-sectional schematic diagram of a battery cell according to some embodiments of the present application, and FIG. 14 is a partial cross-sectional schematic diagram of a battery cell according to some embodiments of the present application. Referring to FIGs. 13 and 14, in some embodiments of the present application, whether the second gathering part 2213 is electrically connected to the post terminal 12 directly or indirectly, at least a part of the second gathering part 2213 may be accommodated in the accommodating part 121. In the above technical solution, by accommodating at least a part of the second gathering part 2213 in the accommodating part 121, the space in the post terminal 12 can be more fully utilized, and the space occupied by the conductive part 22 in the housing 11 can be further reduced, so as to improve the volumetric energy density of the battery cell 10.

Referring to FIG. 14 again, in some embodiments, when the conductive part 22 includes an adapting piece 222 configured to connect the second gathering part 2213 to the post terminal 12, at least a part of the adapting piece 222 may be accommodated in the accommodating part 121 whether or not the second gathering part 2213 is at least partially accommodated in the accommodating part 121. In the above technical solution, by accommodating at least a part of the adapting piece 222 in the accommodating part 121, the space in the post terminal 12 can be more fully utilized, and the space occupied by the conductive part 22 in the housing 11 can be further reduced, so as to improve the volumetric energy density of the battery cell 10.

Referring to FIGs. 13 and 14 again, in some embodiments, at least a part of the first gathering part 2212 may also be accommodated in the accommodating part 121. In the above technical solution, by accommodating at least a part of the first gathering part 2212 in the accommodating part 121, the space in the post terminal 12 can be further utilized, and the space occupied by the conductive part 22 in the housing 11 can be reduced more effectively, so as to improve the volumetric energy density of the battery cell 10.

Certainly, there may be at least one post terminal 12 without an accommodating part 121. For example, referring to FIG. 7, when a post terminal 12 without an accommodating part 121 is provided on the housing 11, a clearance groove 18 may be provided between the post terminal 12 and the housing 11 as required, such that at least a part of the conductive part 22 is accommodated in the clearance groove 18. As such, the space occupied by the conductive part 22 in the housing 11 can also be reduced to a certain extent, which is conducive to improving the energy density and mitigating problems such as short circuit caused by the redundancy of the conductive part 22. In order to simplify the description, the description is only made with all the post terminals 12 being provided with the accommodating parts 121 as an example.

In the embodiments of the present application, the accommodating part 121 may be located on either a side of the post terminal 12 facing the active substance-coated part 21 or a side of the post terminal 12 away from the active substance-coated part 21. Illustratively, referring to FIGs. 12-14, when the accommodating part 121 is located on the side of the post terminal 12 facing the active substance-coated part 21, the accommodating part 121 is provided with a first accommodating groove 12110, and the surface of the post terminal 12 facing the active substance-coated part 21 is the post terminal inner end surface 122. The opening of the first accommodating groove 12110 is formed on the post terminal inner end surface 122, and at least a part of the conductive part 22 is accommodated in the first accommodating groove 12110.

Illustratively, the first accommodating groove 12110 is a groove body, and the groove body is a groove-shaped structure of a certain depth. For example, when the post terminal 12 is arranged on the upper end wall of the housing 11 and the post terminal inner end surface 122 is the lower surface of the post terminal 12, the first accommodating groove 12110 is formed as an accommodating groove with an opening open downward and a groove wall recessed upward. For another example, when the post terminal 12 is arranged on the lower end wall of the housing 11 and the post terminal inner end surface 122 is the upper surface of the post terminal 12, the first accommodating groove 12110 is formed as an accommodating groove with an opening open upward and a groove wall recessed downward.

In the above technical solution, in one aspect, the provision of the first accommodating groove 12110 on the post terminal 12 can reduce the weight of the post terminal 12 to a certain extent, so as to improve the gravimetric energy density of the battery cell 10 and the battery 100. In another aspect, as the opening of the first accommodating groove 12110 is formed on the post terminal inner end surface 122 and the post terminal inner end surface 122 is the surface of the post terminal 12 on a side proximal to the active substance-coated part 21, the first accommodating groove 12110 can be open in a direction toward the active substance-coated part 21, thereby facilitating the conductive part 22 to extend into the first accommodating groove 12110 and improving the assembly efficiency. Moreover, the first accommodating groove 12110 in this type facilitates processing and thus improves production efficiency.

Furthermore, it is easy to process the first accommodating groove 12110 to have a relatively large volume, such that more conductive parts 22 can be accommodated. Meanwhile, since the first accommodating groove 12110 is open toward the active substance-coated part 21, the first accommodating groove 12110 can also serve as a buffering and temporary storage structure for the electrolyte, such that more electrolyte can be accommodated in the housing 11. As the electrolyte will be consumed during the charging and discharging processes of the battery cell 10, a greater amount of electrolyte can prolong the service life of the battery cell 10. Also, since the first accommodating groove 12110 is open toward the active substance-coated part 21, the first accommodating groove 12110 can also serve as an accommodating and buffering structure for gases produced in the battery cell assembly 2, reducing the expansion of the battery cell 10 and improving the reliability and stability of the battery cell 10.

In addition, as the first accommodating groove 12110 is located on the inner side of the post terminal 12, external foreign matters and impurities can hardly enter the first accommodating groove 12110, thereby reducing the impact of external foreign matters and impurities on the battery cell assembly 2, improving the stability and reliability of the battery cell assembly 2, and further improving the stability and reliability of the battery cell 10 and the battery 100.

Referring to FIG. 12 again, in the embodiments of the present application, the method for connecting the post terminal 12 to the housing 11 is not limited. For example, the method may be welding or riveting. For example, when the post terminal and the housing are fitted by riveting, the housing 11 is provided with a mounting hole 113, and the post terminal 12 is mounted by riveting at the mounting hole 113. Certainly, it can be understood that when the post terminal and the housing are fitted by welding or other methods, the housing 11 may also be provided with a mounting hole 113 to facilitate the post terminal 12 to be mounted on the housing 11 through the mounting hole 113, which is not limited herein. Meanwhile, the first accommodating groove 12110 can be provided corresponding to the position of the mounting hole 113, or in other words, on a projection plane perpendicular to the first direction Z, the orthographic projection of the first accommodating groove 12110 is located within the range of the orthographic projection of the mounting hole 113, such that the first accommodating groove 12110 can have a large depth to accommodate more conductive parts 22, thereby reducing the space occupied by the conductive parts 22 in the housing 11 to a greater extent.

Specifically, when the housing 11 is provided with the mounting hole 113 and the post terminal 12 is mounted in the mounting hole 113, in the first direction Z, the depth H1 of the first accommodating groove 12110 is greater than or equal to the minimum distance H2 from the post terminal inner end surface 122 to the mounting hole 113.

It should be noted that the specific shape of the first accommodating groove 12110 is not limited, and may be a regular shape or an irregular shape, for example, a columnar groove of constant cross-section with a rectangular, elliptical, or track-shaped cross-section (a structure defined by two arcs and two straight lines in an enclosing manner), a trapezoidal groove with a rectangular cross-section and a gradually changing cross-sectional dimension, a hemispherical groove with a circular cross-section and a gradually changing cross-sectional dimension, a semi-ellipsoidal groove with an elliptical cross-section and a gradually changing cross-sectional dimension, or the like. Therefore, the depth H1 of the first accommodating groove 12110 refers to: the maximum depth of the first accommodating groove 12110 in the first direction Z.

As the depth H1 of the first accommodating groove 12110 in the first direction Z is greater than or equal to the minimum distance H2 from the post terminal inner end surface 122 to the mounting hole 113, the volume of the post terminal 12 can be fully utilized, such that the first accommodating groove 12110 has a large depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. Meanwhile, due to the large depth, the first accommodating groove 12110 can accommodate the gases produced by the battery cell assembly 2 to ensure the reliability and stability of the battery cell 10, and can also accommodate more electrolyte to ensure the service life of the battery cell 10.

It should be further noted that the volume of the first accommodating groove 12110 is not limited. For example, in some specific examples, the volume of the first accommodating groove 12110 that can be used for accommodating the conductive part 22 (referred to as a first volume V1) may be greater than or equal to 298 mm³, such that the first accommodating groove 12110 may have sufficient space to accommodate the conductive part 22 and facilitate welding of the conductive part 22 to the post terminal 12. However, when the first volume V1 of the first accommodating groove 12110 is less than 298 mm³, the accommodating capacity of the first accommodating groove 12110 for the conductive part 22 is relatively weakened, and the welding difficulty of the conductive part 22 with the post terminal 12 is increased.

In addition, it is worth noting that the first volume V1 of the first accommodating groove 12110 is: the difference between the total volume V2 of the first accommodating groove 12110 and the volume of other components required to be accommodated by the first accommodating groove 12110 except the conductive part 22 (referred to as a second volume V3), that is, V1 = V2 - V3. It can be understood that when the first accommodating groove 12110 does not need to accommodate other components except the conductive part 22, the second volume V3 may be 0 mm³. For example, the first volume V1 of the first accommodating groove 12110 may be 300 mm³-1500 mm³, for example, 300 mm³, 400 mm³, 500 mm³, 600 mm³, 700 mm³, 800 mm³, 1000 mm³, 1200 mm³, 1400 mm³, 1500 mm³, or the like.

Referring to FIGs. 12 and 13 again, in order to ensure the stability and reliability of the electrical connection between the active substance-coated part 21 and the post terminal 12, in the embodiments of the present application, the electrical connection position of the conductive part 22 and the post terminal 12 may be located on the groove wall of the first accommodating groove 12110. Illustratively, the conductive part 22 and the post terminal 12 may be electrically connected by welding, and the electrical connection position is the welding position of the conductive part 22 and the post terminal 12. Meanwhile, the welding method for the conductive part 22 and the post terminal 12 is not limited, which may be laser welding, for example. Moreover, depending on factors such as the position, angle, or structure of the welding part, vertical welding or inclined welding, and overlap welding or edge sealing welding can be selected. In other embodiments of the present application, the conductive part 22 and the post terminal 12 may be electrically connected by other means instead of welding, such as by providing conductive adhesive or conductive nails. In order to simplify the description, the following description will take an example that the conductive part 22 is welded to the post terminal 12 to form an electrical connection, and that the welding position is the electrical connection position of the conductive part 22 and the post terminal 12.

Specifically, the post terminal 12 includes a first end wall 12111 and a first side wall 12113, the first end wall 12111 is located on a side of the first side wall 12113 distal to the active substance-coated part 21, the first end wall 12111 and the first side wall 12113 define, in an enclosing manner, the first accommodating groove 12110, and the electrical connection position of the conductive part 22 and the post terminal 12 is located on the first end wall 12111 and/or the first side wall 12113. That is, the conductive part 22 may be welded to at least one of the first end wall 12111 and the first side wall 12113.

In the above technical solution, by arranging the electrical connection position of the conductive part 22 and the post terminal 12 on at least one of the first end wall 12111 and the first side wall 12113, not only does the first accommodating groove 12110 have a function of accommodating at least a part of the conductive part 22, but also the groove wall of the first accommodating groove 12110 has a function of achieving an electrical connection to the conductive part 22, which can simplify the structure of the post terminal 12, facilitate processing of the post terminal 12, simplify the structure of the conductive part 22, reduce the redundancy of the conductive part 22, and reduce the cost of the conductive part 22. Moreover, utilizing the groove wall of the first accommodating groove 12110 to achieve the electrical connection to the conductive part 22 can allow a relatively large region of the electrical connection between the conductive part 22 and the post terminal 12, which not only reduces the difficulty of electrical connection, but also improves the reliability and stability of the electrical connection, thereby improving the performance of the battery cell 10.

In addition, since the electrical connection position of the conductive part 22 and the post terminal 12 is located in the first accommodating groove 12110, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

In addition, in the embodiments of the present application, the first end wall 12111 is configured as a closed structure without any perforations, such that the first accommodating groove 12110 is isolated from the space outside the housing 11, thereby avoiding the problem of electrolyte in the housing 11 leaking from the first accommodating groove 12110.

Referring to FIGs. 12 and 13 again, in the embodiments of the present application, a local shape of the conductive part 22 matches a local shape of the first end wall 12111, and the conductive part and the first end wall are arranged in a fitting manner and electrically connected, such that the electrical connection position of the conductive part 22 and the first end wall 12111 extends in the length or width direction of the first end wall 12111. For example, when the first end wall 1211 1 is flat, a part of the conductive part 22 may also be flat and fitted to the first end wall 12111, and the fitted position is electrically connected, such as welded. As such, the area of the electrical connection can be increased, and the reliability and stability of the electrical connection can be improved.

In addition, when the electrical connection between the conductive part 22 and the first end wall 12111 is welding, since the first end wall 12111 is located on a side of the first accommodating groove 12110 distal to the active substance-coated part 21, it is convenient to perform a welding operation. For example, welding may be performed from a side of the post terminal 12 distal to the active substance-coated part 21.

It is worth noting that the shape of the first end wall 12111 is not limited. For example, the first end wall may be of a flat plate shape or an arc plate shape. When the first end wall 12111 is of a flat plate structure, the first end wall 12111 is arranged at an included angle to the first direction Z. For example, the first end wall may be of a flat plate structure perpendicular to the first direction Z, or an inclined plate structure that is not perpendicular to the first direction Z, but the inclination direction is not limited.

Certainly, in other embodiments of the present application, the electrical connection position of the conductive part 22 and the first end wall 12111 may not extend in the length or width direction of the first end wall 12111, and may be, for example, a plurality of discretely arranged spots. For example, the conductive part 22 is provided with a plurality of parts that are spaced apart from each other and separately welded to the first end wall 12111, which will not be described in detail herein.

Referring to FIG. 14 again, in the embodiments of the present application, when the conductive part 22 is electrically connected to the first end wall 12111, a first recess 12112 may be provided on the first end wall 12111. The sinking direction of the first recess 12112 is a direction away from the active substance-coated part 21. At least a part of the electrical connection position between the conductive part 22 and the first end wall 12111 is located in the first recess 12112. Illustratively, at least a part of the conductive part 22 may be arranged in the first recess 12112 and connected to a part of the first end wall 12111 for defining the first recess 12112.

In the above technical solution, in one aspect, the first recess 12112 can be used to achieve the pre-positioning and limiting of the electrical connection position of the conductive part 22, which is not only conducive to accurately finding the position to achieve the electrical connection and improve the production efficiency, but also conducive to improving the stability and reliability of the conductive part 22 and ensuring the stability and reliability of the battery cell 10 during the charging and discharging processes. In another aspect, by arranging the first recess 12112 on the first end wall 12111, the local wall thickness of the first end wall 12111 can be locally reduced, which is not only conducive to welding, but also conducive to reducing the weight of the post terminal 12 and improving the gravimetric energy density of the battery cell 10.

In some optional embodiments, a part of the conductive part 22 matches the first side wall 12113 in shape and is arranged in a fitting manner. For example, when the first side wall 12113 is a curved surface, a part of the conductive part 22 may also be a curved surface and fitted to the first side wall 12113, and the fitted position may be electrically connected (e.g., welded), such that the electrical connection position of the conductive part 22 and the first side wall 12113 extends along the first side wall 12113. As such, the area of the electrical connection can be increased, thereby improving the reliability and stability of the electrical connection.

Certainly, in other embodiments of the present application, the electrical connection position of the conductive part 22 and the first side wall 12113 may not extend along the first side wall 12113, and may be, for example, a plurality of discretely arranged spots. For example, the conductive part 22 is provided with a plurality of parts that are spaced apart from each other and separately welded to the first side wall 12113, which will not be described in detail herein.

It should be noted that the number of first side walls 12113 is not limited and may be determined according to the shape of the first accommodating groove 12110, as long as one end of each first side wall 12113 distal to the opening of the first accommodating groove 12110 is connected to the first end wall 12111. Illustratively, when the cross-sectional shape of the first accommodating groove 12110 is circular or elliptical, the first end wall 12111 is circular or elliptical. The number of the first side wall 12113 is one, and the first side wall is annular and arranged around the circumferential edge of the first end wall 12111. Further illustratively, when the cross-sectional shape of the first accommodating groove 12110 is rectangular or track-shaped, the first end wall 12111 is rectangular or track-shaped. The number of the first side walls 12113 is four, and the first side walls are separately connected to four sides of the first end wall 12111.

It should be further noted that the first accommodating groove 12110 is not limited to the form defined by the first end wall 12111 and the first side wall 12113. For example, in some embodiments, the first end wall 12111 may not exist. In this case, one end of each first side wall 12113 distal to the opening of the first accommodating groove 12110 converges together, such that the first accommodating groove 12110 is defined only by a plurality of first side walls 12113. In this case, the conductive part 22 may be electrically connected to the first side wall 12113 to ensure normal charging and discharging processes of the battery cell 10.

In addition, it is worth noting that in other embodiments of the present application, the electrical connection position of the conductive part 22 and the post terminal 12 may not be located in the first accommodating groove 12110. For example, the electrical connection position of the conductive part 22 and the post terminal 12 may also be located on the post terminal inner end surface 122. In this case, a part of the conductive part 22 is accommodated in the first accommodating groove 12110, which can also save space to a certain extent to improve the energy density of the battery cell 10.

Referring to FIGs. 13 and 14 again, in the embodiments of the present application, the post terminal 12 may also be provided with a first groove 126 as required. The first groove 126 is located on a side of the post terminal 12 distal to the active substance-coated part 21, that is, the surface of the post terminal 12 on a side distal to the active substance-coated part 21 is the post terminal outer end surface 123, and the opening of the first groove 126 is formed on the post terminal outer end surface 123.

It can be understood that the first groove 126 is a groove body, and the groove body is a groove-shaped structure of a certain depth. Furthermore, when the post terminal 12 is arranged on the upper end wall of the housing 11 and the post terminal outer end surface 123 is the upper surface of the post terminal 12, the first groove 126 is formed as a groove with an opening open upward and a groove wall recessed downward (that is, recessed in a square shape close to the battery cell assembly 2). For another example, when the post terminal 12 is arranged on the lower end wall of the housing 11 and the post terminal outer end surface 123 is the lower surface of the post terminal 12, the first groove 126 is formed as a groove with an opening open downward and a groove wall recessed upward (that is, recessed in a square shape close to the battery cell assembly 2).

In the above technical solution, in one aspect, since the post terminal 12 is provided with the first groove 126, the weight of the post terminal 12 can be further reduced, such that the gravimetric energy density of the battery cell 10 and the battery 100 can be improved. In another aspect, the first groove 126 is located on the outer side of the post terminal 12, that is, the first groove is open to a side of the post terminal 12 away from the interior of the housing 11, and the first groove 126 can be used for accommodating or mounting structural components of the battery 100 that electrically connect various battery cells 10, so as to make full use of the space in the post terminal 12, thereby improving the space utilization and volumetric energy density of the battery 100.

In addition, since the post terminal 12 is provided with both the first accommodating groove 12110 and the first groove 126, the first groove 126 is located on a side of the first accommodating groove 12110 distal to the active substance-coated part 21, and the first groove 126 is open in a direction away from the first accommodating groove 12110, the conductive part 22 can be laser-welded to the first end wall 12111 through the first groove 126 from the outside of the post terminal 12, that is, a side of the post terminal 12 distal to the active substance-coated part 21, so as to facilitate the electrical connection between the conductive part 22 and the post terminal 12 through external welding. That is, the above structural arrangement can facilitate external welding of the post terminal 12 to the conductive part 22 through the first groove 126, which facilitates the processing and manufacture of the battery cell 10 and can save processing and manufacturing costs.

Further, in order to conveniently and effectively weld the conductive part 22 to the groove wall of the first accommodating groove 12110 through the first groove 126, and improve the welding reliability of the conductive part 22 and the groove wall of the first accommodating groove 12110, in the embodiments of the present application, a part between the first groove 126 and the first accommodating groove 12110 can be laser-welded to the conductive part 22, that is, a spacer part 127 shown in FIG. 14 can be laser-welded to the conductive part 22 to achieve an electrical connection between the battery cell assembly 2 and the post terminal 12. The spacer part 127 of the post terminal 12 located between the first groove 126 and the first accommodating groove 12110 is thin. The spacer part 127 isolates the first groove 126 from the first accommodating groove 12110. A wall surface of the spacer part 127 on a side proximal to the active substance-coated part 21 can be used as the first end wall 12111. When the conductive part 22 needs to be welded to the first end wall 12111, since the spacer part 127 is thin, the welding of the conductive part 22 to the first end wall 12111 can be achieved through the first groove 126, thereby improving the convenience and reliability of welding.

In some embodiments, the first accommodating groove 12110 may be configured into a shape in which the length of the cross-section is greater than the width, such as a rectangle, an ellipse, or a track shape. The weld mark formed by welding the conductive part 22 to the post terminal 12 may be a long strip-shaped weld mark parallel to the length direction of the first accommodating groove 12110, so as to improve the welding reliability and increase the current passage performance. Illustratively, when the conductive part 22 is welded to the first end wall 12111 to form a weld mark as a long strip-shaped weld mark, the width of the weld mark may be greater than or equal to 6 mm, and the distance between the weld mark and the first side wall 12113 may be greater than or equal to 1 mm, so as to ensure the current passage capacity of the battery cell 10 while ensuring the convenience and reliability of welding.

Referring to FIGs. 13 and 14 again, further, the housing assembly 1 may further include a groove cover 7. The groove cover 7 is arranged on the post terminal 12 and closes the opening of the first groove 126.

In the above technical solution, by providing the groove cover 7 that closes the first groove 126, the post terminal 12 can be electrically connected to the busbar component indirectly through the groove cover 7. The electrical connection between the groove cover 7 and the busbar component can be more convenient and the electrical connection area can be larger through the arrangement of the position and structure of the groove cover 7. As such, arranging the groove cover 7 can facilitate the electrical connection between adjacent battery cells 10 in the battery 100, and since the electrical connection position of the battery cells 10 is located at the groove cover 7, which can be separated from the electrical connection position of the conductive part 22 and the post terminal 12 by the first groove 126, there is less interference between the two, which can further improve the stability and reliability of the battery cell 10.

It should be noted that, based on the solution that the accommodating part 121 is provided with the first accommodating groove 12110, the specific structure of the battery cell assembly 2 in the embodiments of the present application is not limited. For example, the battery cell assembly may include but is not limited to the following two embodiments.

Referring to FIGs. 12-14, in the first embodiment, when the accommodating part 121 is provided with the first accommodating groove 12110, at least a part of the second gathering part 2213 may be accommodated in the first accommodating groove 12110.

In the above technical solution, as the tab part 221 includes the second gathering part 2213 formed by the convergence and connection of a plurality of tab plates 2211, at least a part of the second gathering part 2213 is accommodated in the first accommodating groove 12110, which facilitates the connection between the conductive part 22 and the post terminal 12, and can fully utilize the space of the post terminal 12, thereby improving the volumetric energy density of the battery cell 10.

Referring to FIGs. 13 and 14, in the first embodiment, at least a part of the first gathering part 2212 is accommodated in the first accommodating groove 12110. In the above technical solution, at least a part of the first gathering part 2212 and at least a part of the second gathering part 2213 of the tab part 221 are both accommodated in the first accommodating groove 12110, such that the space in the post terminal 12 can be more fully utilized, and the space occupied by the tab part 221 in the housing 11 can be further reduced, so as to accommodate a larger active substance-coated part 21, thereby improving the volumetric energy density of the battery cell 10. Moreover, the redundancy of the tab part 221 in the housing 11 can be better reduced, and the probability of short circuit between the tab part 221 and the active substance-coated part 21 can be further reduced.

In this embodiment, the second gathering part 2213 is electrically connected to the post terminal 12 directly or indirectly. For example, referring to FIG. 13, when the second gathering part 2213 is electrically connected to the post terminal 12 directly, such as when the second gathering part 2213 is welded (such as laser-welded) to the post terminal 12, the structure of the battery cell assembly 2 can be simplified, thereby reducing the number of components, simplifying the assembly process, and improving the assembly efficiency. The method and position of direct electrical connection between the second gathering part 2213 and the post terminal 12 are not limited. For example, the electrical connection position of the second gathering part 2213 and the post terminal 12 may be located on the first end wall 12111 and/or the first side wall 12113. Further, the electrical connection position of the second gathering part 2213 and the first end wall 12111 may extend in the length direction or the width direction of the first end wall 12111. Yet further, the first end wall 12111 is provided with the first recess 12112, and the electrical connection position of the second gathering part 2213 and the first end wall 12111 may be located in the first recess 12112, and the like. The corresponding technical effects can refer to the introduction of the above embodiments and will not be described in detail herein.

As an optional solution, the conductive part 22 may also be provided with an adapting piece 222 as required. In this case, the second gathering part 2213 is electrically connected to the post terminal 12 indirectly. Specifically, referring to FIG. 14, when the conductive part 22 includes the adapting piece 222, at least a part of the adapting piece 222 is accommodated in the first accommodating groove 12110. In this example, at least a part of the second gathering part 2213 is also accommodated in the first accommodating groove 12110, but the first gathering part 2212 may be accommodated in the first accommodating groove 12110 or may not be accommodated in the first accommodating groove 12110.

In the above technical solution, by accommodating at least a part of the second gathering part 2213 and at least a part of the adapting piece 222 in the first accommodating groove 12110, the space in the post terminal 12 can be more fully utilized, and the space occupied by the conductive part 22 in the housing 11 can be further reduced, so as to improve the volumetric energy density of the battery cell 10. When at least a part of the first gathering part 2212, at least a part of the second gathering part 2213, and at least a part of the adapting piece 222 are all accommodated in the first accommodating groove 12110, the space in the post terminal 12 can be further utilized, and the space occupied by the conductive part 22 in the housing 11 can be more effectively reduced, so as to further improve the volumetric energy density of the battery cell 10.

The method and position of direct electrical connection between the adapting piece 222 and the post terminal 12 are not limited. For example, the adapting piece 222 is electrically connected to the post terminal 12 by welding. For example, the electrical connection position of the adapting piece 222 and the post terminal 12 may be located on the first end wall 12111 and/or the first side wall 12113. Further, the electrical connection position of the adapting piece 222 and the first end wall 12111 may extend in the length direction or the width direction of the first end wall 12111. Yet further, the first end wall 12111 is provided with the first recess 12112, and the electrical connection position of the adapting piece 222 and the first end wall 12111 may be located in the first recess 12112, and the like. The corresponding technical effects can refer to the introduction of the above embodiments and will not be described in detail herein. When the electrical connection position of the adapting piece 222 and the post terminal 12 is located on the first end wall 12111 and/or the first side wall 12113, since at least a part of the adapting piece 222 is accommodated in the first accommodating groove 12110, the structure of the adapting piece 222 can be simplified, thereby reducing the redundancy and lowering the costs.

Referring to FIG. 14, in the second embodiment, the conductive part 22 includes an adapting piece 222 configured to electrically connect the second gathering part 2213 to the post terminal 12, the accommodating part 121 is provided with a first accommodating groove 12110, and at least a part of the adapting piece 222 is accommodated in the first accommodating groove 12110.

In the above technical solution, compared with the solution including the adapting piece 222 in the first embodiment, in the second embodiment, at least a part of the adapting piece 222 is accommodated in the first accommodating groove 12110, but the relative positions of the tab part 221 and the first accommodating groove 12110 are not limited, that is, at least a part of the tab part 221 may be accommodated in the first accommodating groove 12110, and the tab part 221 may also be completely located outside the first accommodating groove 12110, thereby meeting different structural design requirements.

In the above technical solution, by accommodating at least a part of the adapting piece 222 in the first accommodating groove 12110, the adapting piece 222 can occupy the space in the post terminal 12, such that the space occupied by the adapting piece 222 in the housing 11 can be reduced, so as to accommodate a larger active substance-coated part 21, thereby improving the volumetric energy density of the battery cell 10. Moreover, the probability of short circuit between the adapting piece 222 and the active substance-coated part 21 can be reduced, and the risk of short circuit of the battery cell assembly 2 can be reduced, thereby improving the stability and reliability of the battery cell 10.

In addition, by using the adapting piece 222 to achieve an indirect electrical connection between the second gathering part 2213 and the post terminal 12, the adapting piece 222 can be welded to the post terminal 12 at a part avoiding the second gathering part 2213, such that the welding between the adapting piece 222 and the post terminal 12 is secure, the risk of welding cracking is low, and the reliability and stability of the battery cell 10 can be further improved. Meanwhile, by electrically connecting the post terminal 12 and the tab plates 2211 via the adapting piece 222, the configuration of the tab plates 2211 can also be simplified.

Illustratively, in some optional embodiments, for example, in the first embodiment above or the third embodiment below, when the second gathering part 2213 is electrically connected to the post terminal 12 directly, the conductive part 22 may be composed only of the positive electrode tab and the negative electrode tab in each electrode assembly 2a. For example, in other embodiments, for example, in the first or second embodiment above or the third or fourth embodiment below, when the second gathering part 2213 is electrically connected to the post terminal 12 indirectly via the adapting piece 222, the conductive part 22 may be composed simultaneously of the positive electrode tab and the negative electrode tab in each electrode assembly 2a and each adapting piece 222.

It should be noted that the accommodating part 121 in the embodiments of the present application is not limited to having the form of the first accommodating groove 12110. For example, other optional embodiments will be given later.

Illustratively, FIG. 15 is a partial cross-sectional schematic diagram of the battery cell 10 according to some embodiments of the present application. Referring to FIG. 15, in the embodiments of the present application, the accommodating part 121 may also be arranged to include a second accommodating groove 12120. The surface of the post terminal 12 on a side distal to the active substance-coated part 21 is the post terminal outer end surface 123. An opening of the second accommodating groove 12120 is formed on the post terminal outer end surface 123. The second accommodating groove 12120 is in communication with the interior of the housing 11 through a first perforation 12130. The conductive part 22 is provided in the first perforation 12130 in a penetrating manner and is at least partially accommodated in the second accommodating groove 12120.

It can be understood that the second accommodating groove 12120 is a groove body, and the groove body is a groove-shaped structure of a certain depth. For example, when the post terminal 12 is arranged on the upper end wall of the housing 11 and the post terminal outer end surface 123 is the upper surface of the post terminal 12, the second accommodating groove 12120 is formed as an accommodating groove with an opening open upward and a groove wall recessed downward. For another example, when the post terminal 12 is arranged on the lower end wall of the housing 11 and the post terminal outer end surface 123 is the lower surface of the post terminal 12, the second accommodating groove 12120 is formed as an accommodating groove with an opening open downward and a groove wall recessed upward.

In the above technical solution, referring to FIG. 15, in one aspect, the arrangement of the second accommodating groove 12120 on the post terminal 12 can reduce the weight of the post terminal 12 to a certain extent, so as to improve the gravimetric energy density of the battery cell 10 and the battery 100. In another aspect, since the opening of the second accommodating groove 12120 is formed on the post terminal outer end surface 123 and the post terminal outer end surface 123 is the surface of the post terminal 12 on a side distal to the active substance-coated part 21, the second accommodating groove 12120 can be open in a direction away from the active substance-coated part 21. In this way, when at least a part of the conductive part 22 is accommodated in the second accommodating groove 12120, the accommodation and arrangement of the conductive part 22 can be easily achieved through the opening of the second accommodating groove 12120, and the electrical connection operation between the conductive part 22 and the post terminal 12 can be easily achieved through the opening of the second accommodating groove 12120, etc., thereby reducing the difficulty in producing the battery cell 10 and improving the production efficiency of the battery cell 10.

Meanwhile, since the second accommodating groove 12120 can be in communication with the interior of the housing 11 through the first perforation 12130, the second accommodating groove 12120 can also serve as a buffering and temporary storage structure for the electrolyte, such that a larger number of electrolyte can be accommodated in the housing 11. As the electrolyte will be consumed during the charging and discharging processes of the battery cell 10, a greater amount of electrolyte can prolong the service life of the battery cell 10. It is also due to the fact that the second accommodating groove 12120 can be in communication with the interior of the housing 11 through the first perforation 12130, that the second accommodating groove 12120 can also serve as an accommodating and buffering structure for gas produced in the battery cell assembly 2, reducing the expansion of the battery cell 10 and improving the reliability and stability of the battery cell 10.

It is worth noting that when the accommodating part 121 is provided with the second accommodating groove 12120 and the conductive part 22 is provided in the first perforation 12130 in a penetrating manner and is at least partially accommodated in the second accommodating groove 12120, the electrical connection position of the conductive part 22 and the post terminal 12 is not limited.

Illustratively, when the conductive part 22 is provided in the first perforation 12130 in a penetrating manner and is at least partially accommodated in the second accommodating groove 12120, in the embodiments of the present application, the electrical connection position of the conductive part 22 and the post terminal 12 is located on the wall of the first perforation 12130 formed on the post terminal 12.

In the above technical solution, the arrangement of the electrical connection position of the conductive part 22 and the post terminal 12 on the wall of the first perforation 12130 facilitates the electrical connection operation between the conductive part 22 and the post terminal 12 through the second accommodating groove 12120. In addition, when the electrical connection area between the conductive part 22 and the post terminal 12 is large, the sealing of the first perforation 12130 can be achieved by utilizing the electrical connection between the conductive part 22 and the post terminal 12, so as to save sealing costs, reduce electrolyte leakage, and save sealing parts.

Specifically, the conductive part 22 may be welded to the wall of the first perforation 12130 at a position of the first perforation 12130 connected to the second accommodating groove 12120, so as to facilitate the operation. In addition, by controlling a weld mark, the first perforation 12130 can be sealed by utilizing the weld mark and the conductive part 22, so as to mitigate the problem of the electrolyte in the housing 11 leaking from the first perforation 12130.

Still illustratively, when the conductive part 22 is provided in the first perforation 12130 in a penetrating manner and is at least partially accommodated in the second accommodating groove 12120, in other embodiments of the present application, the electrical connection position of the conductive part 22 and the post terminal 12 may also be located on the groove wall of the second accommodating groove 12120 formed on the post terminal 12. As such, the electrical connection operation is facilitated. For example, when the conductive part 22 is welded to the groove wall of the second accommodating groove 12120 formed on the post terminal 12, the conductive particles generated by welding can be prevented from entering the housing 11, which may otherwise cause short circuit and other problems.

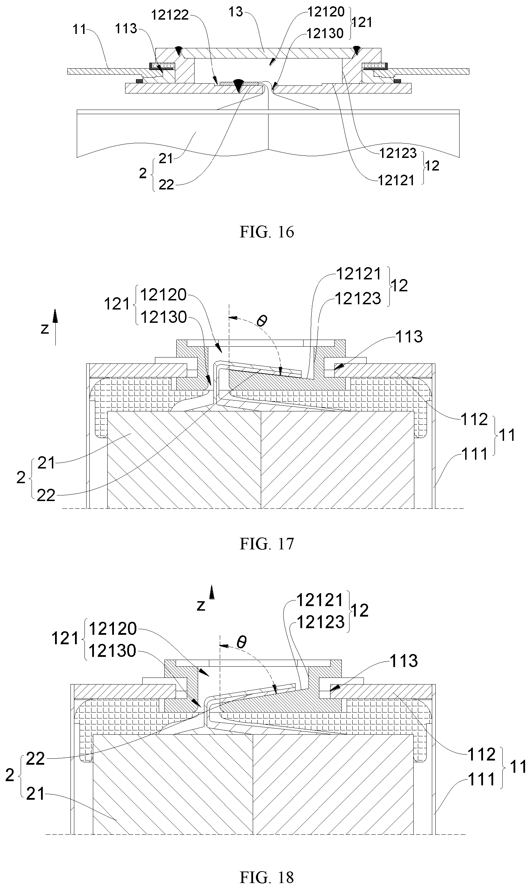

Specifically, FIG. 16 is a partial cross-sectional schematic diagram of the battery cell 10 according to some embodiments of the present application. Referring to FIGs. 15 and 16, the post terminal 12 includes a second end wall 12121 and a second side wall 12123. The second end wall 12121 is located on a side of the second side wall 12123 proximal to the active substance-coated part 21. The second end wall 12121 and the second side wall 12123 define, in an enclosing manner, a second accommodating groove 12120. The first perforation 12130 is formed on the second end wall 12121. The electrical connection position of the conductive part 22 and the post terminal 12 is located on the second end wall 12121 and/or on the second side wall 12123.

More specifically, the conductive part 22 and the post terminal 12 may be electrically connected by welding. Therefore, the welding position is the electrical connection position of the conductive part 22 and the post terminal 12. In other embodiments of the present application, the conductive part 22 and the post terminal 12 may be electrically connected by other means instead of welding, such as by providing conductive adhesive or conductive nails, which will not be described in detail herein.

In order to simplify the description, the following description will take an example that the conductive part 22 is welded to the post terminal 12 to form an electrical connection, and that the welding position is the electrical connection position of the conductive part 22 and the post terminal 12. For example, in some embodiments, the electrical connection position of the conductive part 22 and the post terminal 12 is located on the second end wall 12121 and/or the second side wall 12123, and the conductive part 22 may be welded to at least one of the second end wall 12121 and the second side wall 12123.

In the above technical solution, by arranging the electrical connection position of the conductive part 22 and the post terminal 12 on at least one of the second end wall 12121 and the second side wall 12123, not only does the second accommodating groove 12120 have a function of accommodating at least a part of the conductive part 22, but also the groove wall of the second accommodating groove 12120 has a function of achieving an electrical connection to the conductive part 22, which can simplify the structure of the post terminal 12 and facilitate processing of the post terminal 12. In addition, since the first perforation 12130 is formed on the second end wall 12121, the conductive part 22 can easily extend into the second accommodating groove 12120 through the first perforation 12130, thereby simplifying the structure of the conductive part 22, reducing the redundancy of the conductive part 22, and lowering the cost of the conductive part 22. Furthermore, the opening direction of the opening of the second accommodating groove 12120 enables the electrical connection operation on the conductive part 22 and the groove wall of the second accommodating groove 12120 to be easily performed through the opening of the second accommodating groove 12120, thereby reducing the difficulty of electrical connection. Furthermore, by utilizing the groove wall of the second accommodating groove 12120 to achieve electrical connection to the conductive part 22, the electrical connection region of the conductive part 22 and the post terminal 12 may be relatively large, thereby improving the reliability and stability of the electrical connection, and further improving the performance of the battery cell 10.

In addition, since the electrical connection position of the conductive part 22 and the post terminal 12 is located in the second accommodating groove 12120, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

Referring to FIGs. 15 and 16 again, in some embodiments, a local shape of the conductive part 22 matches a local shape of the second end wall 12121, and the conductive part and the second end wall are arranged in a fitting manner and electrically connected, such that the electrical connection position of the conductive part 22 and the second end wall 12121 extends in the length or width direction of the second end wall 12121. For example, when the second end wall 12121 is flat, a part of the conductive part 22 may also be flat and fitted to the second end wall 12121, and the fitted position is electrically connected, such as welded. As such, the area of the electrical connection can be increased, and the reliability and stability of the electrical connection can be improved.

It is worth noting that the shape of the second end wall 12121 is not limited. For example, the second end wall may be of a flat plate structure or an arc plate structure. When the second end wall 12121 is of a flat plate structure, the second end wall 12121 is arranged at an included angle to the first direction Z. For example, the second end wall may be of a flat plate structure perpendicular to the first direction Z, or an inclined flat plate structure that is not perpendicular to the first direction Z, but the inclination direction is not limited.

For example, referring to FIGs. 15 and 16, when the second end wall 12121 is of a flat plate structure, an included angle θ between the second end wall 12121 and the first direction Z is equal to 90°, that is, in the direction from the first perforation 12130 to the second side wall 12123, the second end wall 12121 is equally spaced from the active substance-coated part 21. As such, the welding of the conductive part 22 to the second end wall 12121 can be facilitated.

For another example, FIG. 17 is a partial cross-sectional schematic diagram of the battery cell 10 according to some embodiments of the present application. Referring to FIG. 17, the included angle θ between the second end wall 12121 and the first direction Z is greater than 90°, that is, in the direction from the first perforation 12130 to the second side wall 12123, the second end wall 12121 extends obliquely in a direction close to the active substance-coated part 21. As such, the extension distance of the conductive part 22 along the second end wall 12121 can be increased, so as to increase the reliability of the electrical connection. Illustratively, the included angle θ between the second end wall 12121 and the first direction Z may be 90°-145°, for example, 100°, 110°, 120°, 130°, 140°, etc., such that in one aspect, the second end wall 12121 can be easy to process and convenient to be electrically connected to the conductive part 22, and in another aspect, the space in the post terminal 12 can be more fully utilized to accommodate the conductive part 22.

For yet another example, FIG. 18 is a partial cross-sectional schematic diagram of the battery cell 10 according to some embodiments of the present application. Referring to FIG. 18, the included angle θ between the second end wall 12121 and the first direction Z is less than 90°, that is, in the direction from the first perforation 12130 to the second side wall 12123, the second end wall 12121 extends obliquely in a direction away from the active substance-coated part 21. As such, the extension distance of the conductive part 22 along the second end wall 12121 can be increased, so as to increase the reliability of the electrical connection. Illustratively, the included angle θ between the second end wall 12121 and the first direction Z may be 45°-90°, for example, 50°, 60°, 70°, 80°, etc., such that in one aspect, the second end wall 12121 can be easy to process and convenient to be electrically connected to the conductive part 22, and in another aspect, the space in the post terminal 12 can be more fully utilized to accommodate the conductive part 22.

Certainly, in other embodiments of the present application, the electrical connection position of the conductive part 22 and the second end wall 12121 may not extend in the length or width direction of the second end wall 12121, and may be, for example, a plurality of discretely arranged spots. For example, the conductive part 22 is provided with a plurality of parts that are spaced apart from each other and separately welded to the second end wall 12121, which will not be described in detail herein.

Referring to FIG. 16 again, regardless of the specific value of the included angle θ between the second end wall 12121 and the first direction Z, in the embodiments of the present application, when the conductive part 22 is electrically connected to the second end wall 12121, a second recess 12122 may be provided on the second end wall 12121 as required. The second recess 12122 is a groove formed by a part of the second end wall 12121 sinking toward an end proximal to the active substance-coated part. At least a part of the electrical connection position between the conductive part 22 and the second end wall 12121 is located in the second recess 12122.

In the above technical solution, the part of the conductive part 22 located in the second recess 12122 is arranged to match the second recess 12122 in shape, and is arranged in a fitting manner to achieve the electrical connection, such that the second recess 12122 can be used to achieve the pre-positioning and limiting of the electrical connection position of the conductive part 22, which is conducive to accurately finding the position to achieve the electrical connection, thereby improving the production efficiency and improving the stability and reliability of the electrical connection position, so as to ensure the reliability and stability of charging and discharging operations of the battery cell 10.

It should be noted that, in the embodiments of the present application, a part of the conductive part 22 may also be configured to match the second side wall 12123 in shape and is arranged in a fitting manner. For example, when the second side wall 12123 is a curved surface, the part of the conductive part 22 may also be a curved surface and fitted to the second side wall 12123, and the fitted position may be electrically connected (for example, welded), such that the electrical connection position of the conductive part 22 and the second side wall 12123 extends along the second side wall 12123. As such, the area of the electrical connection can be increased, thereby improving the reliability and stability of the electrical connection.

It should be further noted that, in other embodiments of the present application, the electrical connection position of the conductive part 22 and the second side wall 12123 may not extend along the second side wall 12123, and may be, for example, a plurality of discretely arranged spots. For example, the conductive part 22 is provided with a plurality of parts that are spaced apart from each other and separately welded to the second side wall 12123, which will not be described in detail herein.

It can be understood that the number of second side walls 12123 is not limited and may be determined according to the shape of the second accommodating groove 12120, as long as an end of each second side wall 12123 distal to the opening of the second accommodating groove 12120 is connected to the second end wall 12121. Illustratively, when the cross-sectional shape of the second accommodating groove 12120 is circular or elliptical, the second end wall 12121 is circular or elliptical. The number of the second side wall 12123 is one, and the second side wall is annular and arranged around the circumferential edge of the second end wall 12121. Further illustratively, when the cross-sectional shape of the second accommodating groove 12120 is rectangular or track-shaped, the second end wall 12121 is rectangular or track-shaped. The number of the second side walls 12123 is four, and the second side walls are separately connected to four sides of the second end wall 12121.

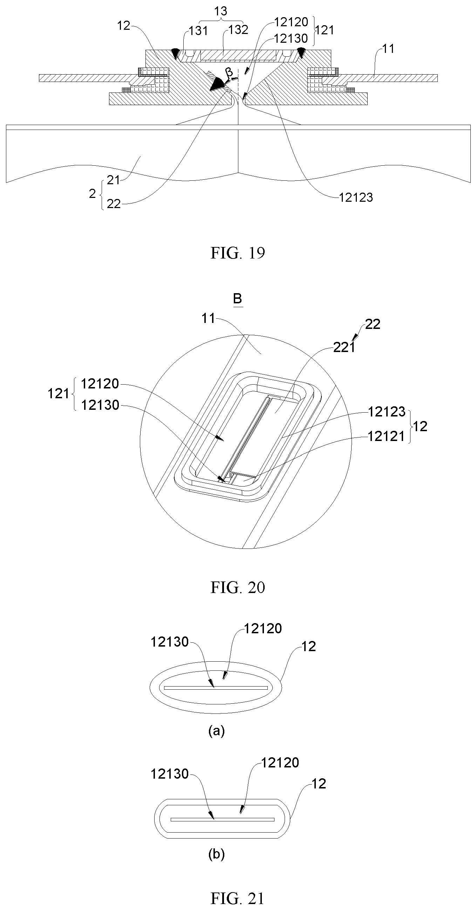

It should be further noted that the second accommodating groove 12120 is not limited to the form defined by the second end wall 12121 and the second side wall 12123. For example, in some embodiments, FIG. 19 is a partial cross-sectional schematic diagram of the battery cell 10 according to some embodiments of the present application. Referring to FIG. 19, an end of each second side wall 12123 distal to the opening of the second accommodating groove 12120 extends to the first perforation 12130, such that the second accommodating groove 12120 is defined only by a plurality of second side walls 12123. In this case, the conductive part 22 may be electrically connected to the second side wall 12123.

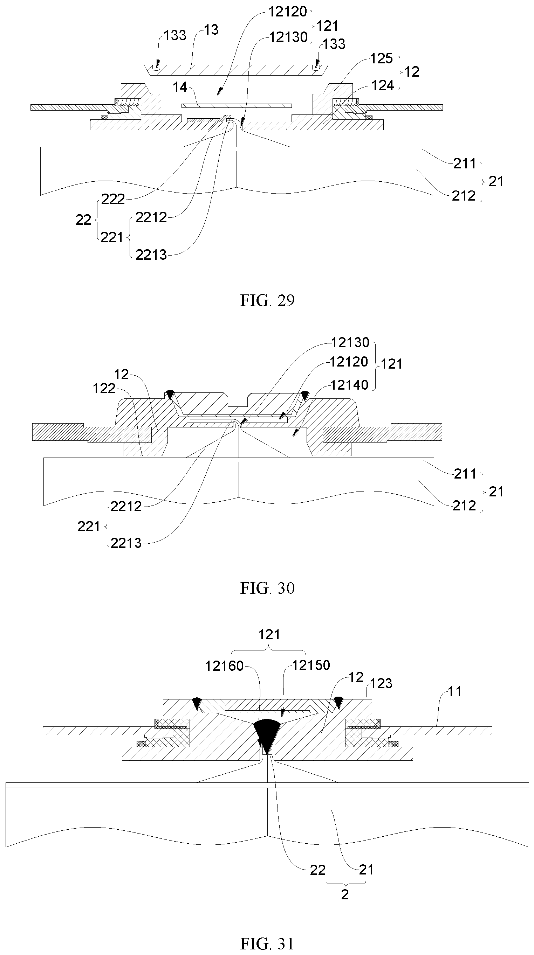

In some embodiments, referring to FIG. 30, the accommodating part 121 may be provided with both a third accommodating groove 12140 and a second accommodating groove 12120. The second accommodating groove 12120 is located on a side of the third accommodating groove 12140 distal to the active substance-coated part 21. The third accommodating groove 12140 is a groove body, and the groove body is a groove-shaped structure of a certain depth. The opening of the third accommodating groove 12140 is formed on the post terminal inner end surface 122 of the post terminal 12 on a side proximal to the active substance-coated part 21, and the opening of the second accommodating groove 12120 is formed on the post terminal outer end surface 123 of the post terminal 12 on a side distal to the active substance-coated part 21. The third accommodating groove 12140 is in communication with the second accommodating groove 12120 through the first perforation 12130. In this case, a part of the conductive part 22 is located in the third accommodating groove 12140, and the conductive part 22 is also provided in the first perforation 12130 in a penetrating manner, and the rest of the conductive part 22 is located in the second accommodating groove 12120, such that the space in the post terminal 12 can be fully utilized and the space occupied by the conductive part 22 in the housing 11 can be reduced.

It is worth noting that when the conductive part 22 is connected to the second end wall 12121 or the second side wall 12123 by laser welding, referring to FIG. 19 again, the included angle β between a part of the conductive part 22 used for welding and the axis of the first perforation 12130 can be set to be greater than 5°, so as to mitigate the problem of laser entering the housing 11 through the first through hole 12130, and facilitate the welding operation. In addition, when the included angle β between the part of the conductive part 22 used for welding and the axis of the first perforation 12130 is close to 5°, edge sealing welding may be used, and overlap welding may be used for the rest.

Referring to FIG. 15 again, in the embodiments of the present application, the method for connecting the post terminal 12 to the housing 11 is not limited. For example, the method may be welding or riveting. For example, when the post terminal and the housing are fitted by riveting, the housing 11 is provided with a mounting hole 113, and the post terminal 12 is mounted by riveting at the mounting hole 113. Certainly, it can be understood that when the post terminal and the housing are fitted by welding or other methods, the housing 11 may also be provided with a mounting hole 113 to enable the post terminal 12 to be mounted on the housing 11 through the mounting hole 113.

Optionally, referring to FIG. 15, the second accommodating groove 12120 can be provided corresponding to the position of the mounting hole 113, or in other words, on a projection plane perpendicular to the first direction Z, the orthographic projection of the second accommodating groove 12120 is located within the range of the orthographic projection of the mounting hole 113, such that the second accommodating groove 12120 can have a large depth to accommodate more conductive parts 22, thereby reducing the space occupied by the conductive parts 22 in the housing 11 to a greater extent.

In some embodiments, referring to FIG. 15, when the housing 11 is provided with the mounting hole 113 and the post terminal 12 is mounted in the mounting hole 113, in the first direction Z, the depth H3 of the second accommodating groove 12120 is greater than or equal to the minimum distance H4 from the post terminal outer end surface 123 to the mounting hole 113.

It should be noted that the specific shape of the second accommodating groove 12120 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional dimension, a hemispherical groove with a circular cross-section and a gradually changing cross-sectional dimension, a semi-ellipsoidal groove with an elliptical cross-section and a gradually changing cross-sectional dimension, or the like. It is worth noting that the track shape described herein refers to a shape in which the two short sides of a rectangle are replaced by convex curves, for example, referring to the shape shown in FIG. 21(b).

Therefore, the depth H3 of the second accommodating groove 12120 refers to: the maximum depth of the second accommodating groove 12120 in the first direction Z. As the depth H3 of the second accommodating groove 12120 in the first direction Z is greater than or equal to the minimum distance H4 from the post terminal outer end surface 123 to the mounting hole 113, the volume of the post terminal 12 can be fully utilized, such that the second accommodating groove 12120 has a large depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. Meanwhile, due to the large depth, the second accommodating groove 12120 can accommodate the gases produced by the battery cell assembly 2 to ensure the reliability and stability of the battery cell 10, and can also accommodate more electrolyte to ensure the service life of the battery cell 10.

It should be noted that the volume of the second accommodating groove 12120 is not limited. For example, in some specific examples, the volume of the second accommodating groove 12120 that can be used for accommodating the conductive part 22 (referred to as a third volume V4) may be greater than or equal to 298 mm³, such that the second accommodating groove 12120 may have sufficient space to accommodate the conductive part 22 and facilitate welding of the conductive part 22 to the post terminal 12. However, when the third volume V4 of the second accommodating groove 12120 is less than 298 mm³, the accommodating capacity of the second accommodating groove 12120 for the conductive part 22 is relatively weakened, and the welding difficulty of the conductive part 22 with the post terminal 12 is increased. For example, the third volume V4 of the second accommodating groove 12120 may be 300 mm³, 400 mm³, 500 mm³, 600 mm³, 700 mm³, 800 mm³, 1000 mm³, or the like.

It is worth noting that the third volume V4 of the second accommodating groove 12120 is: the difference between a total volume V5 of the second accommodating groove 12120 and a volume of other components (such as the first cover plate 13 and the second cover plate 14 described herein) required to be accommodated by the second accommodating groove 12120 except the conductive part 22 (referred to as a fourth volume V6), that is, V4 = V5 - V6. For example, in some specific examples, the total volume V5 of the second accommodating groove 12120 may be 1400 mm³-1500 mm³, such that the second accommodating groove 12120 may have more sufficient space to accommodate the conductive part 22 and other components. For example, the total volume V5 of the second accommodating groove 12120 may be 1420 mm³, 1440 mm³, 1460 mm³, 1480 mm³, 1490 mm³, or the like.

In the embodiments of the present application, the shape of the first perforation 12130, the number of the first perforation 12130, and the relative positional relationship between the first perforation 12130 and the second accommodating groove 12120 are not limited.

Illustratively, FIG. 20 is a partial enlarged view of the part B in FIG. 3; and FIG. 21 is an orthographic projection view of various post terminals 12 according to some embodiments of the present application. Referring to FIGs. 20 and 21, in the embodiments of the present application, for the shape of the first perforation 12130, the shape of the first perforation 12130 may be a long strip shape, so as to match the shape of the plate-like part of the conductive part 22, thereby facilitating the plate-like part of the conductive part 22 to pass through. Meanwhile, when the first perforation 12130 is long strip-shaped, the second accommodating groove 12120 may also be configured as a shape in which the length of the cross-section is greater than the width, such as a rectangle, an ellipse, and a track shape. In this case, the length direction of the first perforation 12130 may be set to be consistent with the length direction of the cross-section of the second accommodating groove 12120, such that the space can be fully utilized. In addition, the weld mark formed by welding the conductive part 22 to the post terminal 12 may be a long strip-shaped weld mark parallel to the length direction of the first perforation 12130, so as to improve the welding reliability and increase the current passage performance. Illustratively, when the conductive part 22 is welded to the second end wall 12121 to form a weld mark as a long strip-shaped weld mark, the width of the weld mark may be greater than or equal to 6 mm, and the distance between the weld mark and the second side wall 12123 may be greater than or equal to 1 mm, so as to ensure the current passage capacity of the battery cell 10 while ensuring the convenience and reliability of welding.

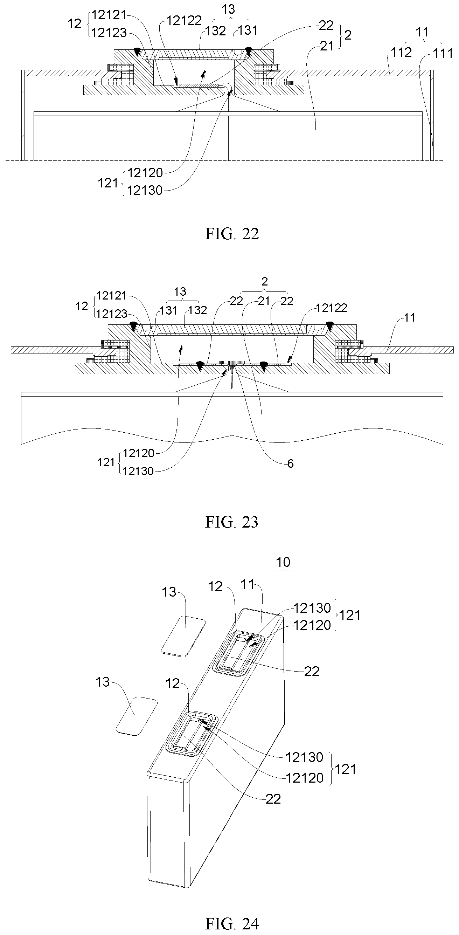

With regard to the dimension and number of the first perforations 12130, in the embodiments of the present application, the formation dimension and specific position of the first perforations 12130 on the second accommodating groove 12120 are not limited and may be designed according to the number of the formed first perforations 12130. For example, the width of the first perforation 12130 may be greater than or equal to 2 mm, which facilitates the conductive part 22 to pass through. For example, when only one first perforation 12130 is formed on the second accommodating groove 12120, in some examples, referring to FIGs. 20 and 21, the first perforation 12130 may be centered relative to the second accommodating groove 12120. In other examples, FIG. 22 is a partial cross-sectional schematic diagram of the battery cell 10 according to some embodiments of the present application, and referring to FIG. 22, the first perforation 12130 may also be offset relative to the center of the second accommodating groove 12120. For example, in some embodiments, referring to FIG. 22, the first perforation 12130 may be formed at the edge of the second end wall 12121 to be provided proximal to the second side wall 12123, such that the available area of the second end wall 12121 can be increased, thereby increasing the welding area between the conductive part 22 and the second end wall 12121.

It can be understood that after passing through the first perforation 12130, the conductive part 22 will be folded to be fitted to the second end wall 12121, but the folding direction is not limited. For example, when the first perforation 12130 is centered relative to the second accommodating groove 12120, after passing through the first perforation 12130, the conductive part 22 may be folded toward any side of the first perforation 12130 (referring to FIG. 20), such that the dimension of the second accommodating groove 12120 can be appropriately reduced, thereby enhancing the compactness and strength of the structure. Alternatively, FIG. 23 is a partial cross-sectional schematic diagram of the battery cell 10 according to some embodiments of the present application, and referring to FIG. 23, after passing through the first perforation 12130, the conductive part 22 may also be folded toward opposite sides at the same time, so as to reduce the thickness at the welding position and reduce the welding heat input, thereby reducing problems such as particle splashing.

For example, when a plurality of first perforations 12130 are formed on the second accommodating groove 12120, the length directions of the plurality of first perforations 12130 are provided in parallel or substantially in parallel to make full use of the space. In this case, the folding direction of the conductive part 22 after passing through the first perforation 12130 may be set according to the relative positional relationship of the plurality of first perforations 12130. For example, referring to FIG. 10, when two first perforations 12130 are formed on the second accommodating groove 12120 and are distal to each other, the two conductive parts 22 passing through the two first perforations 12130 may be folded in a direction close to each other; and when two first perforations 12130 are formed on the second accommodating groove 12120 and are proximal to each other, the two conductive parts 22 passing through the two first perforations 12130 may be folded in a direction away from each other.

It can be understood that when a plurality of first perforations 12130 are formed on the second accommodating groove 12120, the number of post terminals 12 may be appropriately reduced, so as to reduce costs and processes.

In addition, in some embodiments, referring to FIGs 22 and 23, the first perforation 12130 may be centered relative to the active substance-coated part 21, but the position of the first perforation 12130 relative to the second accommodating groove 12120 is not limited, and may be centered or offset. Since the first perforation 12130 is centered relative to the active substance-coated part 21, the conductive part 22 may be gathered corresponding to the midline position of the active substance-coated part 21.

In some embodiments, referring to FIG. 23, a sealing member 6 may be provided at the first perforation 12130, so as to mitigate the problem of the electrolyte in the housing 11 leaking from the first perforation 12130. The material and shape of the sealing member 6, as well as the method for connecting the sealing member to the first perforation 12130, are not limited. Illustratively, the sealing member 6 may be a metal member made of the same material as that of the post terminal 12 or the conductive part 22, which may be fitted to the wall surface at the first perforation 12130 of the post terminal 12 by welding to seal the first perforation 12130. Further illustratively, the sealing member 6 may be rubber, plastic, or the like, and the sealing member may be in insertion fit and interference fit to the first perforation 12130 to seal the first perforation 12130. In the embodiments of the present application, the sealing member may be designed according to actual requirements without limitation.

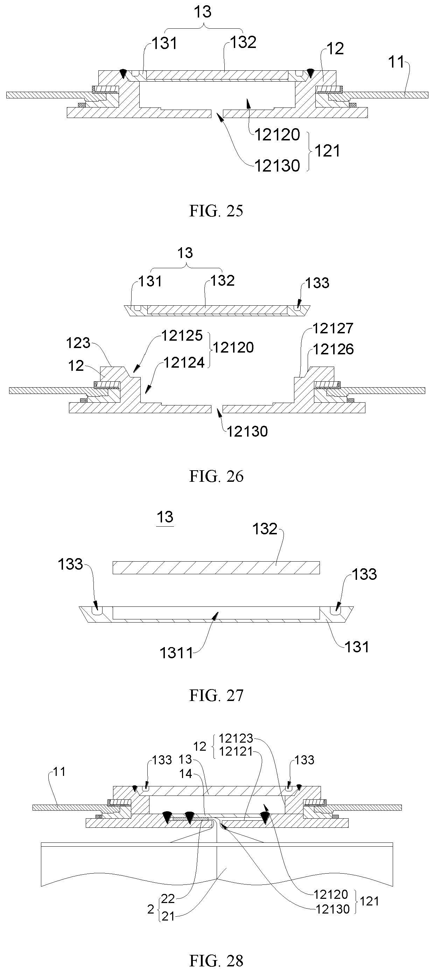

FIG. 24 is an exploded view of the structure of the battery cell 10 according to some embodiments of the present application; FIG. 25 is a partial cross-sectional schematic diagram of the housing assembly 1 according to some embodiments of the present application, and FIG. 26 is an exploded view of the structure of the housing assembly 1 shown in FIG. 25. Referring to FIGs. 24, 25, and 26, in the embodiments of the present application, when the accommodating part 121 is provided with the second accommodating groove 12120 of any one of the above embodiments, optionally, the housing assembly 1 may further include a first cover plate 13, the first cover plate 13 is fitted to the post terminal 12 and closes the opening of the second accommodating groove 12120, and the first cover plate 13 is electrically connected to the post terminal 12.

In the above technical solution, arranging the first cover plate 13 to close the opening of the second accommodating groove 12120 can prevent the electrolyte in the housing 11 from leaking out of the opening of the second accommodating groove 12120. Moreover, since the first cover plate 13 closes the opening of the second accommodating groove 12120 and is electrically connected to the post terminal 12, an indirect electrical connection between the post terminal 12 and a busbar component can be easily achieved by using the first cover plate 13, and the connection area of the electrical connection can also be increased, thereby helping reduce the resistance of the electrical connection.

It is worth noting that the fitting manner and fitting position of the first cover plate 13 and the post terminal 12 are not limited, as long as the first cover plate 13 can close the opening of the second accommodating groove 12120. For example, in some embodiments, referring to FIG. 24, the first cover plate 13 may be welded to the post terminal 12. During processing, the conductive part 22 may be first passed through the first perforation 12130 and welded to the groove wall of the second accommodating groove 12120, and then the first cover plate 13 is welded to the post terminal 12 to close the opening of the second accommodating groove 12120.

It should be further noted that the specific structure of the first cover plate 13 is not limited. For example, in some optional embodiments, FIG. 27 is an exploded view of the structure of the first cover plate 13 shown in FIG. 26. Referring to FIGs. 25-27, the first cover plate 13 includes a first conductive member 131 and a second conductive member 132 made of different materials. The first conductive member 131 is fitted to and is electrically connected to the post terminal 12, while the second conductive member 132 is fitted to and is electrically connected to the first conductive member 131.

In the above technical solution, the first cover plate 13 is provided in a composite form, and the first conductive member 131 is set to be made of the same material as that of the post terminal 12, so as to facilitate the electrical connection between the first conductive member 131 and the post terminal 12. For example, the first conductive member 131 can be easy to be reliably and stably connected to the post terminal 12 through welding. Furthermore, since the second conductive member 132 is made of a different material from that of the first conductive member 131, the electrical connection between the second conductive member 132 and a busbar component and the like made of a different material from that of the post terminal 12 is facilitated. For example, the second conductive member 132 can be easy to be reliably and stably connected to a busbar component made of the same material as that of the second conductive member 132 through welding.

For example, when the post terminal 12 is a negative electrode post terminal, the post terminal 12 is a copper column, and when the busbar component is an aluminum sheet, the first conductive member 131 may be set to be made of copper, and the second conductive member 132 may be set to be made of aluminum. In this case, the post terminal 12 and the first conductive member 131 are made of the same material and can be effectively welded, and the second conductive member 132 and the busbar component are made of the same material and can be effectively welded, thereby effectively achieving an indirect electrical connection between the post terminal 12 and the busbar component through the first cover plate 13. Moreover, the welding of the post terminal 12 to the first conductive member 131 is a welding of the copper material, which has good fluidity and is not prone to cracks, which is conducive to improving the sealing effect of the welding position.

Referring to FIGs. 25-27 again, in some optional examples, the first conductive member 131 is located between the second accommodating groove 12120 and the second conductive member 132. In the above technical solution, since the first conductive member 131 is located between the second accommodating groove 12120 and the second conductive member 132, the second accommodating groove 12120 and the second conductive member 132 can be separated. Therefore, when the electrolyte in the housing 11 enters the second accommodating groove 12120 from the first perforation 12130, the first conductive member 131 can be used to prevent the part of the electrolyte from contacting the second conductive member 132, thereby solving the problem of corrosion of the second conductive member 132 by the electrolyte.

It is worth noting that the fitting manner of the first conductive member 131 and the second conductive member 132 is not limited. For example, in some embodiments, referring to FIGs. 25-27, the first conductive member 131 is provided with a second groove 1311, the second conductive member 132 is embedded in the second groove 1311, and an opening of the second groove 1311 is formed on a surface of the first conductive member 131 on a side distal to the second accommodating groove 12120, such that the second conductive member 132 is exposed from the opening of the second groove 1311. Alternatively, in other embodiments, the first conductive member 131 and the second conductive member 132 may be connected in a fastening connection, a snap connection, or the like.

It should be further noted that "exposed" mentioned in the second conductive member 132 being exposed from the opening of the second groove 1311 means that the first conductive member 131 does not block the second conductive member 132 at the opening position of the second groove 1311, and the second conductive member 132 is not required to protrude from the opening of the second groove 1311. For example, the second conductive member 132 may be flush with the surface of the first conductive member 131 on a side distal to the second accommodating groove 12120, or the second conductive member 132 may protrude from the surface of the first conductive member 131 on a side distal to the second accommodating groove 12120.

In the above technical solution, in one aspect, by embedding the second conductive member 132 in the first conductive member 131, the difficulty in assembling the first conductive member 131 and the second conductive member 132 can be reduced, such that the stability and convenience of the fit of the first conductive member 131 and the second conductive member 132 are improved, and the thickness of the first cover plate 13 can be reduced, such that the space occupied by the first cover plate 13 can be reduced, so as to improve the space utilization of the battery cell 10. In another aspect. And, since the second conductive member 132 can be exposed from the surface of the first conductive member 131 on a side distal to the second accommodating groove 12120 through the opening of the second groove 1311, it is conducive to achieving the electrical connection between the second conductive member 132 and the busbar component outside the post terminal 12.

In addition, since the opening of the second groove 1311 is formed on the surface of the first conductive member 131 on a side distal to the second accommodating groove 12120, it means that the second groove 1311 is open in a direction away from the active substance-coated part 21, such that the part of the first conductive member 131 configured to define the groove wall of the second groove 1311 is located between the second accommodating groove 12120 and the second conductive member 132, so as to separate the second accommodating groove 12120 from the second conductive member 132, thereby preventing the electrolyte entering the second groove 1311 from contacting the second conductive member 132 and reducing leakage of the electrolyte.

Certainly, in other embodiments, the first cover plate 13 may not be in a composite form composed of a plurality of materials. For example, in other embodiments of the present application, FIG. 28 is a partial cross-sectional schematic diagram of the battery cell 10 according to some embodiments of the present application, and FIG. 29 is an exploded view of the structure of the battery cell 10 shown in FIG. 28. Referring to FIGs. 28 and 29, the first cover plate 13 as a whole may also be provided in a non-composite form made of the same material, for example, for matching the positive electrode post terminal, which will not be described in detail herein.

Referring to FIGs. 25-27 again, in some embodiments, the first cover plate 13 is also embedded in the opening of the second accommodating groove 12120. In the above technical solution, embedding the first cover plate 13 in the second accommodating groove 12120 can reduce the difficulty in assembling the first cover plate 13 and the post terminal 12, improve the stability of assembly of the first cover plate 13 and the post terminal 12 and the reliability and convenience of the connection, and reduce the space occupied by the first cover plate 13 outside the post terminal 12. Moreover, since the first cover plate 13 is embedded in the opening of the second accommodating groove 12120, there is sufficient space in the second accommodating groove 12120 to accommodate the conductive part 22.

Certainly, in other embodiments of the present application, the fitting manner of the first cover plate 13 and the post terminal 12 is not limited to being embedded in the second accommodating groove 12120. The first cover plate 13 may also be directly arranged outside the post terminal 12 as a covering, that is, directly lids the opening of the second accommodating groove 12120, as long as it is conducive to the fit to the busbar component of the battery 100, which is not limited in the embodiments.

Referring to FIGs. 25-27 again, optionally, in the embodiments of the present application, at least a part of the wall surface at the opening of the second accommodating groove 12120 formed on the post terminal 12 is an inclined guiding surface 12126, and the inclined guiding surface 12126 is configured to guide the first cover plate 13 to be fitted to the opening of the second accommodating groove 12120. In the above technical solution, by processing the wall surface at the opening of the second accommodating groove 12120 into an inclined surface with guidance functionality, the difficulty in assembling the first cover plate 13 and the second accommodating groove 12120 can be reduced, thereby improving the assembly efficiency of the first cover plate 13 and the second accommodating groove 12120. Moreover, when the first cover plate 13 is welded to the inclined guiding surface 12126, the area at the welding position can be increased, thereby improving the reliability of the welding connection between the first cover plate 13 and the post terminal 12 and mitigating the problem of weld pool collapse or laser penetration into the post terminal 12 during welding.

Specifically, referring to FIGs. 25-27, the second accommodating groove 12120 includes a first groove segment 12124 and a second groove segment 12125 located on a side of the first groove segment 12124 proximal to the post terminal outer end surface 123. The cross-sectional area of the second groove segment 12125 is greater than the cross-sectional area of the first groove segment 12124, such that the second accommodating groove 12120 is in the shape of a stepped groove, and a step surface 12127 is formed at the connection position of the first groove segment 12124 and the second groove segment 12125, such that when the first cover plate 13 is embedded in the second accommodating groove 12120, the first cover plate can be specifically embedded in the second groove segment 12125 and supported by the step surface 12127.

In the above technical solution, by providing the second accommodating groove 12120 in a stepped groove form, the first cover plate 13 can be stably fitted at the opening position of the second accommodating groove 12120, thereby improving the connection stability between the first cover plate 13 and the post terminal 12. In addition, limiting the groove depth of the first groove segment 12124 allows the second accommodating groove 12120 to have sufficient space to accommodate the conductive part 22.

Further, when the wall surface at the opening of the second accommodating groove 12120 formed on the post terminal 12 is the inclined guiding surface 12126, the cross-sectional area of the second groove segment 12125 may be set to gradually increase in a direction close to the post terminal outer end surface 123, such that the side wall of the second groove segment 12125 is formed as the inclined guiding surface 12126, which facilitates processing and can easily and effectively meet the guidance requirements.

Referring to FIGs. 25-27 again, in the embodiments of the present application, a stress relief groove 133 may be further formed on the first cover plate 13 as required. The stress relief groove 133 is located in an outer peripheral region of the first cover plate 13 to assist the first cover plate 13 in stress relief. In the above technical solution, by providing the stress relief groove 133 on the first cover plate 13, the stress generated during the processing of the first cover plate 13 itself or the electrical connection between the first cover plate 13 and the post terminal 12 can be relieved, so as to mitigate the related problems such as deformation or damage of the first cover plate 13 caused by stress.

Specifically, when the first cover plate 13 and the second accommodating groove 12120 are embedded and welded, the stress generated by welding can be relieved by utilizing the stress relief groove 133, thereby improving the lateral heat conduction and reducing the probability of damage or deformation of the first cover plate 13. Meanwhile, when the first cover plate 13 is in the above composite form including the first conductive member 131 and the second conductive member 132, the stress relief groove 133 may be provided on the first conductive member 131 and located in the outer peripheral region of the second conductive member 132. When the first conductive member 131 and the second accommodating groove 12120 are embedded and welded, the stress generated by welding can be relieved by utilizing the stress relief groove 133, thereby improving the lateral heat conduction and reducing the probability of damage or deformation of the second conductive member 132. Moreover, when the second conductive member 132 and the first conductive member 131 are embedded and welded, the stress generated by welding can be relieved by utilizing the stress relief groove 133, thereby improving the lateral heat conduction and reducing the probability of causing the first conductive member 131 to deform that may cause the first conductive member 131 to be unable to be embedded with the second accommodating groove 12120.

Referring to FIGs. 28-29, in the embodiments of the present application, the housing assembly 1 may be further provided with a second cover plate 14 as required. The second cover plate 14 lids the first perforation 12130 and is also located outside the conductive part 22 in the second accommodating groove 12120.

It is worth noting that when the housing assembly 1 includes the second cover plate 14, the housing assembly 1 may also include the first cover plate 13, or may not include the first cover plate 13. Further, when the housing assembly 1 includes both the second cover plate 14 and the first cover plate 13, the first cover plate 13 may be in the composite form made of a plurality of materials, or may be in the non-composite form made of the same material.

In the above technical solution, at least a part of the conductive part 22 is located in the second accommodating groove 12120, and the second cover plate 14 lids the part of the conductive part 22. The second cover plate 14 also lids the first perforation 12130, such that when the electrolyte enters the second accommodating groove 12120 from the first perforation 12130, the problem of the electrolyte overflowing from the post terminal 12 can be mitigated through the second cover plate 14, thereby improving the reliability of the battery cell 10.

For example, as shown in FIGs. 28-29, when a part of the conductive part 22 is sandwiched between the second cover plate 14 and the second end wall 12121, the part of the conductive part 22, the second cover plate 14, and the second end wall 12121 can be welded together by using laser welding, so as to improve the reliability of the connection between the post terminal 12 and the conductive part 22. Furthermore, since the second cover plate 14 can press the conductive part 22, the second cover plate 14 may be used to improve the stability of the conductive part 22 accommodated in the second accommodating groove 12120.

In the embodiments of the present application, the post terminal 12 may be an integrally formed post terminal, or a separately formed composite post terminal. Referring to FIGs. 28-29 again, for example, the post terminal 12 may include a first post terminal part 124 and a second post terminal part 125 made of different materials and electrically connected to each other. The second post terminal part 125 is located on a side of the first post terminal part 124 distal to the active substance-coated part 21. The accommodating part 121 is arranged on the first post terminal part 124, or the accommodating part 121 is arranged on the first post terminal part 124 and the second post terminal part 125, and the conductive part 22 is electrically connected to the first post terminal part 124.

In the above technical solution, by providing the post terminal 12 in a composite form composed of different materials, the first post terminal part 124 located on the inner side is fitted in an accommodating manner and electrically connected to the conductive part 22, and the second post terminal part 125 located on the outer side is electrically connected to the busbar component and the like, which is conducive to realizing the assembly and electrical connection of the post terminal 12 to related components, reducing the mutual interference between the electrical connection position of the post terminal 12 and the conductive part 22, and the electrical connection position of the post terminal 12 and the busbar component of the battery 100, and improving the reliability and stability of the battery cell 10.

For example, when the material of the conductive part 22 is different from that of the busbar component, the first post terminal part 124 may be set to be made of the same material as that of the conductive part 22, and the second post terminal part 125 may be set to be made of the same material as that of the busbar component, which is conducive to realizing the welding of the second post terminal part 125 to the busbar component and the welding of the first post terminal part 124 to the conductive part 22, and improving the reliability and stability of the electrical connection between the conductive part 22 and the post terminal 12 and the reliability and stability of the electrical connection between the post terminal 12 and the busbar component.

Further, when the post terminal 12 is in the composite form of the above embodiments and is provided with the second accommodating groove 12120 and the first perforation 12130 of any one of the above embodiments, in some embodiments, the housing assembly 1 may also include the second cover plate 14 of any one of the above embodiments. In this case, the second cover plate 14 may be set to be made of the same material as that of the first post terminal part 124, and the first post terminal part 124 may be electrically connected to the second cover plate 14, so as to improve the reliability and stability of the electrical connection between the first post terminal part 124 and the second cover plate 14. For example, the first post terminal part 124 and the second cover plate 14 may be connected by welding.

For example, referring to FIGs. 28-29, when the post terminal 12 is a negative electrode post terminal, the first post terminal part 124 is made of copper, the second post terminal part 125 is made of aluminum, and the busbar component is an aluminum sheet, the second cover plate 14 may be set to be made of copper, and the first cover plate 13 may be set to be made of aluminum. In this case, the second cover plate 14 and the first post terminal part 124 are made of the same material and can be effectively welded, the second post terminal part 125 and the first cover plate 13 are made of the same material and can be effectively welded, and the first cover plate 13 and the busbar component are made of the same material and can be effectively welded.

In the embodiments of the present application, when the accommodating part 121 is provided with a second accommodating groove 12120, depending on the structure of the battery cell assembly 2, the fitting condition of the battery cell assembly 2 and the second accommodating groove 12120 is not limited, and for example, may include but is not limited to the following third and fourth embodiments.

FIG. 30 is a partial cross-sectional schematic diagram of the battery cell 10 according to some embodiments of the present application. Referring to FIG. 30, in the third embodiment, when the accommodating part 121 is provided with the second accommodating groove 12120, at least a part of the second gathering part 2213 is accommodated in the second accommodating groove 12120.

It is worth noting that the specific structure of the battery cell assembly 2 in the third embodiment is basically the same as that of the battery cell assembly 2 in the first embodiment above, and may refer to the description of the first embodiment, and will not be described in detail herein. In the third embodiment, since the tab part 221 includes the second gathering part 2213 formed by the convergence and connection of a plurality of tab plates 2211, at least a part of the second gathering part 2213 can be easily accommodated in the second accommodating groove 12120, which facilitates the assembly of the conductive part 22 and the post terminal 12.

In some optional examples, referring to FIG. 30, the position where the first gathering part 2212 is connected to the second gathering part 2213 can be provided corresponding to the first perforation 12130, that is, on a projection plane perpendicular to the first direction Z, the orthographic projection of the position where the first gathering part 2212 is connected to the second gathering part 2213 is located within the range of the orthographic projection of the first perforation 12130, such that the second gathering part 2213 can extend into the first perforation 12130 at a relatively short distance and enter the second accommodating groove 12120, thereby reducing the redundancy and reducing costs.

It can be understood that the gathering position of the tab plates 2211 may be designed according to the position of the first perforation 12130, for example, by adopting the symmetrical gathering form or the asymmetrical gathering form described above, such that the position where the first gathering part 2212 is connected to the second gathering part 2213 is provided corresponding to the first perforation 12130, which will not be described in detail herein. In addition, referring to the above description, when the second gathering part 2213 forms a plate structure by ultrasonic pre-welding, it is convenient for the second gathering part 2213 to pass through the first perforation 12130.

Referring to FIG. 30, in the third embodiment, in addition to the second accommodating groove 12120, the accommodating part 121 may be further provided with a third accommodating groove 12140. The third accommodating groove 12140 is located on a side of the second accommodating groove 12120 proximal to the active substance-coated part 21. The surface of the post terminal 12 on a side facing the active substance-coated part 21 is the post terminal inner end surface 122, and the opening of the third accommodating groove 12140 is formed on the post terminal inner end surface 122. The third accommodating groove 12140 is in communication with the second accommodating groove 12120 through the first perforation 12130. In this case, at least a part of the first gathering part 2212 may be accommodated in the third accommodating groove 12140.

In the above technical solution, at least a part of the first gathering part 2212 of the tab part 221 is accommodated in the third accommodating groove 12140, and at least a part of the second gathering part 2213 is accommodated in the second accommodating groove 12120, such that the space in the post terminal 12 can be more fully utilized, and the space occupied by the tab part 221 in the housing 11 can be further reduced, so as to accommodate a larger active substance-coated part 21, thereby improving the energy density of the battery cell 10. Moreover, the redundancy of the tab part 221 in the housing 11 can be better reduced, the probability of short circuit between the tab part 221 and the active substance-coated part 21 can be further reduced, and thus the risk of the tab part 221 being inverted toward the active substance-coated part 21 can be further reduced.

It should be noted that the specific shape of the third accommodating groove 12140 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional dimension, a hemispherical groove with a circular cross-section and a gradually changing cross-sectional dimension, a semi-ellipsoidal groove with an elliptical cross-section and a gradually changing cross-sectional dimension, or the like. In the embodiments of the present application, the third accommodating groove 12140 may be configured into a shape in which the length of the cross-section is greater than the width, such as a rectangle, an ellipse, and a track shape, so as to facilitate the accommodation of the first gathering part 2212.

In the third embodiment, the second gathering part 2213 is electrically connected to the post terminal 12 directly or indirectly. For example, when the second gathering part 2213 is electrically connected to the post terminal 12 directly, such as when the second gathering part 2213 is welded to the post terminal 12, the structure of the battery cell assembly 2 can be simplified, thereby reducing the number of components, simplifying the assembly process, and improving the assembly efficiency. The method and position of direct electrical connection between the second gathering part 2213 and the post terminal 12 are not limited. For example, the electrical connection position of the second gathering part 2213 and the post terminal 12 may be located on the second end wall 12121 and/or the second side wall 12123. Further, the electrical connection position of the second gathering part 2213 and the second end wall 12121 may extend in the length direction or the width direction of the second end wall 12121. Yet further, the second end wall 12121 is provided with the second recess 12122, and the electrical connection position of the second gathering part 2213 and the second end wall 12121 may be located in the second recess 12122, and the like. The corresponding technical effects can refer to the introduction of the above embodiments and will not be described in detail herein.

As an optional solution, the conductive part 22 may also be provided with an adapting piece 222 as required. In this case, the second gathering part 2213 is electrically connected to the post terminal 12 indirectly. Specifically, referring to FIG. 29, when the conductive part 22 includes the adapting piece 222, the adapting piece 222 is connected to the second gathering part 2213, and the conductive part 22 is electrically connected to the post terminal 12 via the adapting piece 222. In this case, at least a part of the adapting piece 222 is accommodated in the second accommodating groove 12120. In this example, at least a part of the second gathering part 2213 is also accommodated in the second accommodating groove 12120.

In the above technical solution, the active substance-coated part 21 can be electrically connected to the post terminal 12 through the first gathering part 2212, the second gathering part 2213, and the adapting piece 222 in sequence. The electrical connection position of the conductive part 22 and the post terminal 12 is located on the adapting piece 222. For example, the electrical connection can be achieved by welding (for example, laser welding) the adapting piece 222 to the post terminal 12. In addition, the adapting piece 222 and the tab plate 2211 are two separate components and are connected by welding (such as ultrasonic welding) or the like.

In the above technical solution, by accommodating at least a part of the second gathering part 2213 and at least a part of the adapting piece 222 in the second accommodating groove 12120, the space in the post terminal 12 can be more fully utilized, and the space occupied by the conductive part 22 in the housing 11 can be further reduced, so as to further improve the volumetric energy density of the battery cell 10. Furthermore, by providing the adapting piece 222 of the plate structure, it is convenient for the adapting piece 222 to pass through the first perforation 12130 and extend into the second accommodating groove 12120.

In addition, by using the adapting piece 222 to achieve an indirect electrical connection between the second gathering part 2213 and the post terminal 12, the adapting piece 222 can be welded to the post terminal 12 at a part avoiding the second gathering part 2213, such that the welding between the adapting piece 222 and the post terminal 12 is secure, the risk of welding cracking is low, and the reliability and stability of the battery cell 10 can be further improved. Meanwhile, by electrically connecting the post terminal 12 and the tab plates 2211 via the adapting piece 222, the configuration of the tab plates 2211 can also be simplified.

The method and position of direct electrical connection between the adapting piece 222 and the post terminal 12 are not limited. For example, the adapting piece 222 is electrically connected to the post terminal 12 by welding. For example, the electrical connection position of the adapting piece 222 and the post terminal 12 may be located on the second end wall 12121 and/or the second side wall 12123. Further, the electrical connection position of the adapting piece 222 and the second end wall 12121 may extend in the length direction or the width direction of the second end wall 12121. Yet further, the second end wall 12121 is provided with the second recess 12122, and the electrical connection position of the adapting piece 222 and the second end wall 12121 may be located in the second recess 12122, and the like. The corresponding technical effects can refer to the introduction of the above embodiments and will not be described in detail herein. When the electrical connection position of the adapting piece 222 and the post terminal 12 is located on the second end wall 12121 and/or the second side wall 12123, since at least a part of the adapting piece 222 is accommodated in the second accommodating groove 12120, the structure of the adapting piece 222 can be simplified, thereby reducing the redundancy and lowering the costs.

Referring to FIG. 11, in the fourth embodiment, the conductive part 22 includes an adapting piece 222 configured to electrically connect the second gathering part 2213 to the post terminal 12, the accommodating part 121 is provided with a second accommodating groove 12120, and at least a part of the adapting piece 222 is accommodated in the second accommodating groove 12120 and is electrically connected to the post terminal 12.

In the above technical solution, compared with the solution including the adapting piece 222 in the third embodiment, in the fourth embodiment, at least a part of the adapting piece 222 is accommodated in the second accommodating groove 12120, but the relative positions of the tab part 221 and the second accommodating groove 12120 are not limited, that is, at least a part of the tab part 221 may be accommodated in the second accommodating groove 12120, and the tab part 221 may also be completely located outside the second accommodating groove 12120, thereby meeting different structural design requirements.

In the above technical solution, by accommodating at least a part of the adapting piece 222 in the second accommodating groove 12120, the adapting piece 222 can occupy the space in the post terminal 12, such that the space occupied by the adapting piece 222 in the housing 11 can be reduced, so as to accommodate a larger active substance-coated part 21, thereby improving the energy density of the battery cell 10. Moreover, the probability of short circuit between the adapting piece 222 and the active substance-coated part 21 can be reduced, and the risk of short circuit of the battery cell assembly 2 can be reduced, thereby improving the stability and reliability of the battery cell 10.

In addition, by using the adapting piece 222 to achieve an indirect electrical connection between the second gathering part 2213 and the post terminal 12, the adapting piece 222 can be welded to the post terminal 12 at a part avoiding the second gathering part 2213, such that the welding between the adapting piece 222 and the post terminal 12 is secure, the risk of welding cracking is low, and the reliability and stability of the battery cell 10 can be further improved. Meanwhile, by electrically connecting the post terminal 12 and the tab plates 2211 via the adapting piece 222, the configuration of the tab plates 2211 can also be simplified.

FIG. 31 is a partial cross-sectional schematic diagram of the battery cell 10 according to some embodiments of the present application. Referring to FIG. 31, in other embodiments of the present application, the accommodating part 121 is provided with a fourth accommodating groove 12150. The fourth accommodating groove 12150 is a groove body, and the groove body is a groove-shaped structure of a certain depth. A surface of the post terminal 12 on a side distal to the active substance-coated part 21 is the post terminal outer end surface 123, and the opening of the fourth accommodating groove 12150 is formed on the post terminal outer end surface 123. The fourth accommodating groove 12150 is in communication with the interior of the housing 11 through the second perforation 12160. The conductive part 22 may not be accommodated in the fourth accommodating groove 12150. For example, the conductive part 22 may be provided in the second perforation 12160 in a penetrating manner, and the electrical connection position of the conductive part 22 and the post terminal 12 is located on the wall of the second perforation 12160 formed on the post terminal 12.

In the above embodiments, by providing the fourth accommodating groove 12150, the electrical connection between the conductive part 22 and the wall of the second perforation 12160 can be easily achieved. Furthermore, in some cases, the sealing of the second perforation 12160 can be achieved by utilizing the electrical connection between the conductive part 22 and the post terminal 12. For example, the conductive part 22 may be welded to the wall of the second perforation 12160 at a position of the second perforation 12160 connected to the fourth accommodating groove 12150, so as to facilitate the operation. In addition, by controlling a weld mark, the second perforation 12160 can be sealed by utilizing the weld mark and the conductive part 22, so as to mitigate the problem of the electrolyte in the housing 11 leaking from the second perforation 12160.

It should be noted that the specific shape of the fourth accommodating groove 12150 is not limited, and may be a regular shape or an irregular shape, for example, a columnar groove of constant cross-section with a rectangular, elliptical, or track-shaped cross-section, a trapezoidal groove with a rectangular cross-section and a gradually changing cross-sectional dimension, a hemispherical groove with a circular cross-section and a gradually changing cross-sectional dimension, a semi-ellipsoidal groove with an elliptical cross-section and a gradually changing cross-sectional dimension, or the like.

In the embodiments of the present application, the shape of the second perforation 12160 may be a long strip shape, so as to match the shape of the plate-like part of the conductive part 22, thereby facilitating the plate-like part of the conductive part 22 to pass through. Meanwhile, when the second perforation 12160 is long strip-shaped, the fourth accommodating groove 12150 may also be configured into a shape in which the length of the cross-section is greater than the width, such as a rectangle, an ellipse, and a track shape. In this case, the length direction of the second perforation 12160 may be set to be consistent with the length direction of the cross-section of the fourth accommodating groove 12150, such that the space can be fully utilized.

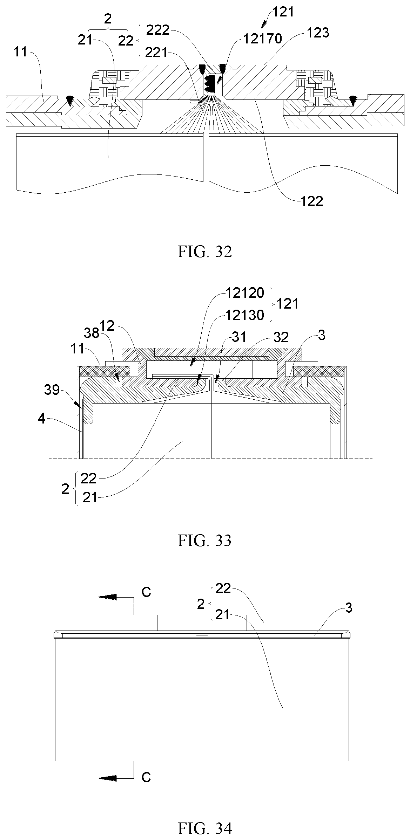

It should be noted that the accommodating part 121 of the embodiments of the present application is not limited to the above forms in which at least one accommodating groove must be provided. For example, in other embodiments of the present application, FIG. 32 is a partial cross-sectional schematic diagram of the battery cell 10 according to some embodiments of the present application. Referring to FIG. 32, the accommodating part 121 may be provided with only a third perforation 12170, a surface of the post terminal 12 on a side facing the active substance-coated part 21 is the post terminal inner end surface 122, a surface of the post terminal 12 on a side distal to the active substance-coated part 21 is the post terminal outer end surface 123, the third perforation 12170 is in the form of a through hole and passes through the post terminal inner end surface 122 and the post terminal outer end surface 123, and at least a part of the conductive part 22 is provided in the third perforation 12170 in a penetrating manner. The electrical connection position of the conductive part 22 and the post terminal 12 is not limited. For example, the electrical connection position may be located on the wall of the third perforation 12170 formed on the post terminal 12, or the conductive part 22 may pass through the third perforation 12170, such that the electrical connection position is located on the post terminal outer end surface 123 outside the third perforation 12170. In addition, the shape of the third perforation 12170 is not limited. The third perforation may be a regular-shaped hole of constant cross-section, or a hole of variable cross-section. Furthermore, the cross-sectional shape of the third perforation 12170 is not limited, for example, a long strip shape, such as a rectangle, an ellipse, or a track shape, so as to match the shape of the plate-like part of the conductive part 22, thereby facilitating the plate-like part of the conductive part 22 to be provided in the third perforation 12170 in a penetrating manner, which will not be described in detail herein.

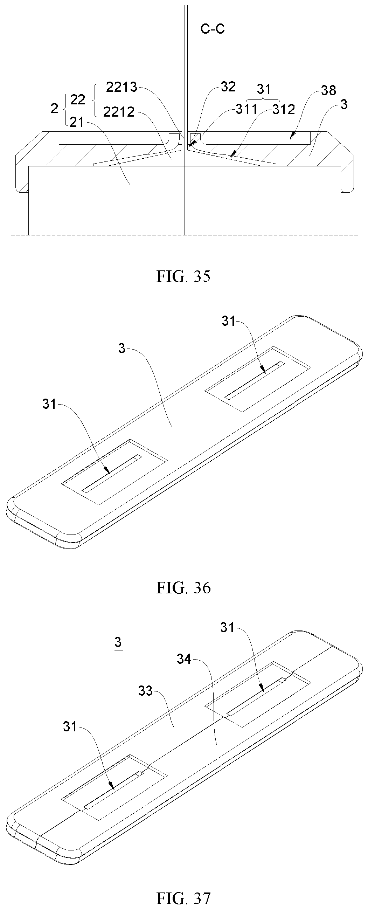

FIG. 33 is a partial cross-sectional schematic diagram of the battery cell 10 according to some embodiments of the present application, FIG. 34 is a schematic diagram of the fit between the battery cell assembly 2 and the support 3 according to some embodiments of the present application, and FIG. 35 is a cross-sectional view along the line C-C in FIG. 34. Referring to FIGs. 33-35, in the embodiments of the present application, the battery cell 10 further includes a support 3. The support 3 is located in the housing 11, and the support 3 is located on a side of the active substance-coated part 21 proximal to the post terminal 12. The support 3 is provided with a clearance hole 31 configured to provide clearance for the conductive part 22. The conductive part 22 can pass through the clearance hole 31 to extend to the side of the support 3 distal to the active substance-coated part 21, so as to be welded to the post terminal 12, thereby ensuring the normal charging and discharging operations of the battery cell 10.

In the above technical solution, by arranging the support 3 on the side of the active substance-coated part 21 proximal to the post terminal 12, the active substance-coated part 21 can be separated from the housing 11 by utilizing the support 3, thereby improving the reliability of the battery cell 10. Furthermore, by arranging the clearance hole 31 on the support 3, the conductive part 22 can be guided and constrained to be fitted to the post terminal 12 by passing through the clearance hole 31, thereby eliminating the need for the conductive part 22 to bypass the edge of the support 3 to approach the post terminal 12, which can not only simplify the arrangement of the conductive part 22, save the material of the conductive part 22, and reduce the cost, but also reduce the risk of short-circuit connection between the conductive part 22 and the active substance-coated part 21 by the support 3 supporting and guiding the conductive part 22 to be fitted to the post terminal 12, so as to further improve the reliability of the battery cell 10.

Referring to FIGs. 33-35 again, optionally, the support 3 is provided with a guiding part 32, the guiding part 32 defines, in an enclosing manner, at least a part of the clearance hole 31, and the guiding part 32 at least partially extends to the accommodating part 121.

It is worth noting that the guiding part 32 protrudes from the support 3 and extends into the accommodating part 121, and at least a part of the clearance hole 31 is formed in the guiding part 32, such that when the conductive part 22 is provided in the clearance hole 31 in a penetrating manner, at least a part of the conductive part 22 can be easily accommodated in the accommodating part 121, thereby improving the assembly efficiency of the conductive part 22. Meanwhile, through the arrangement of the guiding part 32, the fits between the support 3 and the post terminal 12, and between the support 3 and the conductive part 22 become tighter and more reliable, such that the structure of the battery cell 10 becomes more compact, which is more conducive to improving the energy density of the battery cell 10.

Referring to FIGs. 33-35 again, optionally, the support 3 is provided with a third groove 38, and at least a part of the post terminal 12 located in the housing 11 is accommodated in the third groove 38.

In the above technical solution, by arranging the third groove 38 on the support 3, at least a part of the part of the post terminal 12 located in the housing 11 is accommodated in the third groove 38 of the support 3, such that the compactness of the structure can be improved, which is conducive to reducing the space occupied by the support 3 in the housing 11 and improving the volumetric energy density of the battery cell 10.

In addition, in some embodiments, the guiding part 32 may be configured to participate in defining the third groove 38, so as to simplify the structure of the support 3 and reduce the design and processing difficulties of the support 3, which is conducive to increasing the wall thickness of the guiding part 32 and improving the guiding reliability of the conductive part 32. Furthermore, it is also conducive to improving the stability and reliability of the post terminal 12, so as to ensure the reliability and stability of the electrical connection between the post terminal 12 and the battery cell assembly 2, and improve the reliability and stability of the charging and discharging operations of the battery cell 10.

Referring to FIGs. 33-35 again, optionally, in the embodiments of the present application, the clearance hole 31 includes a first hole segment 311 and a second hole segment 312. The second hole segment 312 is located on a side of the first hole segment 311 proximal to the active substance-coated part 21, and the cross-sectional area of the second hole segment 312 gradually increases in a direction away from the first hole segment 311. At least a part of the first gathering part 2212 may be accommodated in the second hole segment 312, and the second gathering part 2213 may be provided in the first hole segment 311 in a penetrating manner.

In the above technical solution, by providing the clearance hole 31 to include the second hole segment 312 that gradually expands in the direction toward the active substance-coated part 21, it is convenient for the second hole segment 312 to accommodate more first gathering parts 2212, so as to improve the compactness of the fit between the support 3 and the battery cell assembly 2, such that the overall volume of the battery cell 10 is smaller, and the battery 100 can accommodate a greater number of battery cells 10, thereby improving the volumetric energy density of the battery 100. In addition, in the above technical solution, the specific explanations of the first gathering part 2212 and the second gathering part 2213 have been provided in the previous embodiments and will not be repeated herein.

In the embodiments of the present application, the support 3 may be of an integrated structure or a split-type structure. FIG. 36 is a schematic structural diagram of the integrated support 3 according to some embodiments of the present application. Referring to FIG. 36, when the support 3 is of the integrated structure, the clearance hole 31 is provided in the form of a through hole penetrating through the support 3. As such, the support 3 of the integrated structure is convenient to process, the support 3 has good reliability, and the support 3 can be conveniently assembled with the housing assembly 1, thereby improving the assembly efficiency and fitting stability. It can be understood that how to process the support 3 can be specifically selected according to the material of the support 3. For example, when the support 3 is an insulating plastic member, the support 3 of an integrated structure may be obtained by injection molding.

FIG. 37 is a schematic structural diagram of the split-type support 3 according to some embodiments of the present application. Referring to FIG. 37, when the support 3 is of the split-type structure, the support 3 includes a first support 33 and a second support 34 that are separable. Both the first support 33 and the second support 34 are of a long-strip plate structure, and can be detachably connected, for example, in insertion fit or snap fit, to facilitate the assembly. Meanwhile, a half-hole structure is provided on a side of the first support 33 proximal to the second support 34, and another half-hole structure of a matched shape is correspondingly provided on a side of the second support 34 proximal to the first support 33. The half-hole structure of the first support 33 and the half-hole structure of the second support 34 together define, in an enclosing manner, the annular clearance hole 31. That is, the clearance hole 31 is defined between the first support 33 and the second support 34.

In the above technical solution, the clearance hole 31 is defined through the cooperation of the first support 33 and the second support 34. When the support 3 and the battery cell assembly 2 are assembled, it is not necessary to pass the conductive part 22 from one end of the clearance hole 31 to the other end. Instead, the first support 33 and the second support 34 can be assembled at the position of the conductive part 22 to clamp the conductive part 22, such that the clearance hole 31 surrounds the conductive part 22, thereby facilitating the assembly of the support 3 and the battery cell assembly 2 and improving the assembly efficiency.

As an optional solution, when the cross-section of the clearance hole 31 is long strip-shaped, the first support 33 and the second support 34 are separately provided on two sides of the clearance hole 31 in the width direction. For example, if the width direction of the clearance hole 31 is a left-right direction, the first support 33 and the second support 34 are located on the left and right sides of the clearance hole 31, so as to facilitate the fit of the first support 33, the second support 34, and the conductive part 22.

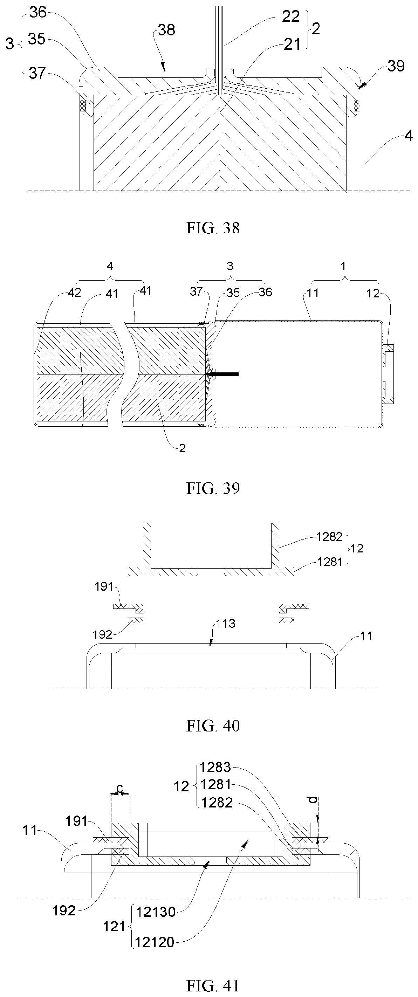

FIG. 38 is a partial cross-sectional schematic diagram of the battery cell assembly 2 and the support 3 according to some embodiments of the present application, and FIG. 39 is an exploded view of the structure of the battery cell assembly 2, the support 3, and the housing assembly 1 according to some embodiments of the present application. Referring to FIGs. 33, 38, and 39, in the embodiments of the present application, the structure of the support 3 is not limited to this. For example, the edge of the support 3 may also be provided with a housing entry guiding surface 35. The housing entry guiding surface 35 may be an inclined surface or a curved surface. When the structure is orthographically projected in the first direction Z, the orthographic projection of the active substance-coated part 21 is completely located within the range of the orthographic projection of the support 3, and the range of the orthographic projection of the support 3 is larger than the range of the orthographic projection of the active substance-coated part 21. During assembly, the support 3 and the battery cell assembly 2 may be pre-assembled together, and then the pre-assembled assembly is mounted into the housing 11. During the mounting, the support 3 is located at the front end of the active substance-coated part 21, that is, the support 3 enters the housing 11 before the active substance-coated part 21, such that the difficulty of the support 3 entering the housing 11 can be reduced by utilizing the housing entry guiding surface 35, and the active substance-coated part 21 can be protected by utilizing the relatively large projection area of the support 3, thereby reducing the probability of scratching and damaging the active substance-coated part 21 and the housing 11, and improving the assembly efficiency and the success rate. Moreover, the contact area between the support 3 and the active substance-coated part 21 can be increased, thereby mitigating the stress concentration problem and saving other structural members.

Referring to FIG. 38, in the embodiments of the present application, the battery cell 10 may further include an inner insulating member 4. The inner insulating member 4 is located in the housing 11 and wrapped outside the active substance-coated part 21, and the inner insulating member 4 is connected to the support 3. In the above embodiments, in one aspect, by wrapping the active substance-coated part 21 with the inner insulating member 4, the insulation reliability between the active substance-coated part 21 and the housing 11 can be improved, the corrosion of the housing 11 caused by the contact between the active substance-coated part 21 and the housing 11 can be reduced or prevented, and the leakage of the electrolyte caused by the corrosion of the housing 11 can be reduced, thereby improving the reliability of the battery cell 10. In another aspect, connecting the inner insulating member 4 to the support 3 can reduce the difficulty of fixing the inner insulating member 4 and improve the reliability of the inner insulating member 4 wrapped outside the active substance-coated part 21.

Referring to FIG. 38, in the embodiments of the present application, the support 3 includes a body part 36 and an extending part 37. The body part 36 is located on a side of the active substance-coated part 21 proximal to the post terminal 12, and the extending part 37 is connected to the body part 36 and is located in the outer peripheral region of the active substance-coated part 21. For example, the extending part 37 may be connected to the circumferential edge of the body part 36 to form an annular extending structure connected to the body part 36, or may extend from a part of the circumference of the body part 36 to form a block structure protruding relative to the body part 36. In one aspect, a limiting fit with the active substance-coated part 21 can be achieved through the arrangement of the extending part 37, so as to mitigate the problem of corrosion caused by carbon powder falling off the edge of the active substance-coated part 21 and connecting to the housing 11. In another aspect, the inner insulating member 4 can also be fixed through the arrangement of the extending part 37, thereby improving the connection reliability between the inner insulating member 4 and the support 3 and achieving a better insulation effect.

Illustratively, referring to FIG. 38, the body part 36 and the extending part 37 may define a positioning groove 39 located on a side of the extending part 37 distal to the active substance-coated part 21, and an end part of the inner insulating member 4 is embedded in the positioning groove 39 to prevent the inner insulating member 4 from protruding from the edge of the body part 36. In this way, when entering the housing, the body part 36 can be used to protect the inner insulating member 4, thereby reducing the probability of scratching and damaging the inner insulating member 4 and the housing 11.

Specifically, referring to FIG. 39, the inner insulating member 4 may be an integrated film, and is provided with main body parts 41 located on both sides of the active substance-coated part 21 in the thickness direction and a connecting part 42 connecting the two main body parts 41. The connecting part 42 is located on a side of the active substance-coated part 21 distal to the post terminal 12, and an edge of the main body part 41 on a side distal to the connecting part 42 extends to the extending part 37 and is connected to the extending part 37, thereby realizing better insulation performance and facilitating the connection.

In the embodiments of the present application, the specific method for arranging the post terminal 12 on the housing 11 is not limited, for example, by riveting or by welding, which will be separately described below.

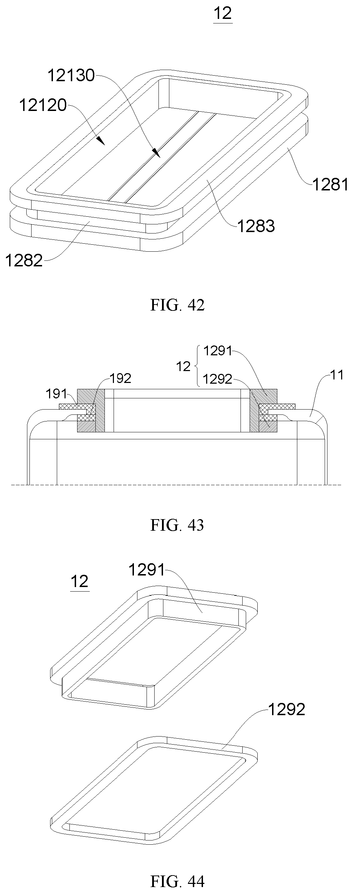

For example, in some embodiments, FIG. 40 is an exploded view of the structure of the post terminal 12, the housing 11, and the sealing gasket according to some embodiments of the present application; FIG. 41 is an assembly diagram of the first post terminal 12, the housing 11, and the sealing gasket shown in FIG. 40; and FIG. 42 is a schematic structural diagram of the post terminal 12 according to some embodiments of the present application. Referring to FIGs. 40-42, the post terminal 12 may be in an integrated structure and riveted to the housing 11, so as to improve the assembly efficiency of the post terminal 12 and reduce the height of the post terminal 12 protruding from the surface of the housing 11, which is conducive to improving the energy density and improving the compactness.

Specifically, referring to FIGs. 40-42, before riveting, the post terminal 12 may include a stopper part 1281 and a penetration part 1282. During assembly, the stopper part 1281 is stopped inside the housing 11, and the penetration part 1282 is provided in the mounting hole 113 in a penetrating manner. Then, a part of the penetration part 1282 located outside the housing 11 is riveted to form a flange part 1283. The flange part 1283 is stopped outside the housing 11, thereby achieving the mounting of the post terminal 12.

Optionally, referring to FIGs. 40 and 41, the housing assembly 1 may include a number of sealing gaskets fitted between the housing 11 and the post terminal 12, such as the first sealing gasket 191 and the second sealing gasket 192 shown in FIG. 40. The sealing gaskets are assembled in place before riveting. After the post terminal 12 is riveted, the post terminal 12 presses the sealing gaskets to form a seal, such that the sealing performance of the fit between the post terminal 12 and the housing 11 can be improved by utilizing the sealing gaskets. The number, position and material of the sealing gaskets are not limited. For example, the material may be silica gel, plastic, etc., which is not limited herein.

Optionally, referring to FIG. 41, the length c of the flange part 1283 may be greater than or equal to 1 mm, and the thickness d may be greater than or equal to 2 mm, so as to improve the riveting strength of the post terminal 12. When the length c of the flange part 1283 is less than 1 mm and/or the thickness d is less than 2 mm, the reliability of the post terminal 12 and the housing 11 is reduced under relatively strong vibration.

For another example, in other embodiments of the present application, FIG. 43 is an assembly diagram of the post terminal 12, the housing 11, and the sealing gasket according to some embodiments of the present application; and FIG. 44 is an exploded view of the structure of the post terminal 12 shown in FIG. 43. Referring to FIGs. 43 and 44, the post terminal 12 may be in a split-type structure and be welded together to be mounted on the housing 11. For example, the post terminal 12 includes a first part 1291 and a second part 1292. At least a part of the first part 1291 is stopped outside the housing 11, and at least a part of the second part 1292 is stopped inside the housing 11. At least one of the first part 1291 and the second part 1292 is provided in the mounting hole 113 in a penetrating manner and connected to the other by welding (for example, laser welding), such that the mounting of the post terminal 12 can be achieved.

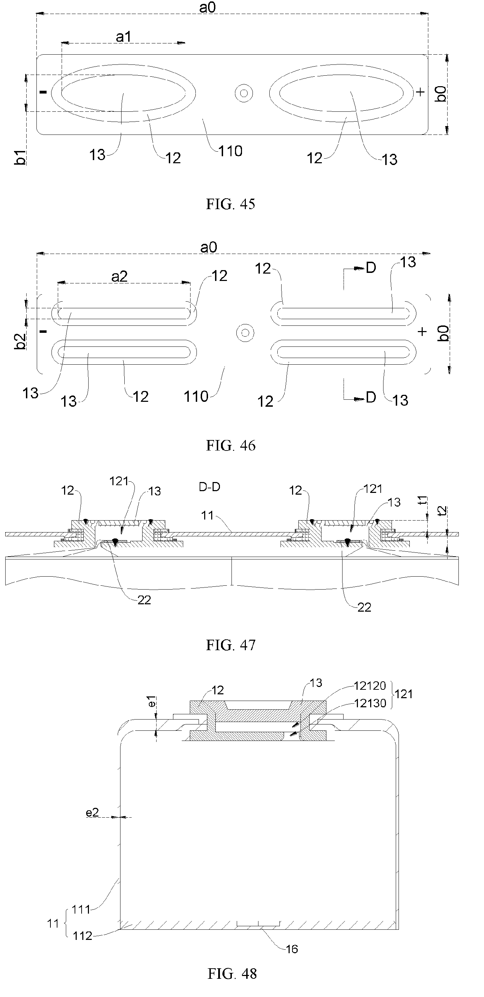

In some optional embodiments, FIG. 45 is an orthographic projection view of the battery cell 10 according to some embodiments of the present application, and FIG. 46 is an orthographic projection view of the battery cell 10 according to some embodiments of the present application. Referring to FIGs. 45 and 46, there are a plurality of post terminals 12, and the plurality of post terminals are all located on a surface on the same side of the housing 11, thereby facilitating mounting and improving assembly efficiency.

It should be noted that the arrangement manner of the plurality of post terminals 12 on the surface on the same side is not limited. For example, when the cross-section of the post terminal 12 is a slender structure, for example, with a cross-sectional length greater than or equal to three times the cross-sectional width, such as an ellipse, a track shape, or a rectangle, the post terminal can better match a thin and flat housing 11. For example, the plurality of post terminals 12 are all provided on a surface of the housing 11 on a side in the height direction (referred to as a first wall surface 110). The length direction of each of the post terminals 12 is consistent with the length direction of the first wall surface 110 of the housing 11, and the plurality of post terminals 12 are spaced apart in the length direction and/or width direction of the first wall surface 110.

For example, in the example shown in FIG. 45, when the first wall surface 110 is provided with two post terminals 12, the two post terminals 12 are spaced apart in the length direction of the first wall surface 110. Optionally, referring to FIG. 45, a part of the post terminal 12 located outside the housing 11 (referred to as the exterior of the post terminal) is annular. In the length direction of the first wall surface 110, the inner ring length a1 of the exterior of the post terminal is greater than or equal to 1/3 of the length a0 of the first wall surface 110, and in the width direction of the first wall surface 110, the inner ring width b1 of the exterior of the post terminal is greater than or equal to 3/4 of the width b0 of the first wall surface 110. As such, the post terminal 12 can provide a larger area for electrical connection to the busbar component, so as to further improve the current passage capacity of the post terminal 12. Illustratively, the inner ring length a1 of the exterior of the post terminal is greater than or equal to 50 mm, and the inner ring width b1 of the exterior of the post terminal is greater than or equal to 30 mm.

In addition, referring to FIG. 45, when the first wall surface 110 is provided with two post terminals 12 and the two post terminals 12 are spaced apart in the length direction of the first wall surface 110, in some optional embodiments, each of the post terminals 12 includes a part located inside the housing 11 (referred to as the interior of the post terminal). In the length direction of the first wall surface 110, the length of the interior of the post terminal is greater than or equal to 1/3 of the length of the first wall surface 110, and in the width direction of the first wall surface 110, the width of the interior of the post terminal is greater than or equal to 3/4 of the width of the first wall surface 110. As such, the post terminal 12 can provide a larger area for electrical connection to the conductive part 22, so as to further improve the current passage capacity of the post terminal 12. Illustratively, the length of the interior of the post terminal is greater than or equal to 50 mm, and the width of the interior of the post terminal is greater than or equal to 30 mm.

For another example, in the example shown in FIG. 46, when the first wall surface 110 is provided with four post terminals 12, two of the post terminals 12 are spaced apart in the width direction of the first wall surface 110 to form a group, and a total of two groups are spaced apart in the length direction of the first wall surface 110. Optionally, referring to FIG. 46, a part of the post terminals 12 located outside the housing 11 (referred to as an exterior of the post terminal) is annular, and in the length direction of the first wall surface 110, an inner ring length a2 of the exterior of the post terminal is greater than or equal to 1/3 of a length a0 of the first wall surface 110, and in the width direction of the first wall surface 110, an inner ring width b2 of the exterior of the post terminal is greater than or equal to 1/5 of a width b0 of the first wall surface 110. As such, the post terminal 12 can provide a larger area for electrical connection to the busbar component, so as to further improve the current passage capacity of the post terminal 12. Illustratively, the inner ring length a2 of the exterior of the post terminal is greater than or equal to 50 mm, and the inner ring width b2 of the exterior of the post terminal is greater than or equal to 8mm.

In addition, referring to FIG. 46, when the first wall surface 110 is provided with four post terminals 12, two of the post terminals 12 are spaced apart in the width direction of the first wall surface 110 to form a group, and a total of two groups are spaced apart in the length direction of the first wall surface 110, in some optional embodiments, the post terminal 12 includes a part located inside the housing 11 (referred to as the interior of the post terminal). In the length direction of the first wall surface 110, the length of the interior of the post terminal is greater than or equal to 1/3 of the length of the first wall surface 110, and in the width direction of the first wall surface 110, the width of the interior of the post terminal is greater than or equal to 1/5 of the width of the first wall surface 110. As such, the post terminal 12 can provide a larger area for electrical connection to the conductive part 22, so as to further improve the current passage capacity of the post terminal 12. Illustratively, the length of the interior of the post terminal is greater than or equal to 50 mm, and the width of the interior of the post terminal is greater than or equal to 8mm.

In some embodiments, referring to FIGs. 45 and 46, a part of the post terminal 12 is located inside the housing 11, and a part of the post terminal 12 is located outside the housing 11. The orthographic projection area of the part of the post terminal 12 located outside the housing 11 on the first wall surface 110 is greater than or equal to 5% of the area of the first wall surface 110. For example, the orthographic projection area of the part of the post terminal 12 located outside the housing 11 on the first wall surface 110 is greater than or equal to 5%, 6%, 7%, 8%, 9%, or 10% of the area of the first wall surface 110. As such, the connection area between the post terminal 12 and the busbar component can be increased, so as to increase the effective current passage area between the post terminal 12 and the busbar component, which is conducive to improving the charging speed of the battery cell 10.

In addition, in some embodiments, FIG. 47 is a cross-sectional view along the line D-D in FIG. 46. Referring to FIG. 47, the vertical height t1 of the part of the post terminal 12 protruding from the outer surface of the first wall surface 110 (referred to as the exterior of the post terminal) from the first wall surface 110 may be less than or equal to 3.2 mm, and the vertical height t2 of the part of the post terminal 12 protruding from the inner surface of the first wall surface 110 (referred to as the interior of the post terminal) from the first wall surface 110 may be less than or equal to 2 mm, so as to improve the volumetric energy density of the battery cell 10.

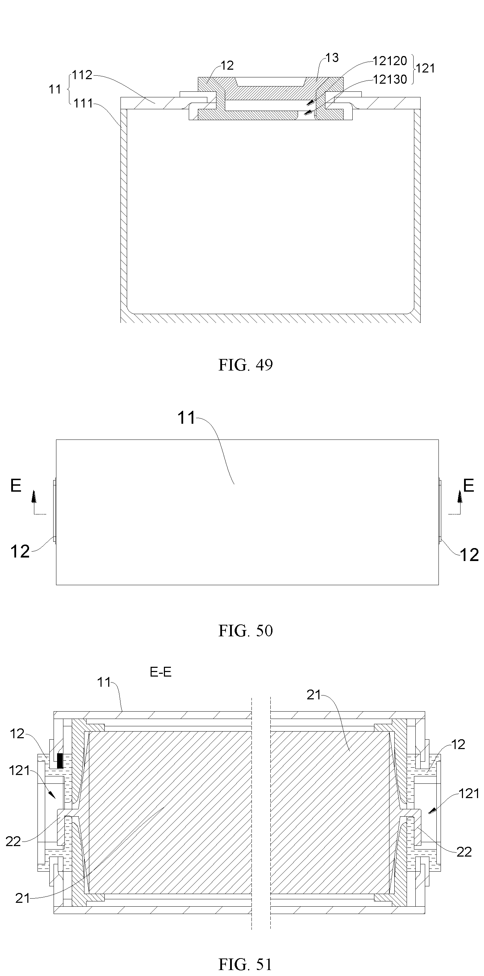

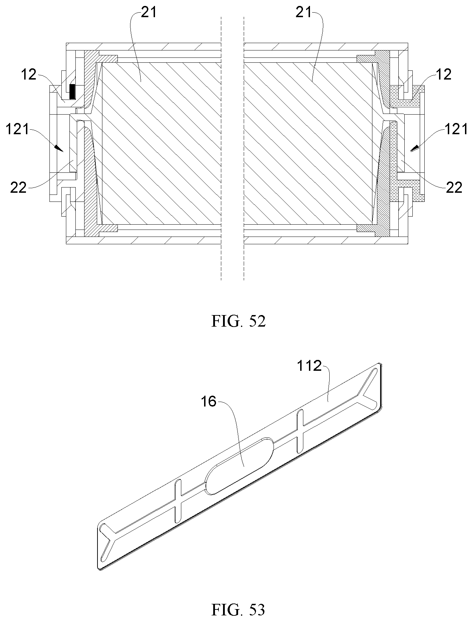

FIG. 48 is a cross-sectional schematic diagram of the housing assembly 1 according to some embodiments of the present application; FIG. 49 is a cross-sectional schematic diagram of the housing assembly 1 according to some embodiments of the present application; FIG. 50 is an orthographic projection diagram of the battery cell 10 according to some embodiments of the present application; FIG. 51 is a cross-sectional view along the line E-E in FIG. 50; FIG. 52 is a partial cross-sectional schematic diagram of the battery cell 10 according to some embodiments of the present application. Referring to FIGs. 48-52, in the embodiments of the present application, the housing 11 specifically includes a housing body 111 and a housing cover 112. The housing body 111 is of a square annular structure with one or both ends open. When one end of the housing body is open, the number of the housing cover 112 is one, and the housing cover lids an open position. When both ends of the housing body are open, the number of the housing cover 112 is two, and the housing covers respectively lid two open ends of the housing body 111.

Specifically, when the housing 11 includes the housing body 111 and the housing cover 112, and one end of the housing body 111 is open, the housing body 111 is an integrally formed member, and may specifically be a square structure formed by stretching. In this case, the post terminal 12 may be arranged on at least one of the housing body 111 or the housing cover 112. Illustratively, referring to FIG. 48, the post terminal 12 may be specifically arranged at the end of the housing body 111 distal to the housing cover 112. When the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10 and help reduce the wall thickness of the housing body 111, thereby reducing costs and weight, and facilitating miniaturization of the battery cell 10.

As an optional solution, referring to FIG. 48 again, when a plurality of post terminals 12 are provided, all the post terminals 12 are arranged at the end of the housing body 111 distal to the housing cover 112. As such, when the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10. Furthermore, the wall thickness e1 of an end wall of the housing body 111 distal to the housing cover 112 may be reduced to less than or equal to 2 mm, and the wall thickness e2 of the side wall of the housing body 111 connecting the above end wall and the housing cover 112 may be reduced to less than or equal to 0.8 mm, thereby reducing costs and weight, and facilitating miniaturization of the battery cell 10.

When the above first accommodating groove 12110 corresponding to the mounting hole 113 is formed on the post terminal 12, the wall thickness of a part of the post terminal 12 located on a side of the first accommodating groove 12110 distal to the active substance-coated part 21 is small, such that the welding of the conductive part 22 to the post terminal 12 can be achieved from the outside of the housing 11. Referring to FIG. 48, in the case where the housing 11 includes a housing body 111 and a housing cover 112, and the housing cover 112 is arranged at an open end of the housing body 111, even if the post terminal 12 is arranged at a closed end of the housing body 111, there is no need to worry about the difficulty in welding the conductive part 22 to the post terminal 12 from the inside of the housing 11, because the conductive part 22 and the post terminal 12 can be welded from the outside of the housing 11, such that the connection stability and reliability of the housing body 111 and the housing cover 112 can be improved by arranging the post terminal 12 at the closed end of the housing body 111.

When the above second accommodating groove 12120 is formed on the post terminal 12, since the welding of the conductive part 22 to the post terminal 12 can be achieved from the outside of the housing 11 through the opening of the second accommodating groove 12120, referring to FIG. 48, in the case where the housing 11 includes a housing body 111 and a housing cover 112, and the housing cover 112 is arranged at an open end of the housing body 111, even if the post terminal 12 is arranged at a closed end of the housing body 111, there is no need to worry about the difficulty in welding the conductive part 22 to the post terminal 12 from the inside of the housing 11, because the conductive part 22 and the post terminal 12 can be welded from the outside of the housing 11, such that the connection stability and reliability of the housing body 111 and the housing cover 112 can be improved by arranging the post terminal 12 at the closed end of the housing body 111.

Certainly, referring to FIG. 49, in other embodiments of the present application, all the post terminals 12 may be arranged on the housing cover 112 as required. As such, the assembly of the post terminal 12 and the housing cover 112 is facilitated, which is not limited in the embodiments.

In addition, referring to FIGs. 50-52, in the embodiments of the present application, when a plurality of post terminals 12 are provided, the post terminals 12 may also be separately provided on two surfaces on different sides of the housing 11. For example, a plurality of post terminals 12 are provided and are separately provided on surfaces of the housing 11 on two adjacent sides. For another example, a plurality of post terminals 12 are provided and are separately provided on surfaces of the housing 11 on two opposite sides.

When the post terminals 12 are separately provided on surfaces on two opposite sides of the housing 11, the active substance-coated part 21 proximal to the post terminal 12 may be provided with the conductive part 22 on each side, and the conductive part 22 is connected to the post terminal 12 on the adjacent side in a fitting manner, so as to mitigate the problem that the tab part 221 is pulled by the post terminal 12 on the same side, resulting in cracking of the connection between the tab part 221 and the active substance-coated part 21, thereby improving the reliability of the battery cell 10. It is worth noting that the post terminals 12 on two sides may be the same or different, and the connection modes between the post terminals 12 on two sides and the conductive part 22 may be the same or different, which are not limited herein.

Certainly, in other embodiments of the present application, the post terminal 12 may also be arranged on a surface of the housing 11 on a side of the largest area. For another example, in some optional embodiments of the present application, the post terminal 12 may be located on the top surface of the housing 11. For yet another example, in some optional embodiments of the present application, the post terminal 12 may be located on the bottom surface of the housing 11, and the like. When the post terminal 12 is located on the bottom surface of the housing 11, the accommodating part 121 may be used to accommodate the electrolyte, thereby increasing the cycle life of the battery cell 10. In addition, when the post terminal 12 is located on the bottom surface of the housing 11 and the support 3 is located at the bottom of the active substance-coated part 21, the contact area between the support 3 and the active substance-coated part 21 can be increased, thereby mitigating the stress concentration problem and saving other supporting structural members.

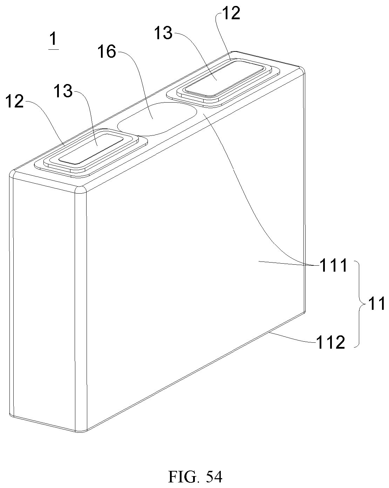

FIG. 53 is a schematic structural diagram of the housing cover 112 according to some embodiments of the present application, and FIG. 54 is a schematic diagram of a battery cell according to some embodiments of the present application. Referring to FIGs. 53 and 54, in the embodiments of the present application, the housing 11 is provided with a pressure relief part 16. The specific structure of the pressure relief part 16 is not limited. For example, the pressure relief part may be an explosion-proof valve or a weak part, which can be used to relieve pressure when the pressure in the battery cell 10 is high, so as to improve the reliability of the battery cell 10.

Optionally, referring to FIG. 54, the pressure relief part 16 and the post terminal 12 may be located on a surface of the housing 11 on the same side. As such, processing and assembly can be facilitated. Optionally, referring to FIGs. 48 and 53, the pressure relief part 16 and the post terminal 12 may also be provided on surfaces of the housing 11 on two opposite sides. As such, the space can be saved, the volume of the post terminal 12 can be increased, and the adverse effects on the post terminal 12 when the pressure relief part 16 relieves pressure can be reduced.

Referring to FIGs. 48 and 53 again, in the embodiments of the present application, the pressure relief part 16 may also be provided on the housing cover 112 as required. Since the housing cover 112 does not need to assume the function of mounting the post terminal 12, and the connection position of the housing cover 112 and the housing 11 is less affected by vibration during the charging and discharging processes of the battery cell 10 and is unlikely to crack, the thickness housing of the housing cover 112 is set to be relatively small, which is more convenient for processing and manufacture of the pressure relief part 16. Illustratively, the pressure relief part 16 can be formed directly on the housing cover 112 in an integrated engraving manner, so as to fully improve the manufacturability of the battery cell 10. It is worth noting that in the embodiments, the post terminal 12 may be arranged on the housing body 111 or the housing cover 112, which is not limited herein. For example, the pressure relief part 16 may be integrally formed with the housing cover 112, thereby facilitating processing, simplifying assembly, improving production efficiency, and reducing costs.

Referring to FIGs. 3-6, 20, 24, and 25 again, the battery cell 10 according to specific embodiments of the present application is described.

In the embodiments of the present application, the battery cell 10 is in the shape of a rectangular parallelepiped, and the height direction of the battery cell 10 is the first direction Z, the length direction of the battery cell 10 is the second direction X, and the thickness direction of the battery cell 10 is the third direction Y. The battery cell 10 includes a housing 11. The housing 11 includes a housing body 111 and a housing cover 112. The housing body 111 is of a square annular structure, one end of the housing body 111 in the first direction Z is open, and the other end in the first direction Z is closed. The housing cover 112 lids an open position of the housing body 111.

Meanwhile, two post terminals are provided at the closed end of the housing body 111 in the first direction Z. The two post terminals are spaced apart from each other in the second direction X, and are separately a positive electrode post terminal and a negative electrode post terminal. The two post terminals are both post terminals 12 provided with an accommodating part 121, and the accommodating part 121 is provided with a second accommodating groove 12120. Specifically, the post terminal 12 includes a second end wall 12121 and a second side wall 12123, the second end wall 12121 is located on a side of the second side wall 12123 proximal to the housing cover 112, and the second end wall 12121 and the second side wall 12123 define, in an enclosing manner, a second accommodating groove 12120. A surface of the post terminal 12 on a side distal to the housing cover 112 is a post terminal outer end surface 123, the opening of the second accommodating groove 12120 is formed on the post terminal outer end surface 123, a first perforation 12130 is formed on the second end wall 12121, and the first perforation 12130 is located at a position of the second end wall 12121 proximal to the second side wall 12123.

Furthermore, the battery cell 10 includes a battery cell assembly 2, and the battery cell assembly 2 includes an active substance-coated part 21 and a tab part 221. The active substance-coated part 21 is accommodated in the housing 11. The battery cell assembly 2 includes an active substance-coated part 21 and a conductive part 22. The conductive part 22 electrically connects the active substance-coated part 21 to the post terminal 12. The conductive part 22 includes a plurality of tab plates 2211 extending from the active substance-coated part 21 in the first direction Z. Ends of the plurality of tab plates 2211 proximal to the active substance-coated part 21 gather to form a first gathering part 2212, ends of the plurality of tab plates 2211 distal to the active substance-coated part 21 gather and are connected to form a second gathering part 2213, and the first gathering part 2212 connects the second gathering part 2213 to the active substance-coated part 21.

The second gathering part 2213 extends through the first perforation 12130 into the second accommodating groove 12120 and is welded to the second end wall 12121, such that the active substance-coated part 21 is electrically connected to the post terminal 12 through the tab part 221. The orthographic projection P2 of the second gathering part 2213 on the post terminal 12 in the first direction Z is completely located within the range S of the outer contour of the post terminal 12, and the orthographic projection P3 of the first gathering part 2212 on the post terminal 12 in the first direction Z is at least partially located within the range S of the outer contour of the post terminal 12.

In addition, a first cover plate 13 is embedded in the opening of the second accommodating groove 12120, such that after the tab part 221 is welded to the second end wall 12121, the opening of the second accommodating groove 12120 is closed by the fit between the first cover plate 13 and the post terminal 12. The first cover plate 13 is welded to the post terminal 12 to form an electrical connection. Thereafter, when the battery cells 10 are electrically connected by using a busbar component, the busbar component may be welded to the first cover plate 13 to achieve an electrical connection to the post terminal 12.

In the above technical solution, in one aspect, the post terminal 12 is provided with the second accommodating groove 12120, which can reduce the weight of the post terminal 12 to a certain extent, so as to improve the gravimetric energy density of the battery cell 10 and the battery 100. In another aspect, since the opening of the second accommodating groove 12120 is formed on the post terminal outer end surface 123 and the post terminal outer end surface 123 is a surface of the post terminal 12 on a side distal to the active substance-coated part 21, the second accommodating groove 12120 can be open in a direction away from the active substance-coated part 21. In this way, when at least a part of the tab part 221 is accommodated in the second accommodating groove 12120, the accommodation and arrangement of the tab part 221 can be easily achieved through the opening of the second accommodating groove 12120, and the welding operation between the tab part 221 and the post terminal 12 can be easily achieved through the opening of the second accommodating groove 12120, thereby reducing the difficulty in producing the battery cell 10 and improving the production efficiency of the battery cell 10.

Furthermore, the orthographic projection P2 of the second gathering part 2213 on the post terminal 12 in the first direction Z may be completely located within the range S of the outer contour of the post terminal 12, and the tab part 221 can be welded to the post terminal 12 from the outside of the housing 11, such that the distance between the second gathering part 2213 and the post terminal 12 can be set shorter, which is conducive to achieving the welding of the conductive part 22 to the post terminal 12 and improving the welding reliability of the conductive part 22 and the post terminal 12, and to reducing the overall length of the conductive part 22, reducing the cost of the conductive part 22, and mitigating the inverted insertion problem caused by the redundancy of the conductive part 22, thereby improving the reliability of the battery cell 10. In addition, with such an arrangement, the space occupied by the conductive part 22 and the post terminal 12 in the direction perpendicular to the first direction Z can be concentrated, such that the overall space occupied by the conductive part and the post terminal is small, so as to release the remaining space of the battery cell 10 in the direction perpendicular to the first direction Z for arranging other structures, such as an insulating structure which may be arranged to further improve the reliability of the battery cell 10, or for containing more electrolyte to ensure the cycle life of the battery cell 10.

In addition, since the welding of the tab part 221 to the post terminal 12 can be achieved from the outside of the housing 11, the post terminal 12 can be arranged on the closed end of the housing body 111. In this way, when the battery cell 10 is used in a vibration environment, the vibration at the connection between the housing body 111 and the housing cover 112 is small, and the connection position of the housing body 111 and the housing cover 112 is unlikely to crack, which can improve the reliability of the battery cell 10 and help reduce the wall thickness of the housing body 111, thereby reducing costs and weight, and facilitating miniaturization of the battery cell 10.

Meanwhile, since the second accommodating groove 12120 can be in communication with the interior of the housing 11 through the first perforation 12130, the second accommodating groove 12120 can also serve as a buffering and temporary storage structure for the electrolyte, such that a larger number of electrolyte can be accommodated in the housing 11. As the electrolyte will be consumed during the charging and discharging processes of the battery cell 10, a greater amount of electrolyte can prolong the service life of the battery cell 10. It is also due to the fact that the second accommodating groove 12120 can be in communication with the interior of the housing 11 through the first perforation 12130, that the second accommodating groove 12120 can also serve as an accommodating and buffering structure for gas produced in the battery cell assembly 2, reducing the expansion of the battery cell 10 and improving the reliability and stability of the battery cell 10.

According to some embodiments of the present application, the present application further provides a battery 100. The battery 100 includes the battery cell 10 of any one of the above embodiments.

In the above technical solution, the battery 100 is provided with the above battery cell 10, and in the battery cell 10, the second gathering part 2213 is formed by gathering and connecting ends of the plurality of tab plates 2211 distal to the active substance-coated part 21, and the orthographic projection of the end part of the second gathering part 2213 connected to the first gathering part 2212 on the post terminal in the first direction Z is at least partially arranged within the range S of the outer contour of the post terminal 12. In one aspect, it is conducive to shortening the distance of the conductive part 22 from the end part 2214 to the post terminal 12 in the direction perpendicular to the first direction Z, such that the distance between the second gathering part 2213 and the post terminal 12 can be set shorter, thereby facilitating direct or indirect welding of the tab plates 2211 to the post terminal 12, ensuring the welding reliability of the conductive part 22 and the post terminal 12, and thus ensuring the reliability of the battery cell 10 and the battery 100. In another aspect, such an arrangement is conducive to reducing the overall length of the conductive part 22, which can not only reduce the cost of the conductive part 22, but also mitigate the inverted insertion problem caused by the redundancy of the conductive part 22, thereby further improving the reliability of the battery cell 10 and the battery 100. In addition, with such an arrangement, the space occupied by the conductive part 22 and the post terminal 12 in the direction perpendicular to the first direction Z can be concentrated, such that the overall space occupied by the conductive part and the post terminal is small, so as to release the remaining space of the battery cell 10 in the direction perpendicular to the first direction Z for arranging other structures, such as an insulating structure which may be arranged to further improve the reliability of the battery cell 10, or for containing more electrolyte to ensure the cycle life of the battery cell 10 and the battery 100.

According to some embodiments of the present application, the present application further provides an electric device 1000. The electric device 1000 includes the battery 100 of the above embodiments, and the battery 100 is configured to provide electric energy for the electric device 1000.

In the above technical solution, since the electric device 1000 is provided with the above battery 100 and the reliability of the battery 100 can be improved, the reliability of the electric device 1000 can be improved.

It should be noted that unless conflicting, the embodiments and features of the embodiments in the present application may be combined with each other.

The above are only preferred embodiments of the present application, and are not intended to limit the present application. For those skilled in the art, various modifications and changes can be made to the present application. Any modification, equivalent substitution, improvement, and the like made within the spirit and principle of the present application shall all fall within the protection scope of the present application.

## Claims

1. A battery cell (10), comprising:
a housing assembly (1), comprising a housing (11) and a post terminal (12) arranged on the housing (11), and
a battery cell assembly (2), comprising an active substance-coated part (21) and a conductive part (22) electrically connecting the active substance-coated part (21) to the post terminal (12), the conductive part (22) comprising a plurality of tab plates (2211) extending from the active substance-coated part (21) in a first direction (Z), ends of the plurality of tab plates (2211) proximal to the active substance-coated part (21) gathering to form a first gathering part (2212), ends of the plurality of tab plates (2211) distal to the active substance-coated part (21) gathering and being connected to form a second gathering part (2213), and the first gathering part (2212) connecting the second gathering part (2213) to the active substance-coated part (21),
wherein an orthographic projection (P1) of an end part (2214) of the second gathering part (2213) connected to the first gathering part (2212) on the post terminal (12) in the first direction (Z) is at least partially located within a range (S) of an outer contour of the post terminal (12).

2. The battery cell (10) according to claim 1, wherein the orthographic projection (P1) of the end part (2214) on the post terminal (12) in the first direction (Z) is completely located within the range (S) of the outer contour of the post terminal (12).

3. The battery cell (10) according to claim 1 or 2, wherein an orthographic projection (P2) of the second gathering part (2213) on the post terminal (12) in the first direction (Z) is completely located within the range (S) of the outer contour of the post terminal (12).

4. The battery cell (10) according to any one of claims 1 to 3, wherein an orthographic projection (P3) of the first gathering part (2212) on the post terminal (12) in the first direction (Z) is at least partially located within the range (S) of the outer contour of the post terminal (12).

5. The battery cell (10) according to any one of claims 1 to 4, wherein there are a plurality of conductive parts (22), and the orthographic projection (P1) of the end part (2214) of each of the conductive parts (22) on the post terminal (12) in the first direction (Z) is at least partially located within the range (S) of the outer contour of the post terminal (12).

6. The battery cell (10) according to any one of claims 1 to 5, wherein the orthographic projection (P1) of the end part (2214) on the post terminal (12) in the first direction (Z) is eccentrically arranged relative to the post terminal (12).

7. The battery cell (10) according to any one of claims 1 to 6, wherein the conductive part (22) further comprises an adapting piece (222), the adapting piece (222) is configured to connect the second gathering part (2213) to the post terminal (12), and an orthographic projection (P4) of the adapting piece (222) on the post terminal (12) in the first direction (Z) is at least partially located within the range (S) of the outer contour of the post terminal (12).

8. The battery cell (10) according to any one of claims 1 to 6, wherein the post terminal (12) is provided with an accommodating part (121), and at least a part of the conductive part (22) is accommodated in the accommodating part (121).

9. The battery cell (10) according to claim 8, wherein at least a part of the second gathering part (2213) is accommodated in the accommodating part (121);
and/or the conductive part (22) further comprises an adapting piece (222), the adapting piece (222) is configured to connect the second gathering part (2213) to the post terminal (12), and at least a part of the adapting piece (222) is accommodated in the accommodating part (121).

10. The battery cell (10) according to claim 9, wherein at least a part of the first gathering part (2213) is accommodated in the accommodating part (121).

11. The battery cell (10) according to claim 8, wherein the accommodating part (121) is provided with a first accommodating groove (12110), a surface of the post terminal (12) on a side facing the active substance-coated part (21) is a post terminal inner end surface (122), an opening of the first accommodating groove (12110) is formed on the post terminal inner end surface (122), and at least a part of the conductive part (22) is accommodated in the first accommodating groove (12110).

12. The battery cell (10) according to claim 11, wherein the housing (11) is provided with a mounting hole (113), and the post terminal (12) is mounted in the mounting hole (113); in the first direction (Z), a depth (H1) of the first accommodating groove (12110) is greater than or equal to a minimum distance (H2) from the post terminal inner end surface (122) to the mounting hole (113).

13. The battery cell (10) according to claim 11 or 12, wherein the post terminal (12) comprises a first end wall (12111) and a first side wall (12113), the first end wall (12111) is located on a side of the first side wall (12113) distal to the active substance-coated part (21), the first end wall (12111) and the first side wall (12113) define, in an enclosing manner, the first accommodating groove (12110), and an electrical connection position of the conductive part (22) and the post terminal (12) is located on the first end wall (12111) and/or the first side wall (12113).

14. The battery cell (10) according to claim 13, wherein the first end wall (12111) is provided with a first recess (12112), and at least a part of an electrical connection position of the conductive part (22) and the first end wall (12111) is located in the first recess (12112).

15. The battery cell (10) according to any one of claims 11 to 14, wherein the post terminal (12) is provided with a first groove (126), a surface of the post terminal (12) on a side distal to the active substance-coated part (21) is a post terminal outer end surface (123), and an opening of the first groove (126) is formed on the post terminal outer end surface (123).

16. The battery cell (10) according to claim 15, wherein the housing assembly (1) further comprises a groove cover (7), and the groove cover (7) is arranged on the post terminal (12) and closes the opening of the first groove (126).

17. The battery cell (10) according to any one of claims 11 to 16, wherein at least a part of the second gathering part (2213) is accommodated in the first accommodating groove (12110).

18. The battery cell (10) according to claim 17, wherein at least a part of the first gathering part (2212) is accommodated in the first accommodating groove (12110).

19. The battery cell (10) according to any one of claims 11 to 18, wherein the conductive part (22) further comprises an adapting piece (222), the adapting piece (222) is configured to connect the second gathering part (2213) to the post terminal (12), and at least a part of the adapting piece (222) is accommodated in the first accommodating groove (12110).

20. The battery cell (10) according to claim 8, wherein the accommodating part (121) is provided with a second accommodating groove (12120), a surface of the post terminal (12) on a side distal to the active substance-coated part (21) is a post terminal outer end surface (123), an opening of the second accommodating groove (12120) is formed on the post terminal outer end surface (123), the second accommodating groove (12120) is in communication with an interior of the housing (11) through a first perforation (12130), and the conductive part (22) is provided in the first perforation (12130) in a penetrating manner and is at least partially accommodated in the second accommodating groove (12120).

21. The battery cell (10) according to claim 20, wherein an electrical connection position of the conductive part (22) and the post terminal (12) is located on a wall of the first perforation (12130) formed on the post terminal (12).

22. The battery cell (10) according to claim 20, wherein the post terminal (12) comprises a second end wall (12121) and a second side wall (12123), the second end wall (12121) is located on a side of the second side wall (12123) proximal to the active substance-coated part (21), the second end wall (12121) and the second side wall (12123) define, in an enclosing manner, the second accommodating groove (12120), the first perforation (12130) is formed on the second end wall (12121), and an electrical connection position of the conductive part (22) and the post terminal (12) is located on the second end wall (12121) and/or the second side wall (12123).

23. The battery cell (10) according to claim 22, wherein the second end wall (12121) is provided with a second recess (12122), and at least a part of an electrical connection position of the conductive part (22) and the second end wall (12121) is located in the second recess (12122).

24. The battery cell (10) according to any one of claims 20 to 23, wherein the housing (11) is provided with a mounting hole (113), the post terminal (12) is mounted in the mounting hole (113), and in the first direction (Z), a depth (H3) of the second accommodating groove (12120) is greater than or equal to a minimum distance (H4) from the post terminal outer end surface (123) to the mounting hole (113).

25. The battery cell (10) according to any one of claims 20 to 24, wherein the housing assembly (1) further comprises a first cover plate (13), the first cover plate (13) is fitted to the post terminal (12) and closes the opening of the second accommo dating groove (12120), and the first cover plate (13) is electrically connected to the post terminal (12).

26. The battery cell (10) according to claim 25, wherein the first cover plate (13) comprises a first conductive member (131) and a second conductive member (132) made of different materials, the first conductive member (131) is fitted to and electrically connected to the post terminal (12), and the second conductive member (132) is fitted to and electrically connected to the first conductive member (131).

27. The battery cell (10) according to claim 26, wherein the first conductive member (131) is provided with a second groove (1311), the second conductive member (132) is embedded in the second groove (1311), and an opening of the second groove (1311) is formed on a surface of the first conductive member (131) on a side distal to the second accommodating groove (12120), such that the second conductive member (132) is exposed from the opening of the second groove (1311).

28. The battery cell (10) according to any one of claims 25 to 27, wherein the first cover plate (13) is embedded in the opening of the second accommodating groove (12120).

29. The battery cell (10) according to claim 28, wherein a wall surface at the opening of the second accommodating groove (12120) formed on the post terminal (12) is an inclined guiding surface (12126), and the inclined guiding surface (12126) is configured to guide the first cover plate (13) to be fitted to the opening of the second accommodating groove (12120).

30. The battery cell (10) according to claim 28 or 29, wherein the second accommodating groove (12120) comprises a first groove segment (12124) and a second groove segment (12125) located on a side of the first groove segment (12124) proximal to the post terminal outer end surface (123), a cross-sectional area of the second groove segment (12125) is greater than a cross-sectional area of the first groove segment (12124), so as to form a step surface (12127) between the first groove segment (12124) and the second groove segment (12125), and the first cover plate (13) is embedded in the second groove segment (12125) and supported by the step surface (12127).

31. The battery cell (10) according to any one of claims 25 to 30, wherein the first cover plate (13) is provided with a stress relief groove (133), and the stress relief groove (133) is located in an outer peripheral region of the first cover plate (13).

32. The battery cell (10) according to any one of claims 20 to 31, wherein the housing assembly (1) further comprises a second cover plate (14), and the second cover plate (14) lids the first perforation (12130) and is located outside the conductive part (22) in the second accommodating groove (12120).

33. The battery cell (10) according to any one of claims 20 to 32, wherein at least a part of the second gathering part (2213) is accommodated in the second accommodating groove (12120).

34. The battery cell (10) according to claim 33, wherein the accommodating part (121) is further provided with a third accommodating groove (12140), a surface of the post terminal (12) on a side facing the active substance-coated part (21) is a post terminal inner end surface (122), the third accommodating groove (12140) is located on a side of the second accommodating groove (12120) proximal to the active substance-coated part (21), an opening of the third accommodating groove (12140) is formed on the post terminal inner end surface (122), the third accommodating groove (12140) is in communication with the second accommodating groove (12120) through the first perforation (12130), and at least a part of the first gathering part (2212) is accommodated in the third accommodating groove (12140).

35. The battery cell (10) according to any one of claims 20 to 34, wherein the conductive part (22) further comprises an adapting piece (222), the adapting piece (222) is configured to connect the second gathering part (2213) to the post terminal (12), and at least a part of the adapting piece (222) is accommodated in the second accommodating groove (12120).

36. The battery cell (10) according to claim 8, wherein the accommodating part (121) is provided with a fourth accommodating groove (12150), a surface of the post terminal (12) on a side distal to the active substance-coated part (21) is a post terminal outer end surface (123), an opening of the fourth accommodating groove (12150) is formed on the post terminal outer end surface (123), the fourth accommodating groove (12150) is in communication with an interior of the housing (11) through a second perforation (12160), the conductive part (22) is provided in the second perforation (12160) in a penetrating manner, and an electrical connection position of the conductive part (22) and the post terminal (12) is located on a wall of the second perforation (12160) formed on the post terminal (12).

37. The battery cell (10) according to any one of claims 8 to 36, wherein the post terminal (12) comprises a first post terminal part (124) and a second post terminal part (125) made of different materials and electrically connected, the second post terminal part (125) is located on a side of the first post terminal part (124) distal to the active substance-coated part (21), the accommodating part (121) is arranged on the first post terminal part (124) or on the first post terminal part (124) and the second post terminal part (125), and the conductive part (22) is electrically connected to the first post terminal part (124).

38. The battery cell (10) according to any one of claims 1 to 37, further comprising:
a support (3), located in the housing (11) and on a side of the active substance-coated part (21) proximal to the post terminal (12), the support (3) being provided with a clearance hole (31) configured to provide clearance for the conductive part (22), and the conductive part (22) being suitable for extending to a side of the support (3) distal to the active substance-coated part (21) through the clearance hole (31).

39. The battery cell (10) according to any one of claims 8 to 37, further comprising:
a support (3), located in the housing (11) and on a side of the active substance-coated part (21) proximal to the post terminal (12), the support (3) being provided with a clearance hole (31) configured to provide clearance for the conductive part (22), the conductive part (22) being suitable for extending to a side of the support (3) distal to the active substance-coated part (21) through the clearance hole (31), the support (3) being provided with a guiding part (32), the guiding part (32) defining, in an enclosing manner, at least a part of the clearance hole (31), and the guiding part (32) at least partially extending to the accommodating part (121).

40. The battery cell (10) according to claim 38 or 39, wherein the support (3) is provided with a third groove (38), and at least a part of the post terminal (12) located in the housing (11) is accommodated in the third groove (38).

41. The battery cell (10) according to any one of claims 38 to 40, wherein the clearance hole (31) comprises a first hole segment (311) and a second hole segment (312), the second hole segment (312) is located on a side of the first hole segment (311) proximal to the active substance-coated part (21), and a cross-sectional area of the second hole segment (312) gradually increases in a direction away from the first hole segment (311), at least a part of the first gathering part (2212) is accommodated in the second hole segment (312), and the second gathering part (2213) is provided in the first hole segment (311) in a penetrating manner.

42. The battery cell (10) according to any one of claims 38 to 41, wherein the support (3) is of an integrated structure, or the support (3) is of a split-type structure and comprises a first support (33) and a second support (34) that are separable, and the clearance hole (31) is defined between the first support (33) and the second support (34).

43. The battery cell (10) according to any one of claims 38 to 42, further comprising:
an inner insulating member (4), located in the housing (11), wrapped outside the active substance-coated part (21), and connected to the support (3).

44. The battery cell (10) according to any one of claims 1 to 43, wherein the housing (11) is provided with a pressure relief part (16), and the pressure relief part (16) and the post terminal (12) are located on a surface on the same side of the housing (11); or the pressure relief part (16) and the post terminal (12) are separately provided on two surfaces on different sides of the housing (11).

45. The battery cell (10) according to any one of claims 1 to 43, wherein the housing (11) is provided with a pressure relief part (16), the housing (11) comprises a housing body (111) and a housing cover (112), one end of the housing body (111) is open, the housing cover (112) is arranged at the open end of the housing body (111), and the pressure relief part (16) is arranged on the housing cover (112).

46. A battery (100), comprising the battery cell (10) according to any one of claims 1 to 45.

47. An electric device (1000), comprising the battery (100) according to claim 46.
